(19) Europäisches Patentamt
European Patent Office
Office européen des brevets

(11) EP 0 996 651 B2

(12) NEW EUROPEAN PATENT SPECIFICATION
After opposition procedure

(45) Date of publication and mention of the opposition decision:
**23.11.2011 Bulletin 2011/47**

(45) Mention of the grant of the patent:
**04.09.2002 Bulletin 2002/36**

(21) Application number: **98933129.3**

(22) Date of filing: **02.07.1998**

(51) Int Cl.:
***C08F 210/02*** $^{(2006.01)}$ ***C08L 23/04*** $^{(2006.01)}$
***C08J 5/18*** $^{(2006.01)}$ ***B01J 19/24*** $^{(2006.01)}$

(86) International application number:
**PCT/US1998/013854**

(87) International publication number:
**WO 1999/003902 (28.01.1999 Gazette 1999/04)**

# (54) BROAD MWD, COMPOSITIONALLY UNIFORM ETHYLENE INTERPOLYMER COMPOSITIONS, PROCESS FOR MAKING THE SAME AND ARTICLE MADE THEREFROM

ETHYLENINTERPOLYMERZUSAMMENSETZUNGEN MIT BREITER MOLEKULARGEWICHTSVERTEILUNG UND EINHEITLICHER ZUSAMMENSETZUNG, VERFAHREN ZU DESSEN HERSTELLUNG UND DARAUS HERGESTELLTE ARTIKEL

COMPOSITIONS INTERPOLYMERES ETHYLIQUES A LARGE REPARTITION DES POIDS MOLECULAIRES ET A STRUCTURE HOMOGENE, PROCEDE DE PRODUCTION DE CES COMPOSITIONS ET ARTICLE FABRIQUE GRACE A CES COMPOSITIONS

(84) Designated Contracting States:
**AT BE CH DE ES FI FR GB IT LI LU NL SE**

(30) Priority: **21.07.1997 US 53263 P**
**25.10.1997 US 63390 P**

(43) Date of publication of application:
**03.05.2000 Bulletin 2000/18**

(73) Proprietor: **THE DOW CHEMICAL COMPANY**
**Midland, Michigan 48674 (US)**

(72) Inventors:
- **ANDERSON, Kenneth, W.**
  **Lake Jackson, TX 77566 (US)**
- **CHUM, Pak-Wing, Steve**
  **Lake Jackson, TX 77566 (US)**
- **EVERSDYK, David, A.**
  **Angleton, TX 77515 (US)**
- **HAZLITT, Lonnie, G.**
  **Lake Jackson, TX 77566 (US)**
- **JAIN, Pradeep**
  **Lake Jackson, TX 77566 (US)**
- **SEHANOBISH, Kalyan**
  **Friendswood, TX 77546 (US)**
- **TAU, Li-Min**
  **Lake Jackson, TX 77566 (US)**

(74) Representative: **Weiss, Wolfgang et al**
**Weickmann & Weickmann**
**Patentanwälte**
**Postfach 86 08 20**
**81635 München (DE)**

(56) References cited:
**EP-A- 0 570 199**
**EP-A- 0 778 289**
**EP-A2- 0 605 952**
**WO-A-93/07210**
**WO-A-94/17112**
**WO-A-96/18662**
**WO-A-97/43323**
**WO-A1-90/03414**
**WO-A1-95/25758**
**US-A- 4 209 599**

EP 0 996 651 B2

## Description

This invention relates to an ethylene interpolymer composition characterized as having broad molecular weight distribution (MWD) and improved compositional uniformity. The invention also relates to a process for making such a composition and fabricated articles made from the novel composition. The novel composition exhibits good processibility and improved toughness properties, especially excellent film tear and impact resistance, and is particularly well-suited for use in applications such as high performance trash can liners and heavy duty shipping bags.

In the manufacture of ethylene interpolymers such as ethylene interpolymerized with at least one unsaturated comonomer, a number of polymerization methods and procedures are known. For example, single site and constrained geometry catalyst systems have been disclosed for manufacturing olefin polymers with high compositional uniformity and relatively narrow molecular weight distributions.

Variations in the reactor systems used to manufacture ethylene interpolymers are also known.. For example, while single site catalysis systems are disclosed to provide compositionally uniform, narrow MWD products (e.g., EXACT plastomers supplied commercially by Exxon Chemical Corporation) when employed in a high pressure polymerization system and conversely products with decreased homogeneity with respect to the short chain branching distribution and a broader molecular weight distribution (e.g., EXCEED resins supplied commercially by Exxon Chemical Corporation) when employed in a low pressure gas phase polymerization process.

While the art is replete with various products and manufacturing techniques, the known range of manufacturing capabilities still do not permit the manufacturing of ethylene interpolymer compositions characterized as having good processability and excellent toughness properties such as excellent film tear and impact resistance. That is, known ethylene interpolymer compositions (either as single reactor products, multiple reactor products or polymer blends) do not exhibit the desired balance of good processability (i.e., sufficient extrusion processing characteristics to avoid, for example, objectionable melt fracture during blown film fabrication with sufficient melt strength to permit, for example, good bubble stability to maximize output rates) and excellent toughness.

The traditional polyethylene solution for achieving improved toughness properties involves manufacturing products with narrow molecular weight distributions as broad molecular weight distributions are known to yield reduced toughness properties. Beyond providing a narrow molecular weight distribution, linear polyethylenes are known to provide improved toughness properties relative to highly branched LDPE. Beyond a narrow molecular weight distribution and a linear polymer backbone, compositional uniformity has been offered for enhanced toughness properties. However, while the combination of a narrow molecular weight distribution, a linear polymer backbone and compositional uniformity may provide enhanced toughness, this combination of polymer properties invariably provides poor processability (e.g., the occurrence of melt fracture).

In contrast to the combination of a narrow molecular weight distribution, increased compositional uniformity and a linear polymer backbone, to achieve the balance of good processability (i.e., resistance to melt fracture and improved melt strength) and toughness properties, Lai et al. disclose in US Patent Number 5,272,236, substantially linear ethylene polymers characterized as having narrow molecular weight distribution, high compositional uniformity and long chain branching.

Other proposed solutions for achieving the desired. property balance include polymer blends such as those disclosed by Kale et al. in US Patent Number 5,210,142 and Hazlitt et al. in US Patent Number 5,370,940. However, while such polymer blends exhibit good handling properties and processability, known polymer blends inevitably exhibit insufficient compositional uniformity to provide the desired toughness properties.

Because no known ethylene interpolymer composition provides the desired balance of good to excellent processability, melt fracture resistance, melt strength and toughness as demonstrated by high tear and impact resistance, there is a need for an improved ethylene interpolymer composition. There is also a need for a process for making an improved ethylene interpolymer composition with the desired property balance. There is also a need for a process for making an improved ethylene interpolymer composition wherein the process involves polymerization using multiple reactors and the process is characterized by improved flexibility such that a broad range of product molecular weights and/or densities can be economically manufactured. There is also a need for a blown film with good extrusion processability and high tear and impact resistance. These and other objects will become apparent from the detailed description of the present invention provided herein below.

We have discovered an ethylene interpolymer composition which is characterized by a broad molecular weight distribution and yet also possesses a relatively high compositional uniformity respecting its short chain branching distribution or fractional crystallinity. One aspect of the invention is a process being conducted in a ethylene polymerization system for making an ethylene polymer composition,

the system comprising at least two injection points and at least two polymerization reactors, each reactor having a reaction stream or zone wherein at least one catalyst system and make-up feed is injected and wherein the make-up feed comprises ethylene and optionally at least one unsaturated comonomer,

the process comprising continuously operating the at least two polymerization reactors and separately injecting the catalyst system and the make-up feed into the reaction stream or zone of at least one reactor,
the composition comprising ethylene interpolymerized with at least one unsaturated comonomer and characterized as having:

a) a melt flow ratio, $I_{10}/I_2$, from 8 to 10.4,
b) a $M_w/M_n$ of greater than 4 as determined by gel permeation chromatography,
c) a melt index, $I_2$, from 0.1 to 10 gram/10 minutes,
d) a composition density less than 0.945 gram/cubic centimeter, and
e) based on the total weight of crystallizable polymer portions, a weight percent at the dominant peak temperature above 75°C, as determined using crystallization analysis fractionation in the range of 20 to 100°C, equal to or greater than the mathematical product of $1.7946 \times 10^{-28} \times 10^{(31.839 \text{ x composition density})}$ for composition density in grams/cubic centimeter.

A second aspect of the invention is a polymer composition comprising ethylene interpolymerized with at least one unsaturated comonomer, wherein the composition is characterized as having:

a) a melt flow ratio, $I_{10}/I_2$, from 8 to 10.4,
b) a $M_w/M_n$ of greater than 4 as determined by gel permeation chromatography,
c) a melt index, $I_2$, from 0.1 to 10 gram/10 minutes,
d) a composition density less than 0.945 gram/cubic centimeter, and
e) based on the total weight of crystallizable polymer portions, a weight percent at the dominant peak temperature above 75°C, as determined using crystallization analysis fractionation in the range of 20 to 100°C, equal to or greater than the mathematical product of $1.7946 \times 10^{-28} \times 10^{(31.839 \text{ x composition density})}$ for composition density in grams/cubic centimeter.

The third aspect of the invention is a fabricated article comprising an ethylene interpolymer composition, the composition comprising ethylene interpolymerized with at least one unsaturated comonomer and characterized as having:

a) a melt flow ratio, $I_{10}/I_2$, from 8 to 10.4,
b) a $M_w/M_n$ of greater than 4 as determined by gel permeation chromatography,
c) a melt index, $I_2$, greater than 0.1 gram/10 minutes,
d) a composition density less than 0.945 gram/cubic centimeter, and
e) based on the total weight of crystallizable polymer portions, a weight percent at the dominant peak temperature above 75°C, as determined using crystallization analysis fractionation in the range of 20 to 100°C, equal to or greater than the mathematical product of $1.7946 \times 10^{-28} \times 10^{(31.839 \text{ x composition density})}$ for composition density in grams/cubic centimeter.

In general, the invention represents the ability to separate $I_{10}/I_2$, MWD and compositional uniformity into substantially independent properties and achieve a previously unknown combination of these intrinsic properties as well as a previously unknown combination of performance properties.
FIG. 1 is a plot of the weight percent crystallized at the dominant peak temperature above 75°C, determined using a crystallization analysis fractionation technique (i.e., CRYSTAF™ fractionalysis equipment, software and procedures as provided by PolymerChar) in the range of 20 to 100°C and based on the total amount of crystallizable polymer portions, for Inventive Compositions and comparative compositions as a function of composition density.
FIG. 2 is a CRYSTAF curve for Inventive Composition 1 which includes peak temperature assignments and weight fraction integration for the areas corresponding to the respective peak temperatures.
FIG. 3 is a CRYSTAF curve for Inventive Composition 2 which includes peak temperature assignments and weight fraction integration for the areas corresponding to the respective peak temperatures.
FIG. 4 is a CRYSTAF curve for comparative composition 3 which includes peak temperature assignments and weight fraction integration for the areas corresponding to the respective peak temperatures.
FIG. 5 is a CRYSTAF curve for comparative composition 4 which includes peak temperature assignments and weight fraction integration for the areas corresponding to the respective peak temperatures.
FIG. 6 is a CRYSTAF curve for comparative composition 5 which includes peak temperature assignments and weight fraction integration for the areas corresponding to the respective peak temperatures.
FIG. 7 is a CRYSTAF curve for comparative composition 6 which includes peak temperature assignments and weight fraction integration for the areas corresponding to the respective peak temperatures.
FIG. 8 is the CRYSTAF curve for Inventive Composition 7 which includes peak temperature assignments and weight fraction integration for the areas corresponding to the respective peak temperatures.

FIG. 9 is the CRYSTAF curve for Inventive Composition 8 which includes peak temperature assignments and weight fraction integration for the areas corresponding to the respective peak temperatures.

FIG. 10 is a CRYSTAF curve for Inventive Composition 9 which includes peak temperature assignments and weight fraction integration for the areas corresponding to the respective peak temperatures.

FIG. 11 is a CRYSTAF curve for Inventive Composition 10 which includes peak temperature assignments and weight fraction integration for the areas corresponding to the respective peak temperatures.

FIG. 12 is a low shear rheology curve of Inventive Compositions 1 and 2 and comparative compositions 3 and 4.

FIG. 13 is an ATREF-DV curve comparing the short chain branching distribution as related to viscosity-average molecular weight ($M_v$) of Inventive Composition 1 and comparative composition 3.

FIG. 14 is an ATREF-DV curve comparing the short chain branching distribution as related to viscosity-average molecular weight ($M_v$) of Inventive Composition 2 and comparative composition 3.

FIG. 15 is an ATREF-DV curve comparing the short chain branching distribution as related to viscosity-average molecular weight ($M_v$) of Inventive Compositions 1 and 2.

FIG. 16 is an ATREF-DV curve comparing the short chain branching distribution as related to viscosity-average molecular weight ($M_v$) of Inventive Composition 2 and comparative composition 4.

FIG. 17 is a gel permeation chromatography (GPC) curve comparison of Inventive Composition 2 and comparative composition 3.

FIG. 18 is a gel permeation chromatography (GPC) curve comparison of Inventive Composition 1 and comparative composition 3.

FIG. 19 is a gel permeation chromatography (GPC) curve comparison of Inventive Compositions 1 and 2.

FIG. 20 is a gel permeation chromatography (GPC) curve comparison of Inventive Composition 2 and comparative composition 4.

FIG. 21 is a GPC molecular weight versus relative weight fraction comparison of Inventive Composition 1 and comparative composition 3.

FIG. 22 is a GPC high molecular weight (up to 5,500,000 g/moles) weight fraction comparison of Inventive Compositions 1 and 2 and comparative composition 3.

FIG. 23 is a GPC high molecular weight (up to 1,500,000 g/moles) weight fraction comparison of Inventive Compositions 1 and 2 and comparative composition 3.

FIG. 24 is a plot of blown film tear resistance as a function of the weight percent of crystallized polymer portion at the dominant peak temperature above 75°C for Inventive Compositions 1 and 2 and comparative compositions 3 and 4.

FIG. 25 is the CRYSTAF curve for Inventive Composition 11 which includes peak temperature assignments and weight fraction integration for the areas corresponding to the respective peak temperatures.

FIG. 26 is a process flow diagram of one of the two reactors used to manufacture Inventive Composition 9 illustrating the simultaneous injection and mixing of catalyst and make-up feed using a mechanical mixer.

FIG. 27 is a process flow diagram of one of the two reactors used to manufacture Inventive Compositions 1, 2, 7, 8 and 10-15 illustrating the separate injection and mixing of catalyst and make-up feed using static mixers.

FIG. 28 is a CRYSTAF curve for Inventive Composition 12 which includes peak temperature assignments and weight fraction integration for the areas corresponding to the respective peak temperatures.

FIG. 29 is a CRYSTAF curve for Inventive Composition 16 which includes peak temperature assignments and weight fraction integration for the areas corresponding to the respective peak temperatures.

FIG. 30 is a CRYSTAF curve for Inventive Composition 17 which includes peak temperature assignments and weight fraction integration for the areas corresponding to the respective peak temperatures.

FIG. 31 is a CRYSTAF curve for Inventive Composition 18 which includes peak temperature assignments and weight fraction integration for the areas corresponding to the respective peak temperatures.

FIG. 28 is a CRYSTAF curve for Inventive Composition 19 which includes peak temperature assignments and weight fraction integration for the areas corresponding to the respective peak temperatures.

As mentioned above, FIG. 1 is a plot of the weight percent crystallized (based on the total amount of crystallizable polymer portions) at the dominant peak temperature above 75°C as a function of composition density. The weight percent crystallized at the dominant peak temperature was determined by crystallization analysis fractionation in the range of 20 to 100°C. In comparison to comparative compositions, FIG. 1 indicates that a composition of the present invention has a higher amount of higher crystallizing polymer portions at equivalent composition densities. Such increases in higher crystallizing polymer portions yield improved compositional uniformity with regard to the short chain branching distribution or fractional crystallization of the novel composition.

While the CRYSTAF curve of an inventive composition indicates improved compositional uniformity, especially at higher overall composition densities, CRYSTAF curves for known compositions show at least two distinct polymer portions. For example, as illustrated in FIG. 8 for Inventive Composition 7, at a density of about 0.917 g/cc, an inventive composition shows one broad flat polymer portion and one sharp polymer portion. Additionally, FIG. 2 and 3 illustrate, at a density of about 0.927 g/cc (i.e., Inventive Compositions 1 and 2), the CRYSTAF curve of an inventive composition will essentially reflect one sharp polymer portion with a shoulder occurring at a peak temperature less than that corresponding to the sharp polymer portion.

Conversely, CRYSTAF curve of a conventional heterogeneously branched ethylene polymer (FIG. 6), such as DOWLEX™ LLDPE resin 2045, a 1.0 $I_2$ melt index, 0.920 g/cc density ethylene/1-octene copolymer supplied by The Dow Chemical Company, shows two very distinct, sharp polymer portions.

We have discovered the substantial distinctness between the dominant polymer portions of an ethylene interpolymer composition results in reduced tear properties when the composition is converted into film form. In particular, we discovered that surprisingly a composition having a broad molecular weight distribution to accomplish good processability can be manufactured with an optimized compositional uniformity and thereby insure that fabricated articles made therefrom will exhibit improved toughness.

The term "dominant peak temperature" as used herein refers to the peak temperature as determined from crystallization analysis fractionation in the range of 20 to 100°C that represents and corresponds to the highest weight percent of crystallized polymer portion based on the total amount of crystallizable polymer portions for the whole composition. Every composition with crystallizable polymer portions will have only one dominant peak temperature although the composition may be characterized as having measurable crystallized polymer portions at several different peak temperatures. Where a composition has more than one peak temperature that represents and corresponds to the highest weight percent of crystallized polymer portions, the dominant peak temperature will that peak temperature occurring at the lower temperature. For example, for a composition characterized as having a 40 weight percent crystallized polymer portion occurring at two different peak temperatures, 80°C and 99°C, and wherein all other peak temperatures represent and correspond to lower weight percentages of crystallized polymer portions for the composition, the dominate peak temperature will be 80°C (i.e., the lower of 80°C and 99°C) and the weight percent of the crystallized polymer portion at the dominant peak temperature will 40 weight percent..

The term "composition density" as used herein means the density of a single component polymer or a polymer mixture of at least two ethylene polymers measured in accordance with ASTM D-792. The term "composition density" refers to a solid state density measurement of pellets, film or a molding as distinguished from a melt density determination.

The term "polymer", as used herein, refers to a polymeric compound prepared by polymerizing monomers, whether of the same or a different type. The generic term "polymer" thus embraces the terms "homopolymer," "copolymer," "terpolymer" as well as "interpolymer."

The term "interpolymer", as used herein, refers to polymers prepared by the polymerization of at least two different types of monomers. The generic term "interpolymer" thus includes the term "copolymers" (which is usually employed to refer to polymers prepared from two different monomers) as well as the term "terpolymers" (which is usually employed to refer to polymers prepared from three different types of monomers).

The term "heterogeneously branched linear ethylene polymer" is used herein in the conventional sense in reference to a linear ethylene interpolymer having a comparatively low short chain branching distribution index. That is, the interpolymer has a relatively broad short chain branching distribution. Heterogeneously branched linear ethylene polymers have a SCBDI less than 50 percent and more typically less than 30 percent.

The term "homogeneously branched linear ethylene polymer" is used herein in the conventional sense to refer to a linear ethylene interpolymer in which the comonomer is randomly distributed within a given polymer molecule and wherein substantially all of the polymer molecules have the same ethylene to comonomer molar ratio. The term refers to an ethylene interpolymer that is characterized by a relatively high short chain branching distribution index (SCBDI) or composition distribution branching index (CDBI). That is, the interpolymer has a SCBDI greater than or equal to 50 percent, preferably greater than or equal to 70 percent, more preferably greater than or equal to 90 percent. At higher degrees of compositional uniformity, homogeneously branched ethylene polymers can be further characterized as essentially lacking a measurable high density, high crystallinity polymer portion as determined using a temperature rising elution fractionation technique (abbreviated herein as "TREF").

SCBDI is defined as the weight percent of the polymer molecules having a comonomer content within 50 percent of the median total molar comonomer content and represents a comparison of the monomer distribution in the interpolymer to the monomer distribution expected for a Bernoullian distribution. The SCBDI of an interpolymer can be readily calculated from TREF as described, for example, by Wild et al., Journal of Polymer Science, Poly. Phys. Ed., Vol. 20, p. 441 (1982), or in US Patent 4,798,081; 5,008,204; or by L. D. Cady, "The Role of Comonomer Type and Distribution in LLDPE Product Performance," SPE Regional Technical Conference, Quaker Square Hilton, Akron, Ohio, October 1-2, pp. 107-119 (1985), the disclosures of all which are incorporated herein by reference. However, the preferred TREF technique does not include purge quantities in SCBDI calculations. More preferably, the monomer distribution of the interpolymer and SCBDI are determined using $^{13}C$ NMR analysis in accordance with techniques described in US Patent Number 5,292,845; US Patent Number 4,798,081; U.S. Patent Number.5,089,321 and by J. C. Randall in Rev. Macromol. Chem. Phys., C29, pp. 201-317, the disclosures of both of which are incorporated herein by reference.

In analytical temperature rising elution fractionation analysis (as described in US Patent Number 5,008,204 and abbreviated herein as "ATREF"), the film or composition to be analyzed is dissolved in a suitable hot solvent (e.g.,

trichlorobenzene) and allowed to crystallized in a column containing an inert support by slowly reducing the temperature. An ATREF chromatogram curve is then generated by eluting the crystallized polymer sample from the column by slowly increasing the temperature of the eluting solvent (trichlorobenzene). The ATREF curve is also frequently called the short chain branching distribution (SCBD), since it indicates how evenly the comonomer (e.g., octene) is distributed throughout the sample in that as elution temperature decreases, comonomer content increases.

The short chain branching distribution and other compositional information can also be determined using crystallization analysis fractionation such as the CRYSTAF fractionalysis package available commercially from PolymerChar, Valencia, Spain. Practitioners will appreciate that the CRYSTAF fractionalysis technique is more expedient than TREF techniques. The CRYSTAF fractionalysis unit consists of five (5) stainless steel vessels, each with a 60 milliliter volume, installed in oven of a HP5800 II gas chromatograph. An opto-electronic infra detector is used to measure the polymer concentration of the remaining solution at every sampling step during the crystallization process. Reagent grade 1, 2, 4-trichlorobenezene is used as the solvent. A Hamilton dispenser is programmed to fill the vessels with solvent and sample the reactor reactors to determine polymer concentration.

The fractionalysis starts with the addition of 21 milligrams of polymer composition to 30 milliliters of 1, 2, 4-trichlorobenzene (0.07 % w/w). The dissolution step is carried out at 140°C over 45 minutes. After dissolution, the temperature of the solution is decreased to 100°C at a rate of 40°C/minute and permitted to stand at 100°C for 30 minutes to equilibrate. The detector is set to read zero with pure 1, 2, 4-trichlorobenzene and crystallization is initiated by setting a cooling rate of 0.3°C/minute to 30°C. For compositions having densities lower than 0.89 g/cc, cryogenic cooling with $CO_2$ to 20°C is typically required to quantify the full range crystallizable polymer portions.

At regular intervals during the crystallization, 1.3 milliliters of filtered solution is automatically transported by the dispenser to the detector. The detector reading is average for 10 seconds and 0.8 milliliter of solution is returned to the vessel. The transport line between the vessel and detector is purged with 2 milliliters of pure 1, 2, 4-trichlorobenzene which is discarded to waste. The sequence of sampling is repeated until 32 detector data points are obtained for each vessel along the whole crystallization temperature range. At the end of the sampling sequence or program, additional measurements are performed in order to measure the soluble fraction of the polymer composition.

Once the analysis is complete, the temperature of each vessels is increased to 140°C in order to re-dissolve any polymer remaining in the filter. The vessels are emptied and cleaned with 35 milliliters of pure 1, 2, 4-trichlorobenzene at 140°C. The first derivative of the obtained concentration versus temperature curve is taken as the short chain branching distribution of the polymer composition. Specific integration of the areas under the peak temperatures can quantify the amount of crystallizable polymer portions associated with specific peak temperatures. The peak temperature being a temperature where a significant amount of polymer crystallizes to the extent that a "peak" is illustrated by the derivative of the concentration versus temperature curve.

Practitioners will appreciate that the precision level for CRYSTAF fractionalysis is typical very high. That is, the weight percent determination at the dominant peak temperature above 75°C is reproducible within ± 2 percentage points or ± less than 5% under standard methods and procedures recommended by the PolymerChar. Additional details respecting crystallization analysis fractionation are provided by Benjamin Monrabal in "Crystallization Analysis Fraction: A New Technique for the Analysis of Branching Distribution in Polyolefins," Journal of Applied Polymer Science, Vol. 52, pp. 491-499 (1994), the disclosure of which is incorporated herein by reference.

Based on the total weight of crystallizable polymer portions, the novel composition is characterized as having a weight percent at the dominant peak temperature above 75°C, as determined using crystallization analysis fractionation in the range of 20 to 100°C, equal to or greater than the mathematical product of $1.7946 \times 10^{-28} \times 10^{(31.839 \times \text{composition density})}$ for composition density in grams/cubic centimeter, preferably equal to or greater than the mathematical product of $1.7946 \times 10^{-28} \times 10^{(31.839 \times \text{composition density})}$ for composition density in grams/cubic centimeter and less than or equal to 90, and more preferably equal to or greater than the mathematical product of $1.7946 \times 10^{-28} \times 10^{(31.839 \times \text{composition density})}$ for composition density in grams/cubic centimeter and less than or equal to 80.

Also, as indicated by FIG. 1, the inventive composition can be characterized as having a weight percent crystallized polymer portion at the dominant peak temperature above 75°C, as determined using a crystallization analysis fractionation technique in the range of 20 to 100°C, that is at least 10 percent, preferably at least 30 percent and more preferably at least 40 percent higher than the weight percent crystallized polymer portion at the dominant peak temperature above 75°C of a comparison composition having essentially the same $I_2$ and composition density.

By the phrase "essentially the same" it is meant that the measured values for the $I_2$ of the inventive composition and the comparison (non-inventive) composition are within 10 percent of each other and the measured values for the composition density of the inventive composition and the comparison (non-inventive) composition are within 0.3% percent of each other. Since the phrase intends to set forth an important requirement, compositions not within this requirement should not be compared for purposes of determining relative crystallized fractional differences as defined in the present invention.

The term "comparison composition" refers to any composition that does not completely meet the defined requirements of the inventive composition (although it may have essentially the same $I_2$ and composition density of the inventive composition) that is compared with the inventive composition to determine relative crystallized fractional differences. As such, whether a composition is an inventive composition or a comparison composition can be deduced from such comparative determinations.

The composition density of the novel composition is less than 0.945 g/cc, preferably less than 0.935 g/cc and more preferably less than 0.93 g/cc, and is generally in the range of from 0.90 to 0.945 g/cc, especially in the range of from 0.91 to 0.935 g/cc and most especially in the range of from 0.915 to 0.93 g/cc (as measured in accordance with ASTM D-792).

The molecular weight of polyolefin polymers is conveniently indicated using a melt index measurement according to ASTM D-1238, Condition 190°C/2.16 kg (formerly known as "Condition E" and also known as $I_2$). Melt index is inversely proportional to the molecular weight of the polymer. Thus, the higher the molecular weight, the lower the melt index, although the relationship is not linear. The overall $I_2$ melt index of the novel composition is in the range of from 0.1 to 10, more especially from 0.1 to 5 g/10 minutes, and most especially in the range between 0.2 and 1.75 g/10 minutes.

Other measurements useful in characterizing the molecular weight of ethylene interpolymer compositions involve melt index determinations with higher weights, such as, for common example, ASTM D-1238, Condition 190°C/ 10 kg (formerly known as "Condition N" and also known as $I_{10}$). The ratio of a higher weight melt index determination to a lower weight determination is known as a melt flow ratio, and for measured $I_{10}$ and the $I_2$ melt index values the melt flow ratio is conveniently designated as $I_{10}/I_2$. The novel composition has an $I_{10}/I_2$ melt flow ratio of from 8 to 10.4 and especially from 8.2 to 10.3 and more especially from 8.2 to 8.6.

The molecular weight distributions of ethylene polymers are determined by gel permeation chromatography (GPC) on a Waters 150C high temperature chromatographic unit equipped with a differential refractometer and three columns of mixed porosity. The columns are supplied by Polymer Laboratories and are commonly packed with pore sizes of $10^3$, $10^4$, $10^5$ and $10^6$Å. The solvent is 1,2,4-trichlorobenzene, from which 0.3 percent by weight solutions of the samples are prepared for injection. The flow rate is about 1.0 milliliters/minute, unit operating temperature is about 140°C and the injection size is 100 microliters.

The molecular weight determination with respect to the polymer backbone is deduced by using narrow molecular weight distribution polystyrene standards (from Polymer Laboratories) in conjunction with their elution volumes. The equivalent polyethylene molecular weights are determined by using appropriate Mark-Houwink coefficients for polyethylene and polystyrene (as described by Williams and Ward in Journal of Polymer Science, Polymer Letters, Vol. 6, p. 621, 1968) to derive the following equation:

$$M_{polyethylene} = a * (M_{polystyrene})^b.$$

In this equation, a = 0.4316 and b = 1.0. Weight average molecular weight, $M_w$, is calculated in the usual manner according to the following formula: $M_j = (\Sigma w_i(M_i^j))^j$; where $w_i$ is the weight fraction of the molecules with molecular weight $M_i$ eluting from the GPC column in fraction i andj = 1 when calculating $M_w$ andj = -1 when calculating $M_n$. The novel composition has $M_w/M_n$ greater than 4, preferably greater than or equal to 4.5, and more preferably greater than or equal to 4.75, and especially in the range of from 4 to 8 and most especially in the range from 4 to 7. However, where the $I_{10}/I_2$ is optimized, preferably the $M_w/M_n$ is in the range of 4 to 4.5.

Parallel plate rheology can be conveniently used to predict easy of extrusion processability by indicating whether a particular ethylene interpolymer composition shear thins or not. In comparisons with known compositions having similar molecular weights and molecular weight distributions, FIG. 12 indicates that the novel composition has a highly favorable parallel plate rheology. Actual blown film fabrication confirms the favorable rheology of the novel composition and also indicates that the novel composition has a relatively high resistance to the onset of melt fracture and excellent melt strength. The excellent melt strength of the novel composition results in excellent bubble stability during, for example, the blown film fabrication investigations.

Melt strength determinations are made at 190°C using a Goettfert Rheotens and an Instron capillary rheometer. The capillary rheometer is aligned and situated above the Rheotens unit and delivers, at a constant plunger speed of 25.4 mm/min, a filament of molten polymer to the Rheotens unit. The Instron is equipped with a standard capillary die of 2.1 mm diameter and 42 mm length (20:1 L/D) and delivers the filament to the toothed take-up wheels of the Rheotens unit rotating at 10 mm/s. The distance between the exit of the Instron capillary die and the nip point on the Rheotens take-up wheels was 100 mm. The experiment to determine melt strength begins by accelerating the take-up wheels on the Rheotens unit at 2.4 $mm/s^2$, the Rheotens unit is capable of acceleration rates from 0.12 to 120 $mm/s^2$. As the velocity of the Rheotens take-up wheels increase with time, the draw down force is recorded in centiNewtons (cN) using the Linear Variable Displacement Transducer (LVDT) on the Rheotens unit. The computerized data acquisition system of the Rheotens unit records the draw down force as a function of take-up wheel velocity. The actual melt strength value is taken from the plateau of the recorded draw down force.

The novel composition can be formed by the method according to the claims. Any other convenient method, including dry blending selected polymer components together and subsequently melt mixing the component polymers in a mixer or by mixing the polymer components together directly in a mixer (e.g., a Banbury mixer, a Haake mixer, a Brabender internal mixer, or a single or twin screw extruder including a compounding extruder and a side-arm extruder employed directly down stream of a polymerization process) can be considered.

Preferably, the novel composition is manufactured *in-situ* using any polymerization method and procedure known in the art (including solution, slurry or gas phase polymerization processes at high or low pressures) provided the operations, reactor configurations, catalysis systems and the like are selected, employed and carried out to indeed provide the novel composition with its defined combination of characteristics. A preferred method of manufacturing the novel composition involves the utilization of a multiple reactor polymerization system with the various reactors operated in series or in parallel configuration or a combination of both where more than two reactors are employed. More preferably, the novel composition is manufactured using a two reactor system wherein the two reactors are operated in a series configuration. In a multiple reactor polymerization system (and especially in a two reactor system) with reactors configured in series, the polymer split is generally from 5 to 60 weight, preferably from 10 to 40 weight percent and more preferably from 15 to 35 weight percent to the first reactor. In particularly preferred embodiments of the invention, the polymer split to the first reactor will be less than 36 weight percent, especially less than 31 weight percent and most especially less than or equal to 27 weight percent. The first reactor is a multiple reactor configuration (e.g. reactors arranged in series) will typically be that reactor situated furthest away from the product outlet to finishing operations. The series configuration of at least two polymerization reactors is preferred in the present invention.

Also, in a preferred embodiment of the invention, a polymerization system consisting of at least one recirculating flow loop reactor and especially a polymerization system consisting of at least two recirculating loop reactors operated nonadiabatically is employed to manufacture the novel composition. Such preferred polymerization systems are as described by Kao et al. in co-pending application number 08/831172, filed April 1, 1997, the disclosure of which is incorporated herein by reference.

The nonadiabatic polymerization is preferably achieved at a volumetric heat removal rate equal to or greater than 400 Btu/hour•cubic foot•°F (7.4 kW/$m^3$•°K), more preferably, equal to or greater than 600 Btu/hour•cubic foot•°F (11.1 kW/$m^3$•°K), more especially equal to or greater than 1,200 Btu/hour•cubic foot•°F (22.2 kW/$m^3$•°K) and most especially equal to or greater than 2,000 Btu/hour•cubic foot•°F (37 kW/$m^3$•°K).

"Volumetric heat removal rate" as used herein is the process heat transfer coefficient, U, in Btu/hour•square foot•°F, multiplied by the heat exchange area, A, in square feet, of the heat exchange apparatus divided by the total reactor system volume, in cubic feet. One of ordinary skill will recognize that there should be consistency respecting whether process side or outside parameters are used as to U and surface area calculations and determinations. The calculations contained herein are based on the outside surface areas and outside diameters of heat exchange tubes, coils, etc. whether or not the reactor mixture flows through such tubes, coils, etc. or not.

To effectuate nonadiabatic polymerization, any suitable heat exchange apparatus may be used, in any configuration, including, for example, a cooling coil positioned in a polymerization reactor or reactors, a shell-and-tube heat exchanger positioned in a polymerization reactor or reactors wherein the reactor flow stream(s) ( also referred to in the art as "reaction mixture") passes through the tubes, or an entire recirculating flow loop reactor being designed as a heat exchange apparatus by providing cooling via a jacket or double piping. In a suitable design, a form of a shell-and-tube heat exchanger can be used wherein the exchanger housing has an inlet and an outlet for the reactor flow stream and an inlet and outlet for heat transfer media (e.g. water, water/glycol, steam, SYLTHERMO™ material or media supplied by The Dow Chemical Company under the designation DOWTHERM®). In another design, the reactor flow stream flows through a plurality of heat transfer tubes within the heat exchanger housing while the heat transfer media flows over the tubes' exterior surfaces transferring the heat of reaction or polymerization from the reactor flow stream. Alternatively, the reaction stream flows through the housing and the heat transfer media flows through the tubes. Suitable heat exchange apparatuses for use in the manufacturing of the novel composition are commercially available items (such as, for example, a static mixer/heat exchanger supplied by Koch) having a tortuous path therethrough defined by the tubes' tubular walls and/or having solid static interior elements forming an interior web through which the reaction mixture flows.

It is generally contemplated that any known catalyst system useful for polymerizing olefins can be used to manufacture the novel composition including conventional Ziegler-Natta catalyst systems, chromium catalyst systems, so-called single site catalyst systems disclosed, for example, the monocyclo-pentadienyl transition metal olefin polymerization catalysts described by Canich in US Patent 5,026,798 or by Canich in US Patent 5,055,438, the disclosures of which are incorporated herein by reference) and constrained geometry catalyst systems (for example, as described by Stevens et al. in US Patent 5,064,802, the disclosure of which is incorporated herein by reference). However, in preferred embodiments, a conventional Ziegler-Natta catalyst system is used to manufacture the novel composition. For preferred embodiments that utilize a polymerization system consisting of at least two reactors, preferably a conventional Ziegler-Natta catalyst system is employed in each of the at least two reactors.

Preferred Ziegler-Natta catalysts for use in manufacturing the novel composition are those that are useful at relatively high polymerization temperatures. Examples of such compositions are those derived from organomagnesium compounds, alkyl halides or aluminum halides or hydrogen chloride, and a transition metal compound. Examples of such catalysts are described in U.S. Pat Nos. 4,314,912 (Lowery, Jr. et al.), 4,547,475 (Glass et al.), and 4,612,300 (Coleman, III), the disclosures of which are incorporated herein by reference.

Particularly suitable organomagnesium compounds include, for example, hydrocarbon soluble dihydrocarbylmagnesium such as the magnesium dialkyls and the magnesium diaryls. Exemplary suitable magnesium dialkyls include particularly n-butyl-sec-butylmagnesium, diisopropylmagnesium, di-n-hexylmagnesium, isopropyl-n-butyl-magnesium, ethyl-n-hexylmagnesium, ethyl-n-butylmagnesium, di-n-octylmagnesium and others wherein the alkyl has from 1 to 20 carbon atoms. Exemplary suitable magnesium diaryls include diphenylmagnesium, dibenzylmagnesium and ditolylmagnesium. Suitable organomagnesium compounds include alkyl and aryl magnesium alkoxides and aryloxides and aryl and alkyl magnesium halides with the halogen-free organomagnesium compounds being more desirable.

Among the halide sources which can be employed herein are the active non-metallic halides, metallic halides, and hydrogen chloride.

Any convenient method and procedure known in the art can be used to prepare a Ziegler-Natta catalyst suitable for use in the present invention. One suitable method and procedure is described in U.S. Patent Number 4,612,300, the disclosure of which is incorporated herein by reference (Example P). The described method and procedure involves sequentially adding to a volume of Isopar™ E hydrocarbon, a slurry of anhydrous magnesium chloride in Isopar™ E hydrocarbon, a solution of $EtAlCl_2$ in n-hexane, and a solution of $Ti(O\text{-}iPr)_4$ in Isopar™ E hydrocarbon, to yield a slurry containing a magnesium concentration of 0.166 M and a ratio of Mg/Al/Ti of 40.0:12.5:3.0. An aliquot of this slurry and a dilute solution of $Et_3Al$ (TEA) are independently pumped in two separate streams and combined immediately prior to introduction polymerization reactor systemto give an active catalyst with a final TEA:Ti molar ratio of 6.2:1.

Suitable unsaturated comonomers useful for polymerizing with ethylene include, for example, ethylenically unsaturated monomers, conjugated or non-conjugated dienes, polyenes, etc. Examples of such comonomers include $C_3$-$C_{20}$ $\alpha$-olefins such as propylene, isobutylene, 1-butene, 1-hexene, 1-pentene, 4-methyl-1-pentene, 1-heptene, 1-octene, 1-nonene, 1-decene, and the like. Preferred comonomers include propylene, 1-butene, 1-hexene, 4-methyl-1-pentene and 1-octene, and 1-octene is especially preferred. Other suitable monomers include styrene, halo- or alkyl-substituted styrenes, tetrafluoroethylene, vinylbenzocyclobutane, 1,4-hexadiene, 1,7-octadiene, and cycloalkenes, e.g., cyclopentene, cyclohexene and cyclooctene.

Additives, such as antioxidants (e.g., hindered phenolics, such as IRGANOX™ 1010 or IRGANOX™ 1076 supplied by Ciba Geigy), phosphites (e.g., IRGAFOS™ 168 also supplied by Ciba Geigy), cling additives (e.g., PIB), SANDOSTAB PEPQ™ (supplied by Sandoz), pigments, colorants, fillers, antistats, processing aids, and the like may also be included in the novel composition or fabricated article. Although generally not required, films, coatings and moldings formed from the novel composition may also contain additives to enhance antiblocking, mold release and coefficient of friction characteristics including, but not limited to, untreated and treated silicon dioxide, talc, calcium carbonate, and clay, as well as primary, secondary and substituted fatty acid amides, release agents, silicone coatings, etc. Still other additives, such as quaternary ammonium compounds alone or in combination with ethylene-acrylic acid (EAA) copolymers or other functional polymers, may also be added to enhance the antistatic characteristics of films, coatings and moldings formed from the novel composition and permit the use of the composition in, for example, the heavy-duty packaging of electronically sensitive goods.

The fabricated articles of the invention (such as, for example, but not limited to, a film, film layer, fiber, molding and coating) may further include recycled and scrap materials and diluent polymers, to the extent that the balanced processability, impact resistance and tear resistance properties are maintained. Exemplary diluent materials include, for example, elastomers, rubbers and anhydride modified polyethylenes (e.g., polybutylene and maleic anhydride grafted LLDPE and HDPE) as well as with high pressure polyethylenes such as, for example, low density polyethylene (LDPE), ethylene/acrylic acid (EAA) interpolymers, ethylene/vinyl acetate (EVA) interpolymers and ethylene/methacrylate (EMA) interpolymers, and combinations thereof.

The fabricated article of the invention may find utility in a variety of applications. Suitable applications are thought to include, for example, but are not limited to, monolayer packaging films; multilayer packaging structures consisting of other materials such as, for example, biaxially oriented polypropylene or biaxially oriented ethylene polymer for shrink film and barrier shrink applications; packages formed via form/fill/seal machinery; peelable seal packaging structures; cook-in food packages; compression filled packages; heat sealable stretch wrap packaging film such as, for example, fresh produce packaging and fresh red meat retail packaging; liners and bags such as, for example, cereal liners, grocery/shopping bags, and especially heavy-duty shipping sacks and high performance trash can liners (bags) where higher levels of downgauging are now possible due to the improved toughness properties exhibited by the fabricated article of the invention.

The fabricated article of the invention can be prepared by any convenient method known in the art. Suitable methods include, for example, lamination and coextrusion techniques or combinations thereof, blown film, cast film, extrusion coating, injection molding, blow molding, thermoforming, profile extrusion, pultrusion, compression molding, rotomolding, or injection blow molding operations or combinations thereof and the like.

The fabricated article of the invention can be of any thickness required or desired for its end-use application. In particular, the novel film of the invention can be of any suitable film thickness, however, practitioners will appreciate the significant downgauging may be possible due to the improved toughness properties exhibited by the novel film.

## Examples

The following examples are provided for the purpose of explanation, rather than limitation.

In an evaluation to investigate the tear resistance of various ethylene interpolymer compositions, several compositions were obtained. For this investigation, Composition 1 (comparative) and composition 2 were manufactured using a nonadiabatic polymerization system consisting of two recirculating loop reactors configured in series. The process conditions employed in the manufacturing of the two inventive examples are provided in Table 1.

Also for the investigation, comparative composition 3 was manufactured according to methods and procedures described US Patent Number 5,370,940 using an adiabatic polymerization system consisting of two sphere reactors configured in series. The process conditions employed in the manufacturing of comparative composition 3 are provided in Table 2.

Comparative composition 4 was manufactured using the same polymerization system and similar process conditions as employed in the manufacture of Inventive Compositions land 2, except a constrained geometry catalyst system was utilized in flow loop Rx1 instead of a heterogeneous Ziegler-Natta titanium coordination catalyst system.

Table 1

| | **Comp. Ex 1** | | **Inv. Ex 2** | |
|---|---|---|---|---|
| | Flow Loop Rx1 | Flow Loop Rx2 | Flow Loop Rx1 | Flow Loop Rx2 |
| Process Temperature. °C | 161 | 190 | 161 | 190 |
| Process Pressure, psig | 525 | 525 | 525 | 525 |
| Polymer Concentration wt. % | 10.6 | 19.5 | 10.6 | 19.5 |
| $C_2$ Conversation, % (overall) | 73.6 | 89.3 (92.4) | 73.5 | 90 (92.9) |
| Solvent/$C_2$, feed ratio | 6.62 | 2.80 | 6.80 | 2.80 |
| Solvent flow, lbs./hr | 600 | 398 | 598 | 398 |
| $C_2$ flow, lbs./hr (kg/hr) | 88 (40) | 142 (64) | 88 (40) | 142 (64) |
| Make-up $C_8$ flow, lbs./hr (kg/hr) | 0(0) | 19 (8.6) | 172(7.8) | 0 (0) |
| Fresh Hydrogen flow, sccm | 1021 | 3255 | 950 | 2968 |
| Feed Temp., °C | 40 | 15 | 40 | 15 |
| Recycle Ratio | 17.7 | 7.6 | 17.7 | 7.7 |
| Polymer split, weight % | 30.4 | 69.6 | 30.4 | 69.6 |
| Residence time, min. | 20.6 | 9.9 | 20.6 | 10 |
| Catalyst Type | Heterogeneous Ziegler-Natta Titanium coordination catalyst system | Heterogeneous Ziegler-Natta Titanium coordination catalyst system | Heterogeneous Ziegler-Natta Titanium coordination catalyst system | Heterogeneous Ziegler-Natta Titanium coordination catalyst system |

(continued)

| | Comp. Ex 1 | | Inv. Ex 2 | |
|---|---|---|---|---|
| | Flow Loop Rx1 | Flow Loop Rx2 | Flow Loop Rx1 | Flow Loop Rx2 |
| Catalyst efficiency, MM lbs. product/lb. Titanium | 1.3 | 0.49 | 1.4 | 0.56 |
| Volumetric Heat Removal rate, BTU/hr*ft$^3$*°F (kW/m$^3$•°K) | -1100 (~18.5) | 620 (11.5) | ~1400(-26) | 585 (10.8) |
| Production rate, lbs/hr. (kg/hr) ((overall)) | 73(33) | 167 (76) ((240)) | 73 (33) | 166 (75) ((239)) |

Table 2

| | Comp. Ex 3 | |
|---|---|---|
| | Spherical Rx1 | Spherical Rx2 |
| Process Temperature, °C | 159 | 197 |
| Polymer Concentration wt. % | 6.7 | 12.2 |
| $C_2$ Conversion, % (overall) | 80 | 90.5 (92.9) |
| Solvent/$C_2$ feed ratio | 13 | 5.35 |
| Solvent flow, lbs./hr (kg/hr) | 125,788 (57,057) | 116.216 (52,716) |
| $C_2$ flow, lbs./hr | 9676(4389) | 21,723 (9,854) |
| Make-up $C_8$ flow, lbs./hr (overall) ((kg/hr)) | (2425) ((1100)) | |
| Hydrogen flow, sccm | 0 | -700,000 |
| Recycle Ratio | NA | NA |
| Feed Temp., °C | 76 | 22 |
| Polymer split, weight % | 27.4 | 72.6 |
| Residence time, min. | NA | NA |
| Catalyst Type | Heterogeneous Ziegler-Natta Titanium coordination catalyst system | Heterogeneous Ziegler-Natta Titanium coordination catalyst system |
| Catalyst efficiency, MM lbs. product/lb. Ti (overall) | (0.18) | |
| Volumetric Heat Removal rate | NA | NA |
| Production rate, lbs./hr*ft$^3$*°F (overall) | 9119 | 24153 (33272) |

Relative to the polymerization system used to manufacture Compositions 1 (comparison) and 2 (inventive), the two reactor system used to manufacture comparative composition 3 required significantly higher feed temperatures to avoid objectionable levels of gels in the finished product. The independent control of polymer concentration and process temperature that is characteristic of nonadiabatic recirculating flow loop reactors proves to be a tremendous economic benefit in regards to requirements for good gel quality, particularly at lower product melt indexes.

Nominal 0.025 millimeter (mm) blown film was fabricated from Inventive Compositions 1 and 2 and comparative compositions 3 and 4 on an Egan blown film unit equipped with 2 inch (5.1 cm) diameter, 32:1 L/D extruder and a 3 inch (7.6 cm) annular die. The blown film extrusion condition for each film is provided in Table 3.

Table 3

| Example | Comp. Ex 1 | Inv. Ex 2 | Comp. Ex 3 | Comp. Ex 4 |
|---|---|---|---|---|
| Die Gap, mil | 35 | 35 | 35 | 35 |
| Melt Temperature, °F | 450 | 445 | 446 | 442 |
| Die Pressure | 4000 | 4400 | 4200 | 3750 |
| Output, lbs./hr. (kg/hr) | 30.1 (14) | 29 (13) | 30.1 (14) | 18.8 (8.5)* |
| Frostline Height, inches (cm) | 7 (17.8) | 7 (17.8) | 7 (17.8) | 10 (25.4)** |
| Screw rpms | 41 | 41 | 41 | 25 |
| Extruder Amperage | 43 | 44 | 43 | 39 |
| Blow-Up Ratio | 2.7 | 2.7 | 2.7 | 2.7 |

In the actual fabrication of the blown film Compositions 1 (comparative) and 2 (inventive) and comparative composition 3 exhibited good processibility and excellent melt stability as indicated by relatively high output performances and relatively low frostline heights (i.e., good bubble stability), respectively. Conversely, comparative composition 4 exhibited a relatively low output performance and a relatively high frostline height.

Table 4 lists some physical properties and film performance properties for Compositions 1 (comparative) and 2 (inventive) and comparative compositions 3 and 4.

Table 4 indicates the Compositions 1 (comparative) and 2 (inventive) have excellent tear resistance, good handling properties (i.e., low film block) and fairly broad molecular weight distributions. The tear resistance of Composition 1 (comparative) and 2 (inventive) was 33-46 percent and 34-37 percent, respectively, higher than the tear resistance of comparative composition 4.

Table 4

| Example | Comp. Ex 1 | Inv. Ex 2 | Comp. Ex 3 | Comp. Ex 4 |
|---|---|---|---|---|
| Composition Density, g/cc | 0.9271 | 0.9271 | 0.9262 | 0.9263 |
| $I_2$, g/10 minutes | 0.44 | 0.42 | 0.55 | 0.54 |
| $I_{10,}$ g/10 minutes | 4.61 | 3.96 | 5.01 | 3.77 |
| $I_{10}/I_2$ | 10.45 | 9.47 | 9.03 | 6.98 |
| GPC $M_w/M_n$ | 4.74 | 5.37 | 5.53 | 2.72 |
| Weight Avg. MW | 170700 | 173000 | 169300 | 142000 |
| Number Avg. Mw. | 36000 | 32200 | 30600 | 52200 |
| Rheotens Melt Strength, Force in centiNewtons | 8.3 | 9.45 | 7.75 | 7.3 |
| | | | | |
| Film Block, grams | 5.50 | 5.72 | 7.95 | 6.40 |
| | | | | |
| Avg Elmendorf Type B CD | 526 | 486 | 573 | 429 |
| Normalized Elmen. B CD | 591 | 541 | 556 | 405 |
| Std Dev. Elmen. B CD | 34 | 65 | 51 | 47 |
| | | | | |
| Avg Elmendorf Type B MD | 490 | 430 | 477 | 339 |
| Normalized Elmen. B MD | 476 | 494 | 459 | 359 |
| Std Dev. Elmen. B MD | 78 | 55 | 35 | 34 |

(continued)

| Example | Comp. Ex 1 | Inv. Ex 2 | Comp. Ex 3 | Comp. Ex 4 |
|---|---|---|---|---|
| Film block was determined in accordance with ASTM D3354.<br>Elmendorf tear resistance was determined in accordance with ASTM D1922 and normalization was to 1 mil (25 mm) thickness. | | | | |

In an investigation to determine the relative compositional uniformity of various ethylene interpolymers, additional compositions were obtained and analyze using the CRYSTAF fractionalysis technique described above. The additional compositions for this investigation included comparative compositions 5 and 6 and 7-10.

Comparative composition 5 was a linear low density polyethylene (LLDPE) resin supplied by The Dow Chemical Company under the commercial designation DOWLEX LLDPE resin 2045. Comparative composition 6 an experimental linear low density polyethylene (LLDPE) resin supplied by The Dow Chemical Company.

Compositions 7-10 (comparative) were manufactured using the same polymerization system described above as used to manufacture Compositions 1 (comparative) and 2 (inventive). The process conditions used for Compositions 7-10 were essential similar to those employed for Compositions 1 (comparative) and 2 (inventive) except the make-up octene flow as higher for Compositions 7-10 and fresh hydrogen flows to each reactor were adjusted to provide higher $I_{10}/I_2$ ratios for Compositions 7-10. Composition 7 was manufactured using a 30 weight percent polymer split to reactor Rx1 (i.e., the first reactor). Compositions 8-10 were manufactured using a 25 weight percent polymer split to reactor Rx1.

CRYSTAF curves (FIG. 2-11) were generated for the various compositions and their respective weight percentages of crystallized polymer portion at their respective dominant peak temperatures above 75°C were deduced from the CRYSTAF curves. Table 5 summarizes the physical properties and the crystallization data for the various compositions.

Table 5

| **Example** | **Density, g/cc** | **$I_2$, g/10 min.** | **$I_{10}$, g/10 min.** | **$I_{10}/I_2$** | **$M_w/M_n$** | **Wt.% crystallized @ DPT above 75°C** |
|---|---|---|---|---|---|---|
| Inv. Ex. 1 | 0.9271 | 0.44 | 4.61 | 10.45 | 4.74 | 58.7 |
| Inv. Ex 2 | 0.9271 | 0.42 | 4.30 | 10.25 | 5.37 | 95.7 |
| Comp. Ex 3 | 0.9262 | 0.55 | 5.01 | 9.03 | 5.53 | 53.0 |
| Comp. Ex 4 | 0.9263 | 0.54 | 3.77 | 6.98 | 2.72 | 40.8 |
| Comp. Ex 5 | 0.920 | 1.0 | ND | ND | ND | 26.6 |
| Comp. Ex 6 | 0.922 | 0.50 | ND | ND | ND | 29.6 |
| Inv. Ex 7 | 0.917 | 0.58 | 6.84 | 11.9 | 6.42 | 28.2 |
| Inv. Ex 8 | 0.917 | 0.64 | 6.85 | 10.7 | 5.5 | 31.2 |
| Inv. Ex 9 | 0.917 | 0.48 | 5.0 | 10.5 | 5.69 | 31.8 |
| Inv. Ex 10 | 0.917 | ND | ND | NA | 5.44 | 31.8 |
| ND denotes "not determined."<br>NA denotes "not applicable." | | | | | | |

FIG. 1, which is a plot of the weight percent crystallized polymer portion at the dominant peak temperature above 75°C as a function of composition density for Inventive Compositions and comparative compositions, was generated using the data in Table 5. Using the crystallization data for Compositions 1 (comparative) and 2 (inventive) and comparative compositions 3 and 4, FIG. 24 was generated to illustrate the relationship between tear resistance and the weight percent of crystallized polymer portion at the dominant peak temperature above 75°C for the respective compositions. FIG. 24 shows with respect to tear resistance performance that there is an apparent optimum at about 75 weight percent for the crystallized polymer portion at the dominant peak temperature above 75°C.

ATREF was performed for Compositions 1 (comparative) and 2 (inventive) and comparative compositions 3 and 4. FIG. 13-16 provide various comparisons between the four compositions. In general, the various ATREF comparison complement the CRYSTAF data by indicating that at equivalent overall composition densities the Inventive Compositions possess more polymer crystallizing at higher temperatures, and this distinction becomes even more prominent at higher equivalent composition densities. However, although their amount of polymer portions crystallizing at higher temperatures differ substantially, the inventive compositions and the comparative compositions have essentially equivalent molecular weight as indicated by $M_v$ results.

The raw GPC molecular data for Compositions 1 (comparative) and 2 (inventive) and comparative compositions 3 and 4 are provide in Table 6. FIG. 17-23 are GPC comparisons between inventive compositions and comparative compositions.

Table 6

| | Comp. Ex 1 | | | Inv. Ex 2 | | | Comp. Ex 3 | | | Comp. Ex 4 | | |
|---|---|---|---|---|---|---|---|---|---|---|---|---|
| Molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight |
| 6649990 | | | | | | | 0.00E+00 | 0.000% | 100.000% | | | |
| 6218706 | | | | | | | 5.43E-05 | 0.004% | 99.996% | | | |
| 5819638 | | | | | | | 1.29E-04 | 0.015% | 99.985% | | | |
| 5450006 | | | | | | | 1.98E-04 | 0.031% | 99.969% | | | |
| 55107319 | | | | | | | 2.14E-04 | 0.049% | 99.951% | | | |
| 4789289 | | | | | | | 2.10E-04 | 0.066% | 99.934% | | | |
| 4493865 | | | | | | | 2.39E-04 | 0.086% | 99.914% | | | |
| 4219189 | | | | | | | 2.81E-04 | 0.109% | 99.891% | | | |
| 3963593 | | | | | | | 3.57E-04 | 0.139% | 99.861% | | | |
| 3725529 | | | | | | | 4.08E-04 | 0.172% | 99.828% | | | |
| 3503612 | 0.0E+00 | 0.000% | 100.000% | | | | 4.73E-04 | 0.211% | 99.789% | | | |
| 3296583 | 7.14E-05 | 0.006% | 99-994% | 0.00E+00 | 0.000% | 100.000% | 4.78E-04 | 0.251% | 99.749% | | | |
| 3103295 | 1.78E-04 | 0.021% | 99.979% | 6.61E-05 | 0.005% | 99.995% | 4.96E-04 | 0.292% | 99.708% | | | |

(continued)

| | Comp. Ex 1 | | | Inv. Ex 2 | | | Comp. Ex 3 | | | Comp. Ex 4 | | |
|---|---|---|---|---|---|---|---|---|---|---|---|---|
| Molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight |
| 2922685 | 3.15E-04 | 0.047% | 99-953% | 2.03E-04 | 0.022% | 99.978% | 5.00E-04 | 0.333% | 99.667% | | | |
| 2753797 | 4.15E-04 | 0.081% | 99.919% | 4.05E-04 | 0.056% | 99.944% | 5.67E-04 | 0.380% | 99.620% | | | |
| 2595769 | 5.31E-04 | 0.125% | 99.875% | 5.82E-04 | 0.104% | 99.896% | 6.28E-04 | 0.432% | 99.568% | | | |
| 2447789 | 6.63E-04 | 0.179% | 99.821% | 7.06E-04 | 0.162% | 99.838% | 6.97E-04 | 0.489% | 99.511% | | | |
| 2309128 | 8.19E-04 | 0.247% | 99.753% | 8.16E-4 | 0.229% | 99.771% | 7.74E-04 | 0.553% | 99.447% | | | |
| 2179119 | 9.70E-04 | 0.327% | 99.673% | 9.59E-04 | 0.308% | 99.692% | 8.65E-04 | 0.624% | 99.376% | | | |
| 2057136 | 1.09E-03 | 0.417% | 99.583% | 1.16E-03 | 0.404% | 99.596% | 9.43E-04 | 0.702% | 99.298% | 0.0E+00 | 0.000% | 100.000% |
| 1942621 | 1.18E-03 | 0.515% | 99.485% | 1.35E-03 | 0.515% | 99.495% | 9.64E-04 | 0.782% | 99.218% | 4.91E-05 | 0.004% | 99.996% |
| 1835050 | 1.29E-03 | 0.621% | 99.379% | 1.48E-03 | 0.637% | 99.363% | 9.92E-04 | 0.864% | 99.136% | 1.50E-04 | 0.016% | 99.984% |
| 1733948 | 1.436-03 | 0.739% | 99.261% | 1.58E-03 | 0.767% | 99.233% | 1.05E-03 | 0.950% | 99.050% | 2.65E-04 | 0.038% | 99.962% |
| 1638872 | 1.61E-03 | 0.872% | 99.128% | 1.69E-03 | 0.906% | 99.094% | 1.16E-03 | 1.046% | 98.954% | 3.53E-04 | 0.067% | 99.933% |
| 1549416 | 1.78E-03 | 1.019% | 98.981% | 1.82E.03 | 1.056% | 98.944% | 1.25E-03 | 1.149% | 98.851% | 3.87E-04 | 0.099% | 99.901% |
| 1465207 | 1.93E-03 | 1.179% | 98.821% | 1.95E-03 | 1.217% | 98.783% | 1.34E-03 | 1.260% | 98.740% | 4.46E-04 | 0.136% | 99.864% |

(continued)

| | Comp. Ex 1 | | | Inv. Ex 2 | | | Comp. Ex 3 | | | Comp. Ex 4 | | |
|---|---|---|---|---|---|---|---|---|---|---|---|---|
| Molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight |
| 1385900 | 2.07E-03 | 1.350% | 98.650% | 2.12E-03 | 1.393% | 98.607% | 1.44E-03 | 1.378% | 98.622% | 5.35E-04 | 0.180% | 99.820% |
| 1311173 | 2.26E-03 | 1.536% | 98.464% | 2.28E-03 | 1.581% | 98.419% | 1.59E-03 | 1.509% | 98.491% | 6.71E-04 | 0.236% | 99.764% |
| 1240729 | 2.49E-03 | 1.742% | 98-258% | 2.48E-03 | 1.785% | 98.215% | 1.75E-03 | 1.654% | 98.346% | 7.85E-04 | 0.301% | 99.699% |
| 1174297 | 2.70E-03 | 1.965% | 96.035% | 2.64E-03 | 2.003% | 97.997% | 1.94E-03 | 1.814% | 98.186% | 8.69E-04 | 0.372% | 99.628% |
| 1111624 | 2.87E-03 | 2.202% | 97.798% | 2.90E-03 | 2.242% | 97.758% | 2.08E-03 | 1.986% | 98.014% | 9.53E-04 | 0.451% | 99.549% |
| 1052471 | 3.00E-03 | 2.450% | 97.550% | 3.17E-03 | 2.504% | 97.496% | 2.25E-03 | 2.172% | 97.828% | 1.08E-03 | 0.540% | 99.460% |
| 996621 | 3.20E-03 | 2.714% | 97.286% | 3.50E-03 | 2.793% | 97.207% | 2.40E-03 | 2.370% | 97.630% | 1.24E-03 | 0.643% | 99.357% |
| 943874 | 3.45E-07 | 2.999% | 97.001% | 3.77E-03 | 3.103% | 96.897% | 2.62E-03 | 2.586% | 97.414% | 1.40E-03 | 0.758% | 99.242% |
| 894038 | 3.75E-03 | 3.308% | 96.692% | 3.98E-03 | 3.432% | 96.568% | 2.83E-03 | 2.819% | 97.181% | 1.55E-03 | 0.886% | 99.114% |
| 846937 | 4.04E-03 | 3.641% | 96.359% | 4.17E.03 | 3.776% | 96.224% | 3.06E-03 | 3.072% | 98.928% | 1.75E-03 | 1.030% | 98.970% |
| 802411 | 4.29E-03 | 3.995% | 96.005% | 4.37E-03 | 4.136% | 95.864% | 3.28E-03 | 3.342% | 96.658% | 1.98E-03 | 1.194% | 98.806% |
| 760305 | 4.54E-03 | 4.370% | 95.630% | 4.61E-03 | 4.516% | 95.484% | 3.52E-03 | 3.633% | 96.367% | 2.22E-03 | 1.377% | 98.623% |
| 720475 | 4.80E-03 | 4.766% | 95.234% | 4.84E-03 | 4.916% | 95.084% | 3.81E-03 | 3.947% | 96.053% | 2.49E-03 | 1.582% | 98.418% |

(continued)

| | Comp. Ex 1 | | | Inv. Ex 2 | | | Comp. Ex 3 | | | Comp. Ex 4 | | |
|---|---|---|---|---|---|---|---|---|---|---|---|---|
| Molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight |
| 682791 | 5.11E-03 | 5.188% | 94.812% | 5.13E-03 | 5.339% | 94.661% | 4.15E-03 | 4.290% | 95.710% | 2.81E-03 | 1.815% | 98.185% |
| 647131 | 5.40E-03 | 5.634% | 94.366% | 5.44E-03 | 5.788% | 94.212% | 4.48E-03 | 4.660% | 95.340% | 3.28E-03 | 2.081% | 97.919% |
| 613373 | 5.71E-03 | 6.105% | 93.895% | 5.82E-03 | 6.269% | 93.731% | 4.81E-03 | 5.056% | 94.944% | 3.68E-03 | 2.385% | 97.615% |
| 581415 | 5.97E-03 | 6.598% | 93.402% | 6.14E-03 | 6.775% | 93.225% | 5.13E-03 | 5.479% | 94.521% | 4.12E-03 | 2.725% | 97.275% |
| 551152 | 6.24E-03 | 7.113% | 92.887% | 6.42E-03 | 7.305% | 92.695% | 5.42E-03 | 5.927% | 94.073% | 4.55E-03 | 3.101% | 96.699% |
| 522488 | 6.49E-03 | 7.649% | 92.351% | 6.65E-03 | 7.853% | 92.147% | 5.70E-03 | 6.397% | 93.603% | 4.98E-03 | 3.512% | 96.488% |
| 495336 | 6.78E-03 | 8.208% | 91.792% | 6.93E-03 | 8.425% | 91.575% | 5.93E-03 | 6.886% | 93.114% | 5.47E-03 | 3.964% | 96.036% |
| 469612 | 7.06E-03 | 8.791% | 91.209% | 7.19E-03 | 9.018% | 80.982% | 6.24E-03 | 7.401% | 92.599% | 5.99E-03 | 4.459% | 95.541% |
| 445238 | 7.34E-03 | 9.397% | 90.603% | 7.46E-03 | 9.634% | 90.366% | 8.60E-03 | 7.945% | 89.055% | 6.59E-03 | 5.002% | 94.998% |
| 422138 | 7.63E-03 | 10.026% | 89.974% | 7.74E-03 | 10.272% | 89,728% | 7.04E-03 | 8.526% | 91.474% | 7.21E.03 | 5.598% | 94.402% |
| 400243 | 7.94E-03 | 10.682% | 89-318% | 8.03E-03 | 10.935% | 89.065% | 7.44E-03 | 9.140% | 90.860% | 7.86E-03 | 6.247% | 93.753% |
| 379491 | 8.28E-03 | 11.365% | 88.635% | 8.33E-03 | 11.622% | 88.378% | 7.87E-03 | 9.789% | 90.211% | 8.52E-03 | 6.951% | 93.049% |
| 359818 | 8.62E-03 | 12.077% | 87.923% | 8.65E-03 | 12.336% | 87.664% | 8.30E-03 | 10.474% | 89.526% | 9.27E.03 | 7.716% | 92.284% |

(continued)

| | Comp. Ex 1 | | | Inv. Ex 2 | | | Comp. Ex 3 | | | Comp. Ex 4 | | |
|---|---|---|---|---|---|---|---|---|---|---|---|---|
| Molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight |
| 341168 | 8.98E-03 | 12.818% | 87.182% | 8.99E-03 | 13.078% | 86.922% | 8.82E-03 | 11.201% | 88.799% | 1.01E-02 | 8.550% | 91.450% |
| 323483 | 9.35E-03 | 13.590% | 86.410% | 9.38E-03 | 13.852% | 86.148% | 9.326-03 | 11.970% | 88.030% | 1.11E-02 | 9.463% | 90.537% |
| 306715 | 9.71E-03 | 14.391% | 85.609% | 9.78E-03 | 14.659% | 85.341% | 9.89E-03 | 12.781% | 87.219% | 1.20E-02 | 10.452% | 89.548% |
| 290814 | 1.01E-02 | 15.223% | 84.777% | 1.02E-02 | 15.503% | 94.497%, | 1.03E-02 | 13.630% | 86.370% | 1.29E-02 | 11.519% | 88.481% |
| 275736 | 1.05E-02 | 16.086% | 83.914% | 1.07E-02 | 16.386% | 83.614% | 1.08E-02 | 14.520% | 85.480% | 1.39E-02 | 12.664% | 87.336% |
| 261437 | 1.09E-02 | 18.986% | 83.014% | 1.12E-02 | 17.312% | 82.688% | 1.13E-02 | 15.449% | 84.551% | 1.49E-02 | 13.891% | 86.109% |
| 247876 | 1.14E-02 | 17.926% | 82.074% | 1.17E-02 | 18.277% | 81-723% | 1.18E-02 | 16.421% | 83.579% | 1.59E-02 | 15.203% | 84.797% |
| 235014 | 1.19E-02 | 18.908% | 81.092% | 1.21E-02 | 19.278% | 80.722% | 1.23E-02 | 17.437% | 82.563% | 1.70E-02 | 16.604% | 83.396% |
| 222816 | 1.24E-02 | 19.931% | 80.069% | 1.26E-02 | 20.316% | 79.684% | 1.29E-02 | 18.501% | 81.499% | 1.80E-02 | 18.092% | 81.908% |
| 211247 | 1.29E-02 | 20.992% | 79.008% | 1.30E-02. | 21.391% | 78.609% | 1.35E-02 | 19.612% | 80.388% | 1.91E-02 | 19.665% | 80.335% |
| 200274 | 1.33E-02 | 22.091% | 77.909% | 1.35E-02 | 22.504% | 77.496% | 1.40E-02 | 20.765% | 79.235% | 2.00E-02 | 21.315% | 78.685% |
| 189867 | 1.38E-02 | 23.228% | 76.772% | 1.40E-02 | 23.656% | 76.344% | 1.45E-02 | 21.961% | 78.039% | 2.09E-02 | 23.042% | 76.958% |
| 179996 | 1.42E-02 | 24.401% | 75.599% | 1.44E-02 | 24.847% | 75.153% | 1.50E-02 | 23.198% | 76.802% | 2.18E-02 | 24.845% | 75.155% |

(continued)

| | Comp. Ex 1 | | | Inv. Ex 2 | | | Comp. Ex 3 | | | Comp. Ex 4 | | |
|---|---|---|---|---|---|---|---|---|---|---|---|---|
| Molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight |
| 170635 | 1.47E-02 | 25.613% | 74.387% | 1.49E-02 | 26.00% | 73.920% | 1.55E-02 | 24.479% | 75,521% | 2.27E-02 | 26.718% | 73.282% |
| 161757 | 1.52E-02 | 26.864% | 73.136% | 1.54E-02 | 27.350% | 72.650% | 1.60E-02 | 25.799% | 74.201% | 2.35E-02 | 28.656% | 71.344% |
| 153336 | 1.56E-02 | 28.155% | 71.845% | 1.59E-02 | 28.658% | 71.342% | 1.65E-02 | 27.160% | 72.840% | 2.41E-02 | 30.649% | 69.351% |
| 145351 | 1.61E-02 | 29.485% | 70.515% | 1.63E-02 | 30.001% | 69.999% | 1.70E-02 | 28.558% | 71.442% | 2.47E-02 | 32.691% | 67.309% |
| 137777 | 1.66E-02 | 30.854% | 69.146% | 1.67E-02 | 31.382% | 68.618% | 1.74E-02 | 29.995% | 70.005% | 2.52E-02 | 34.773% | 65.227% |
| 130595 | 1.70E-02 | 32.261% | 67.739% | 1.72E-02 | 32.801% | 67.199% | 1.78E-02 | 31.462% | 68.538% | 2.57E-02 | 36.895% | 63.105% |
| 123785 | 1.75E-02 | 33.704% | 66.296% | 1.76E-02 | 34.253% | 65.747% | 1.82E-02 | 32.961% | 67.039% | 2.61E-02 | 39.050% | 60.950% |
| 117326 | 1.79E-02 | 35.180% | 64.820% | 1-80E-02 | 35.742% | 64.258% | 1.85E-02 | 34.489% | 65.511% | 2.64E-02 | 41.232% | 58.768% |
| 111203 | 1,83E-02 | 36.689% | 63.311% | 1.84E-02 | 37.264% | 62.736% | 1.89E-02 | 36.043% | 63.953% | 2.66E-02 | 43.432% | 56.568% |
| 105396 | 1.87E-02 | 38.230% | 61.770% | 1.89E-02 | 38.821% | 61.179% | 1.92E-02 | 37.631% | 62.369% | 2.68E-02 | 45.644% | 54.356% |
| 99890 | 1.91E-02 | 39.804% | 60.196% | 1.92E-02 | 40.407% | 59.593% | 1.96E-02 | 39.244% | 60.756% | 2.69E-02 | 47.862% | 52.138% |
| 94670 | 1.98E-02 | 41.409% | 58.591% | 1.96E-02 | 42.025% | 57.975% | 1.99E-02 | 40.885% | 59.115% | 2.69E-02 | 50.079% | 49.921% |
| 89722 | 1.94E-02 | 43.047% | 56.953% | 2.00E-02 | 43.672% | 56.328% | 2.02E-02 | 42.555% | 57.445% | 2.67E-02 | 52.284% | 47.716% |

(continued)

| | Comp. Ex 1 | | | Inv. Ex 2 | | | Comp. Ex 3 | | | Comp. Ex 4 | | |
|---|---|---|---|---|---|---|---|---|---|---|---|---|
| Molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight |
| 85030 | 2.02E-02 | 44.712% | 55.268% | 2.03E-02 | 45.347% | 54.653% | 2.05E-02 | 44.245% | 55.755% | 2.65E-02 | 54.474% | 45.526% |
| 80582 | 2.05E-02 | 46.402% | 53.598% | 2.05E-02 | 47.042% | 52.958% | 2.07E-02 | 45.953% | 54.047% | 2.63E-02 | 56.641% | 43.359% |
| 76366 | 0.0207 | 48.111% | 51.889% | 2.07E-02 | 48.753% | 51.247% | 2.09E-02 | 47.676% | 52.324% | 2.59E-02 | 58.777% | 41.223% |
| 72370 | 0.020926 | 49.838% | 50.162% | 2.09E-02 | 50.475% | 49.525% | 2.10E-02 | 49.410% | 50.590% | 2.54E-02 | 60.672% | 39.128% |
| 68582 | 2.11E-02 | 51.581% | 48.419% | 2.10E-02 | 52.209% | 47.791% | 2.11E-02 | 51.152% | 48.848% | 2.49E-02 | 62.925% | 37.075% |
| 64992 | 2.13E-02 | 53.336% | 46.664% | 2.11E.02 | 53.949% | 46.051% | 2.12E-02 | 52.897% | 47.103% | 2.43E-02 | 64.931% | 35.069% |
| 61589 | 2.13E-02 | 55.094% | 44.906% | 2.11E-02 | 55.690% | 44.310% | 2.12E-02 | 54.642% | 45.358% | 2.37E-02 | 66.887% | 33.113% |
| 58364 | 0.02129 | 58.851% | 43.149% | 2.10E-02 | 57.422% | 42.578% | 2.11E-02 | 55.383% | 43.617% | 2.30E-02 | 68.787% | 31.213% |
| 55308 | 2.13E-02 | 58.605% | 41.395% | 2.08E-02 | 59.142% | 40.858% | 2.10E-02 | 58.113% | 41.887% | 2.23E-02 | 70.625% | 29.375% |
| 52412 | 2.12E-02 | 60.354% | 39.646% | 2.07E-02 | 60.850% | 39.150% | 2.08E-02 | 59.828% | 40.172% | 2.15E-02 | 72.400% | 27.600% |
| 49668 | 2.11E.02 | 62.094% | 37.906% | 2.05E-02 | 62.545% | 37.455% | 2.06E-02 | 61.527% | 38.473% | 2.07E-02 | 74.107% | 25.693% |
| 47067 | 2.09E-02 | 63.818% | 36.182% | 2.03E-02 | 64.219% | 35.781% | 2.03E-02 | 63.205% | 36.795% | 1.98E-02 | 75.743% | 24.257% |
| 44603 | 2.06E-02 | 65.521% | 34.479% | 2.00E-02 | 65.885% | 34.135% | 2.01E-02 | 64,863% | 35.137% | 1.90E-02 | 77.308% | 22.692% |

(continued)

| | Comp. Ex 1 | | | Inv. Ex 2 | | | Comp. Ex 3 | | | Comp. Ex 4 | | |
|---|---|---|---|---|---|---|---|---|---|---|---|---|
| Molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight |
| 42269 | 2.03E-02 | 67.194% | 32.806% | 1.95E-02 | 67.478% | 32.522% | 1.97E-02 | 66.491% | 33.509% | 1.81E-02 | 78.800% | 21.200% |
| 40057 | 1.98E-02 | 66.831% | 31.169% | 1.91E-02 | 69.056% | 30.944% | 1.93E-02 | 68.086% | 31.914% | 1.72E-02 | 80.222% | 19.778% |
| 37961 | 1.93E-02 | 70.426% | 29.574% | 1.87E-02 | 70.597% | 29.403% | 1.88E-02 | 69.640% | 30.360% | 1.64E-02 | 81.574% | 18.426% |
| 35976 | 1.88E-02 | 71.980% | 28.020% | 1.82E-02 | 72.096% | 27.904% | 1.83E-02 | 71.150% | 28.650% | 1.55E-02 | 82.855% | 17.145% |
| 34095 | 0.01835 | 73.495% | 26.505% | 1.76E-02 | 73.549% | 26.451% | 1.77E-02 | 72.614% | 27.386% | 1.46E-02 | 84.062% | 15.938% |
| 32314 | 1.78E-02 | 74.967% | 25.033% | 1.70E-02 | 74.952% | 25.048% | 1.71E-02 | 74.027% | 25.973% | 1.37E-02 | 85.197% | 14.803% |
| 30626 | 0.01723 | 76.389% | 23.611% | 1.64E-02 | 76.306% | 23.694% | 1.65E-02 | 75.387% | 24.613% | 1.29E-02 | 86.261% | 13.739% |
| 29027 | 1.65E-02 | 77.754% | 22.246% | 1.58E-02 | 77.606% | 22.394% | 1.58E-02 | 76.691% | 23.309% | 1.21E-02 | 87.260% | 12.740% |
| 27513 | 0.01578 | 79.056% | 20.944% | 1.51E-02 | 78.851% | 21.149% | 1.51 E-02 | 77.940% | 22.060% | 1.14E-02 | 88.198% | 11.802% |
| 26078 | 1.51E-02 | 80.300% | 19.700% | 1.44E.02 | 80.041% | 19.959% | 1.45E.02 | 79.137% | 20.853% | 1.06E-02 | 89.076% | 10.924% |
| 24719 | 1.44E-02 | 81.490% | 18.510% | 1.38E-02 | 81.180% | 18.820% | 1.39E-02 | 80.283% | 19.717% | 9.94E-03 | 89.896% | 10.104% |
| 23432 | 1.38E-02 | 82.631% | 17.369% | 1.33E-02 | 82.273% | 17.727% | 1.33E-02 | 81.380% | 18.620% | 9.27E-03 | 90.661% | 9.339% |
| 22213 | 1.33E.02 | 83.727% | 16.273% | 1.27E-02 | 83.322% | 16.678% | 1.28E-02 | 82.435% | 17.565% | 8.69E-03 | 91.378% | 8.622% |

(continued)

| | Comp. Ex 1 | | | Inv. Ex 2 | | | Comp. Ex 3 | | | Comp. Ex 4 | | |
|---|---|---|---|---|---|---|---|---|---|---|---|---|
| Molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight |
| 21058 | 1.26E-02 | 84.782% | 15.218% | 1.22E-02 | 84.328% | 15.672% | 1.23E-02 | 83.451% | 16.549% | 8.16E-03 | 92.051% | 7.949% |
| 19964 | 1.23E-02 | 65.796% | 14.204% | 1.17E-02 | 85.293% | 14.707% | 1.18E-02 | 84.422% | 15.576% | 7.70E-03 | 92.687% | 7.313% |
| 18928 | 1.18E-02 | 66.767% | 13.233% | 1.12E-02 | 86.220% | 13.780% | 1.12E-02 | 85.347% | 14.653% | 7.24E-03 | 93.284% | 6.716% |
| 17946 | 1.12E-02 | 67.694% | 12.306% | 1.07E-02 | 87.106% | 12.894% | 1.06E-02 | 88.224% | 13.776% | 6.77E-03 | 93.843% | 6.157% |
| 17016 | 1.07E-02 | 88.575% | 11.425% | 1.02E-02 | 87.949% | 12.051% | 1.02E-02 | 87.062% | 12.938% | 6.30E-03 | 94.363% | 5.637% |
| 16136 | 1.01E-02 | 59.412% | 10.588% | 9.64E-03 | 88.744% | 11.256% | 9.67E-03 | 87.860% | 12,140% | 5.88E-03 | 94.849% | 5.151% |
| 15301 | 9.59E-03 | 90.203% | 9.797% | 9.09E-03 | 89.494% | 10.506% | 9.21E-03 | 88.619% | 11.381% | 5.50E-03 | 95.303% | 4.697% |
| 14511 | 9.01E-03 | 90.947% | 9.053% | 8.54E-03 | 80.199% | 9.801% | 6.70E-03 | 89.337% | 10.663% | 5.12E-03 | 95.725% | 4.275% |
| 13763 | 8.42E-03 | 91.642% | 8.358% | 8-03E-03 | 90.861% | 9.139% | 8.21E-03 | 90.014% | 9.986% | 4.75E-03 | 96.117% | 3.883% |
| 13053 | 7.85E-03 | 92.290% | 7.710% | 7.49E-03 | 91.479% | 8.521% | 7.77E.03 | 90.655% | 9.345% | 4.36E-03 | 96.477% | 3.523% |
| 12381 | 7.35E-03 | 92.896% | 7.104% | 7.00E-03 | 92.057% | 7.943% | 7.34E-03 | 91.261% | 8.739% | 3.97E-03 | 96.804% | 3.196% |
| 11745 | 6.89E-03 | 93.465% | 6.535% | 6.56E-03 | 92.598% | 7.402% | 6.94E-03 | 91.834% | 8.166% | 3.60E-03 | 97.101% | 2.899% |
| 11142 | 6.45E-03 | 93.998% | 6.002% | 6.21E-03 | 93.110% | 6.890% | 6.54E-03 | 92.373% | 7.627% | 3.33E-03 | 97.378% | 2.624% |

(continued)

| | Comp. Ex 1 | | | Inv. Ex 2 | | | Comp. Ex 3 | | | Comp. Ex 4 | | |
|---|---|---|---|---|---|---|---|---|---|---|---|---|
| Molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight |
| 10571 | 6.04E-03 | 94.497% | 5.503% | 5.85E-03 | 93.593% | 6.407% | 6.19E-03 | 92.884% | 7.116% | 3.12E-03 | 97.633% | 2.367% |
| 10029 | 5.67E-03 | 94.965% | 5.035% | 5.54E-03 | 94.050% | 5.950% | 5.86E-.03 | 93.367% | 6.633% | 2.92E-03 | 97.874% | 2.126% |
| 9516 | 5.34E-03 | 95.406% | 4.594% | 5.19E-03 | 94.478% | 5.522% | 5.60E-03 | 93.829% | 6.171% | 2.71E-03 | 98.098% | 1.902% |
| 9030 | 5.04E-03 | 95.822% | 4.178% | 4.88E-03 | 94.880% | 5.120% | 5.31E-03 | 94.268% | 5.732% | 2.49E-03 | 98.304% | 1.696% |
| 8569 | 4.67E-03 | 96.207% | 3.793% | 4.51E-03 | 95.253% | 4.747% | 5.04E-03 | 94.684% | 5.316% | 2.27E-03 | 98.491% | 1.509% |
| 8133 | 4.28E-03 | 96.561% | 3.439% | 4.16E-03 | 95.596% | 4.404% | 4.73E-03 | 95.074% | 4.926% | 2.03E-03 | 98.658% | 1.342% |
| 7719 | 3.90E-03 | 96.883% | 3.117% | 3.82E-03 | 95.911% | 4.089% | 4.41E-03 | 95.437% | 4.563% | 1.83E-03 | 98.809% | 1.191% |
| 7327 | 3.61E-03 | 97.180% | 2.820% | 3.59E-03 | 96.207% | 3.793% | 4.07E-03 | 95.773% | 4.227% | 1.67E-03 | 98.947% | 1.053% |
| 6955 | 3.35E-03 | 97.456% | 2.544% | 3.42E-03 | 96.489% | 3.511% | 3.77E-03 | 96.084% | 3.916% | 1.59E-03 | 99.078% | 0.922% |
| 6602 | 3.12E-03 | 97.714% | 2.286% | 3.29E-03 | 96.761% | 3.239% | 3.54E-03 | 96.375% | 3.625% | 1.50E-03 | 99.202% | 0.798% |
| 6268 | 2.87E-03 | 97.951% | 2.049% | 3.12E-03 | 97.018% | 2.982% | 3.33E-03 | 96.650% | 3.350% | 1.38E-03 | 99.316% | 0.684% |
| 5951 | 2.65E-03 | 98.169% | 1.631% | 2.91E-03 | 97.258% | 2.742% | 3.13E-03 | 96.909% | 3.091% | 1.20E-03 | 99.415% | 0.585% |
| 5651 | 2.42E-03 | 98.369% | 1.831% | 2.65E-03 | 97.476% | 2.524% | 2-92E-03 | 97.150% | 2.850% | 1.01E-03 | 99.498% | 0.502% |

(continued)

| | Comp. Ex 1 | | | Inv. Ex 2 | | | Comp. Ex 3 | | | Comp. Ex 4 | | |
|---|---|---|---|---|---|---|---|---|---|---|---|---|
| Molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight |
| 5366 | 2.23E-03 | 98.553% | 1.447% | 2.43E-03 | 97.677% | 2.323% | 2.74E-03 | 97.376% | 2.624% | 8.50E-04 | 99.569% | 0.431% |
| 5096 | 2.05E-03 | 98.722% | 1.278% | 2.25E-03 | 97.863% | 2.137% | 2.58E-03 | 97.588% | 2.412% | 7.38E-04 | 99.629% | 0.371% |
| 4839 | 1.90E-03 | 98.878% | 1.122% | 2.10E-03 | 98.036% | 1.964% | 2.44E-03 | 97.789% | 2.211% | 6.92E-04 | 99.687% | 0.313% |
| 4596 | 1.76E-03 | 99.023% | 0.977% | 1.97E-03 | 98.199% | 1.801% | 2.29E-03 | 97.979% | 2.021% | 7.12E-04 | 99.745% | 0.255% |
| 4366 | 1.61E-03 | 99.156% | 0.844% | 1.86E-03 | 98.352% | 1.648% | 2.15E-03 | 98.156% | 1.844% | 7.16E-04 | 99.804% | 0.196% |
| 4147 | 1.48E-03 | 99.278% | 0.722% | 1.77E-03 | 98.498% | 1.502% | 1.98E-03 | 98.319% | 1.681% | 6.53E-04 | 99.858% | 0.142% |
| 3939 | 1.33E-01 | 99.388% | 0.612% | 1.66E-03 | 98.635% | 1.365% | 1.80E-03 | 98.468% | 1.532% | 5.06E-04 | 99.900% | 0.100% |
| 3742 | 1.19E-03 | 99.487% | 0.513% | 1.53E-03 | 98.761% | 1.239% | 1.65E-3 | 98.604% | 1.396% | 3.83E-04 | 99.932% | 0.068% |
| 3555 | 1.04E-03 | 99.573% | 0.427% | 1.38E-03 | 98.875% | 1.125% | 1.53E-03 | 98.730% | 1.270% | 2.94E-04 | 99.956% | 0.044% |
| 3378 | 9.02E-04 | 99.647% | 0.353% | 1.23E.03 | 98.977% | 1.023% | 1.43E-03 | 98.849% | 1.151% | 2.72E-04 | 99.978% | 0.022% |
| 3209 | 7.86E-04 | 99.712% | 0.288% | 1.10E-03 | 99.068% | 0.932% | 1.31E-03 | 98.956% | 1.044% | 1.72E-04 | 99.993% | 0.007% |
| 3049 | 6.96E-04 | 99.770% | 0.230% | 9.81E-04 | 99.149% | 0.851% | 1.20E-03 | 99.055% | 0.945% | 8.91E-05 | 100.000% | 0.000% |
| 2897 | 6.06E-04 | 99.820% | 0.180% | 9.10E-04 | 99.224% | 0.776% | 1.11E-03 | 99.147% | 0.853% | 0.0E+00 | | |

(continued)

| | Comp. Ex 1 | | | Inv. Ex 2 | | | Comp. Ex 3 | | | Comp. Ex 4 | | |
|---|---|---|---|---|---|---|---|---|---|---|---|---|
| Molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight |
| 2753 | 5.24E-04 | 99.863% | 0.137% | 9.03E-04 | 99.298% | 0.702% | 1.07E.03 | 99.236% | 0.764% | | | |
| 2616 | 4.33E-04 | 99.899% | 0.101% | 9.05E-04 | 99.373% | 0.627% | 1.04E-03 | 99.322% | 0.678% | | | |
| 2486 | 3.85E-04 | 99.930% | 0.070% | 8.80E-04 | 99.445% | 0.555% | 1.00E-03 | 99.404% | 0.596% | | | |
| 2362 | 3.20E-04 | 99.957% | 0.043% | 7.90E-04 | 99.511% | 0.489% | 8.96E-04 | 99.478% | 0.522% | | | |
| 2244 | 2.81E-04 | 99.980% | 0.020% | 7.19E-04 | 99.570% | 0.430% | 7.58E-04 | 99.541% | 0.459% | | | |
| 2133 | 1.63E-04 | 99.993% | 0.007% | 6.93E-04 | 99.627% | 0.373% | 6.20E-04 | 99.592% | 0.408% | | | |
| 2027 | 8.04E-05 | 100.000% | 0.000% | 6.67E-04 | 99.682% | 0.318% | 5.96E-04 | 99-641% | 0.359% | | | |
| 1926 | 0.0E+00 | | | 6.13E-04 | 99.733% | 0.267% | 6.05E-04 | 99.691% | 0.309% | | | |
| 1830 | | | | 5.05E-04 | 99.774% | 0.226% | 6.21E-04 | 99.742% | 0.258% | | | |
| 1739 | | | | 4.33E-04 | 99.810% | 0.190% | 5.64E-04 | 99.789% | 0.211% | | | |
| 1652 | | | | 3.79E-04 | 99.841% | 0.159% | 5.07E-04 | 99-831% | 0.169% | | | |
| 1570 | | | | 3.62E-04 | 99.871% | 0.129% | 4.67E-04 | 99.869% | 0.131% | | | |
| 1491 | | | | 3.45E-04 | 99.900% | 0.100% | 4.43E-04 | 99.906% | 0.094% | | | |

(continued)

| | Comp. Ex 1 | | | Inv. Ex 2 | | | Comp. Ex 3 | | | Comp. Ex 4 | | |
|---|---|---|---|---|---|---|---|---|---|---|---|---|
| Molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight | Relative fraction | Percentage above molecular weight | Percentage below molecular weight |
| 1416 | | | | 3.19E-04 | 99.926% | 0.074% | 3.86E-04 | 99.937% | 0.063% | | | |
| 1348 | | | | 2.84E-04 | 99.949% | 0.051% | 3.21E-04 | 99.964% | 0.036% | | | |
| 1278 | | | | 2.21E-04 | 99.968% | 0.032% | 2.40E-04 | 99.984% | 0.016% | | | |
| 1214 | | | | 1.59E-04 | 99.981% | 0.019% | 1.44E-04 | 99.996% | 0.004% | | | |
| 1153 | | | | 7.16E-04 | 99.990% | 0.010% | 5.57E-05 | 100.000% | 0.000% | | | |
| 1094 | | | | 7.16E-05 | 99.996% | 0.004% | 0.00E+00 | | | | | |
| 1039 | | | | 3.91E.05 | 99.999% | 0.001% | | | | | | |
| 986 | | | | 6.32E-06 | 100.000% | 0.000% | | | | | | |
| 936 | | | | 0.00E+00 | | | | | | | | |

From the raw. GPC molecular weight data in Table c, FIG. 21-22 were generated to provide high molecular weight/weight fraction comparisons between the compositions 1 (comparative) and 2 (inventive) and comparative composition 3. These molecular weight comparisons indicate that comparative composition 3 includes a significant amount of ultra high molecular weight material (i.e., about 0.2 weight percent of the composition has a molecular weight greater than or equal to 3.5 Million grams/mole), whereas none of this ultra high molecular weight material is present for the examples 1 and 2. Surprisingly, however, although comparative composition 3 contains a significant amount of ultra high molecular weight material and exhibits good processibility, such does not translate into superior tear resistance. That is, the inventive compositions have equivalent to or superior tear resistance relative to comparative composition 3 although the inventive compositions do not contain such ultra high molecular weight polymer portions. Thus, unexpectedly, the inventive examples represent the ability to use higher compositional uniformity to compensate for lower molecular weight and still achieve excellent film tear resistance and as such ultra high molecular weights are not required for excellent blown film tear resistance.

In another evaluation, the effect of product $I_{10}/I_2$ and specific process variations were investigated at a nominal composition density of 0.918 g/cc. In this evaluation, Composition 9 (comparative) was compared to four other compositions, Compositions 11-14. Compositions 11-14 were manufactured using essentially the same polymerization system as described herein above for Inventive Composition 2. While make-up comonomer (i.e., 1-octene) was only fed to the first reactor for all composition in the evaluation, Table 7 shows the specific variation in polymer production weight percent split between the first and second reactors as well as a variation with regard to injection of the catalyst system and the feed (i.e., make-up ethylene and comonomer). FIG. 26 and 27 further illustrate the injection variation in this evaluation. FIG. 26 shows simultaneous injection of the Ziegler-Natta catalyst system and make-up feed using a mechanical agitator (i.e., a Lightening Mixer) and FIG. 27 shows the separate injection of the Ziegler-Natta catalyst system and make-up feed as well as two make-up feed injection points.

Nominal 0.8 mil (0.02 mm) blown film was fabricated from the inventive compositions using a Sterling blown film unit equipped with 3.5 inch diameter (8.9 cm), 30:1 L/D extruder and an 8 inch (20.3 cm) annular die. The density, $I_2$, $I_{10}/I_2$ as well as tear and impact performance of the composition were measured and are also reported in Table 7.

Table 7 shows that Inventive Compositions 12-14 exhibit a better balance of properties relative to Compositions 9 and 11 (comparative). This product preference is attributed to a combination of product and process or system preferences as Table 7 indicates that Compositions 12-14 are distinguished by (1) having an $I_{10}/I_2$ in the range of 8 to 10.4, (2) a first reactor split of less than 36 percent and (3) separate injection of the catalyst system and the make-up feed as opposed to simultaneous introduction (such as, for example, as in Composition 9 (comparative) wherein the catalyst and make-up feed are injected together and mixed with reaction stream contents in a mechanical mixer) or pre-mixing of the catalyst system and the make-up feed.

Within the purview of the present invention, it appears the most improved property balance is achieved when the first reactor polymer split is less than 36 weight percent, preferably less than 31 weight percent, more preferably less than or equal to 27 percent and when the make-up (fresh) feed is injected into the reaction stream and allowed some time to mix with reaction stream contents before it is contacted with fresh catalyst. In a continuous polymerization process, the delay between the injection of make-up feed and the injection of fresh catalyst is established by injector design, size of the polymerization system (piping and equipment lengths, diameters, etc.) and reaction stream velocity. Most preferably, in the present invention, the delay in injection time or contact time is preferably at least 2 seconds and more preferably at least 5 seconds.

The separate injection or delayed contacting and mixing of fresh catalyst and make-up feed can be achieved with any convenient means known in the art, including using a mechanical mixer for each separate injection point or a combination of a mechanical mixer at one injection point and a static mixer (e.g., a Kenix mixer) at the another injection point. However, preferably, static mixers are employed at the various injection points; that is, injection is accomplished without the use of mechanical mixer or stirrer devices. Also, preferably, the polymerization system is provided with at least two separate make-up feed injection points (multiple injection points) in at least one reactor.

**Table 7**

| Example | Composition Density | $I_2$, g/10 min. | $I_{10}/I_2$ | Polymer Split" | Comonomer Make-up to Reactor# | Injection Point Mixer | Elmendorf MD Tear, g/mil | Dart Impact, grams |
|---|---|---|---|---|---|---|---|---|
| Comp. Ex.9 | 0.9188 | 0.5 | 10.32 | 25.6 | 1 | mechanical | 509 | 250 |
| Comp. Ex.11 | 0.9182 | 0.54 | 10.63 | 37 | 1 | static | 604 | 312 |
| Inv. Ex.12 | 0.918 | 0.48 | 8.38 | 30.5 | 1 | static | 449 | > 850 |
| Inv. Ex.13 | 0.9182 | 0.51 | 10.17 | 30.7 | 1 | static | 489 | 620 |
| Inv. Ex. 14 | 0.9179 | 0.47 | 10.18 | 25.6 | 1 | static | 598 | 722 |

Elmendorf MD Tear was measured as Type B and determined in accordance with ASTM D1922
Dart impact was measured as Method A and determined In accordance with ASTM 01709.
"Polymer split refers to the weight percent of polymer production that occurred in the first reactor of the two reactor polymerization system used to manufacture the . inventive compositions.

In another evaluation, the effect of product $I_{10}/I_2$ and specific process variations were investigated at a nominal composition density of 0.927 g/cc. In this evaluation, Compositions 1 and 2 were compared to Inventive Composition 15. Comparative Composition 15 was manufactured using essentially the same polymerization system as described herein above for Inventive Composition 2. Kenix static mixers were used at the various injection points as shown in FIG. 27 for all three inventive compositions. Table 8 shows the polymer split was essentially the same for all three inventive compositions, however, Composition 1 differed from the other two by having make-up comonomer injected into the second reactor as opposed to the first reactor.

Nominal 3.0 mil (0.08 mm) blown film was fabricated from these inventive compositions using a Macro blown film unit equipped with a 6 inch (15.2 cm) annular die at a 40 mil (1 mm) die gap. The density, $I_2$, $I_{10}/I_2$ as well as tear and impact performance of the various compositions were measured and are also reported in Table 8.

**Table 8**

| Example | Composition Density | $I_2$, g/ 10 min. | $I_{10}/I_2$ | Polymer split* | Comonomer Make-up to Reactor# | Injection, Point Mixer | Elmendorf MD Tear, g/mil | Dart Impact. grams |
|---|---|---|---|---|---|---|---|---|
| Comp. Ex.1 | 0.927 | 0.46 | 10.46 | 30.4. | 2 | static | 241 | 313 |
| Inv. Ex. 2 | 0.9274 | 0.39 | 10.25 | 30.3 | 1 | static | 264 | 457 |
| Comp. Ex. 15 | 0.9275 | 0.5 | 11.67 | 30.3 | 1 | static | 246 | 394 |

Elmendorf MD Tear was measured as Type B and determined in accordance with ASTM D1922.
Dart impact was measured as Method A and determined in accordance with ASTM D1709.
"Polymer split refers to the weight percent of polymer production that occurred in the first reactor of the two reactor polymerization system used to manufacture the inventive compositions.

Relative to Comparative Compositions 1 and 15, Table 8 shows that Inventive Composition 2 exhibits a better balance of properties, and as such Inventive Composition 2 represents an especially preferred embodiment of the present invention. The improved balance of properties embodied by Inventive Composition 2 is also attributed to a combination of product and process or system preferences. That is, Table 8 indicates that Inventive Composition 2 is distinguished by (1) having an $I_{10}/I_2$ in the range of 8 to 10.4, (2) separate injection of the catalyst system and the make-up feed and (3) make-up (fresh) comonomer feed into the first reactor (as opposed to $I_{10}/I_2$ ratios greater than 10.4 for both Comp. Compositions 1 and 15 and make-up comonomer injection into the second reactor as for Composition 1). As such, in especially preferred embodiments, make-up comonomer is separately injected early in the polymerization system, for example, but not limited to, into the first reactor of a multiple reactor system, wherein the first reactor refers to the reactor furthermost from the product outlet.

In another evaluation, the effect of melt index and process percent ethylene conversion were investigated at a nominal composition density of 0.916 g/cc - 0.918 g/cc. In this evaluation, Compositions 16-19 were manufactured using essentially the same polymerization system as described herein above for Composition 12. In particular, static mixers were employed and the comonomer make-up was directed to the first reactor of the two-reactor polymerization system and was injected separate from the catalyst feed, comonomer flow was adjusted to provide the composition density per sample listed in Table 9, hydrogen flow was controlled to each reactor to provide the melt index and $I_{10}/I_2$ values listed per sample in Table 9 and the polymer split to first reactor was as shown per sample in Table 9. Percent ethylene conversion in the first reactor was varied by known techniques (e.g. by controlling the catalyst feed rate to the reaction stream).

Nominal 3.0 mil (0.08 mm) blown film was fabricated from these inventive compositions using a Macro blown film unit equipped with a 6 inch (15.2 cm) annular die at a 40 mil (1 mm) die gap. The density, $I_2$, $I_{10}/I_2$ as well as tear and impact performance of the various compositions were measured. The dart impact was determined using a modification of ASTM D-1709 Method A (i.e. a 3 kg weight was used) since the film samples did not fail under the standard test (i.e. values were all greater than 850 grams). In addition to the process and product details, Table also provide the tear and impact performance properties of Composition 16-19 as compared to Composition 12.

**Table 9**

| Example | Composition Density | $I_2$. g/10 min. | $I_{10}/I_2$ | polymer Split* | Percent $C_8$ Conversion | $M_w/M_n$ | $W_{critical}$[1] | $W_{measured}$[11] | $T_{OPT}$ above 75°C | Elmendorf MD Tear, g/mil | Dart Impact, grams |
|---|---|---|---|---|---|---|---|---|---|---|---|
| Inv. Ex. 12 | 0.9180 | 0.48 | 8.38 | 30.5 | 75 | ≥4 | 30.4 | 36.1 | 81.4 | 449 | 742 |
| Comp. Ex. 16 | 0.9183 | 0.48 | 8.39 | 25.7 | 76 | 4.0 | 31.0 | 32.4 | 80.8 | 364 | 816 |
| Inv. Ex. 17 | 0.9156 | 0.50 | 8.06 | 25.6 | 76 | 4.1 | 25.5 | 28.3 | 80.8 | 475 | 924 |
| Inv. Ex. 18 | 0.9185 | 0.44 | 8.10 | 25.6 | 89 | 4.1 | 31.5 | 35.9 | 80.4 | 457 | 897 |
| Inv. Ex. 19 | 0.9175 | 0.72 | 8.33 | 25.7 | 89 | 4.2 | 29.3 | 30.2 | 80.9 | 485 | 1004 |

Elmendorf MD Tear was measured as Type 8 end determined in accordance with ASTM D1922.

Dart impact was measured using a modification of ASTM D1709 Method A (i.e. the dart travel distance after film rupture was Increased to 2 feet (61 centimeters) and the total weight was increased to 1500 grams).

Polymer split refers to the weight percent of polymer production that occurred in the first reactor of the two reactor polymerization system used to manufacture the inventive compositions.

[1]$W_{critical}$ denotes the weight percent crytallized polymer portions at the dominant peak temperature above 75°C as calculated from the equation $1.7946\times10^{-24} \times 10^{(31.839 \times \text{composition density})}$ wherein composition density is in grams/cubic centimeter and the dominant peak temperature is determined using crystallisation analysis fractionation through the range of 20 to 100°C.

[11]$W_{mesured}$ denotes the weight percent crystallized polymer portions at the dominant peak temperature above 75°C as determined using crystallization analysis fractionation in the range of 20 to 100°C.

The results in Table 9 show that Inventive Composition 19 exhibits outstanding property balance, as it surprisingly had the highest tear resistance and impact resistance of all samples evaluated even though it melt index was relatively high. As such, Inventive Composition 19 represents the most preferred embodiment of the present invention wherein, in addition to being characterized as having an $I_{10}/I_2$ in the range of 8 to 10.4 and being manufactured using separate injection of the catalyst system and the make-up feed and by injecting make-up (fresh) comonomer feed into the first reactor, this most preferred embodiment of the present invention is further characterized as having an $I_{10}/I_2$ in the range of 8 to 8.5, being manufactured using a polymer split for the first reactor which is relatively low (i.e. less than or equal to 27 weight percent) and by controlling the weight percent comonomer conversion for the first reactor at a relatively high level (i.e. at greater than 75 weight percent, more preferably at greater than or equal to 80 weight percent and most preferably at greater than or equal to 87 weight percent).

## Claims

1. A process being conducted in an ethylene polymerization system for making an ethylene polymer composition, the system comprising at least two injection points and at least two polymerization reactors, each reactor having a reaction stream or zone wherein at least one catalyst system and make-up feed is injected and wherein the make-up feed comprises ethylene and optionally at least one unsaturated comonomer,
the process comprising continuously operating the at least two polymerization reactors and separately infecting the catalyst system and the make-up feed into the reaction stream or zone of at least one reactor,
the composition comprising ethylene interpolymerized with at least one unsaturated comonomer and **characterized** as having:

    a) a melt flow, ratio, $I_{10}/I_2$, from 8 to 10.4,
    b) a $M_w/M_n$ of greater than 4 as determined by gel permeation chromatography,
    c) a melt index, $I_2$; from 0.1 to 10 gram/10 minutes,
    d) a composition density less than 0.945 gram/cubic centimeter, and
    e) based on the total weight of crystallizable polymer portions, a weight percent at the dominant peak temperature above 75°C, as determined using crystallization analysis fractionation in the range of 20 to 100°C, equal to or greater than the mathematical product of $1.7946 \times 10^{-28} \times 10^{(31.839 \times \text{composition density})}$ for composition density in grams/cubic centimeter.

2. A polymer composition comprising ethylene interpolymerized with at least one unsaturated comonomer, wherein the composition is characterized as having:

    a) a melt flow ratio, $I_{10}/I_2$, from 8 to 10.4,
    b) a $M_w/M_n$ of greater than 4 as determined by gel permeation chromatography,
    c) a melt index, $I_2$, from 0.1 to 10 gram/10 minutes,
    d) a composition density less than 0.945 gram/cubic centimeter, and
    e) based on the total weight of crystallizable polymer portions, a weight percent at the dominant peak temperature above 75°C, as determined using crystallization analysis fractionation in the range of 20 to 100°C, equal to or greater than the mathematical product of $1.7946 \times 10^{-28} \times 10^{(31.839 \text{ x composition density})}$ for composition density in grams/cubic centimeter.

3. A fabricated article comprising the ethylene interpolymer composition defined in Claim 2.

4. The fabricated article of Claim 3 wherein the article is a film, film layer, coating, molding, pouch, bag, patch or sheet.

5. The fabricated article of Claim 4 wherein the film is monolayer film.

6. The fabricated article of Claim 4 wherein the film is multilayer film.

7. The fabricated article of Claim 4 wherein the film is blown film.

8. The composition of Claim 1 wherein the at least one unsaturated comonomer is $\alpha$-olefin selected from the group consisting of propylene, 1-butene, 1-isobutylene, 1-hexene, 4-methyl-1-pentene, 1-pentene, 1-heptene and 1-octene.

**9.** The composition of Claim 1 wherein the at least one unsaturated comonomer is a $C_3$-$C_{20}$ $\alpha$-olefin.

**10.** The composition of Claim 1 wherein the interpolymer is a copolymer of ethylene and 1-octene.

**11.** The process of Claim 1 wherein one of the at least two reactors is a recirculating loop reactor.

**12.** The process of Claim 1 wherein the at least two reactors are recirculating loop reactors.

**13.** The process of Claim 1 wherein the process is operated non-adiabatically.

**14.** The process of Claim 13 wherein the system further comprises at least one heat exchange apparatus which removes the heat of reaction or polymerization from the reaction stream of the process at a rate of at least 7.4 $kW/m^{3}\cdot°K$.

**15.** The process of Claim 1 wherein the separate injection provides a contacting and mixing delay between injected catalyst and injected make-feed of at least 2 seconds.

**16.** The process of Claim 1 wherein static mixers are employed at make-up feed injection points.

**17.** The process of Claim 1 wherein static mixers are employed at catalyst and make-up feed injection points.

**18.** The process of Claim 1 wherein the system further comprises at least two make-up feed injection points.

**19.** The process of Claim 1 wherein make-up comonomer is injected into the first reactor.

**Patentansprüche**

**1.** Verfahren zur Herstellung einer Ethylen-Polymer-Zusammensetzung, dass in einem Ethylen Polymerisationsystem durchgeführt wird, wobei das System mindestens zwei Einspritz-Stellen und mindestens zwei Polymerisations-Reaktoren umfasst, wobei jeder Reaktor einen Reaktions-Strom oder eine Reaktions-Zone aufweist, worin mindestens ein Katalysator-System und eine Nachspeisung eingespritzt wird, und wobei die Nachspeisung Ethylen und ggf. mindestens ein ungesättigtes Comonomer umfasst,
wobei das Verfahren das kontinuierliche Betreiben der mindestens zwei Polymerisations-Reaktoren und das separate Einspritzen des Katalysator-Systems und der Nachspeisung in den Reaktionsstrom oder in die Reaktions-Zone von mindestens einem Reaktor umfasst,
wobei die Zusammensetzung Ethylen umfasst, das mit mindestens einem ungesättigten Comonomer interpolymerisiert ist, und **dadurch gekennzeichnet ist, dass** sie:

a) ein Schmelzfluss-Verhältnis $I_{10}/I_2$ von 8 bis 10,4,
b) ein $M_w/M_n$ größer als 4, wie durch Gelpermeationschromatographie bestimmt,
c) einen Schmelzindex, $I_2$ von 0,1 bis 10 g/10 min,
d) eine Zusammensetzungsdichte kleiner als 0,945 g/ccm, und
e) basierend auf dem Gesamtgewicht der kristallisierbaren Polymer-Anteile einen Gewichtsprozent-Anteil bei der dominanten Peak-Temperatur oberhalb 75°C, wie unter Verwendung von Kristallisations-Analyse-Fraktionierung im Bereich von 20 bis 100°C bestimmt, gleich oder größer als das mathematische Produkt $1{,}7946\times10^{-28} \times 10^{(31{,}839 \times \text{Zusammensetzungsdichte})}$ für die Zusammensetzungsdichte in g/ccm

aufweist.

**2.** Polymer-Zusammensetzung umfassend Ethylen, das mit mindestens einem ungesättigten Comonomer interpolymerisiert ist, wobei die Zusammensetzung **dadurch gekennzeichnet ist, dass** sie:

a) ein Schmelzfluss-Verhältnis $I_{10}/I_2$ von 8 bis 10,4,
b) ein $M_w/M_n$ größer als 4, wie durch Gelpermeationschromatographie bestimmt,
c) einen Schmelzindex, $I_2$ von 0,1 bis 10 g/10 min,
d) eine Zusammensetzungsdichte kleiner als 0,945 g/ccm, und
e) basierend auf dem Gesamtgewicht der kristallisierbaren Polymer-Anteile einen Gewichtsprozent-Anteil bei der dominanten Peak-Temperatur oberhalb 75°C, wie unter Verwendung von Kristallisations-Analyse-Fraktionierung im Bereich von 20 bis 100°C bestimmt, gleich oder größer als das mathematische Produkt $1{,}7946 \times 10^{-28} \times 10^{(31{,}839 \times \text{Zusammensetzungsdichte})}$ für die Zusammensetzungsdichte in g/ccm

aufweist.

**3.** Hergestellter Gegenstand umfassend die Ethylen-Interpolymer-Zusammensetzung gemäß Anspruch 2.

**4.** Hergestellter Gegenstand nach Anspruch 3, wobei der Gegenstand eine Folie, eine Folienschicht, eine Beschichtung, ein Formteil, ein Beutel, eine Tüte, ein Flicken oder eine dünne Schicht ist.

**5.** Hergestellter Gegenstand nach Anspruch 4, wobei die Folie eine Monoschicht-Folie ist.

**6.** Hergestellter Gegenstand nach Anspruch 4, wobei die Folie eine Mehrschicht-Folie ist.

**7.** Hergestellter Gegenstand nach Anspruch 4, wobei die Folie eine Blasfolie ist.

**8.** Zusammensetzung nach Anspruch 1, wobei mindestens ein ungesättigtes Comonomer ein $\alpha$-Olefin ist ausgewählt aus der Gruppe bestehend aus Propylen, 1-Buten, 1-Isobutylen, 1-Hexen, 4-Methyl-1-penten, 1-Penten, 1-Hepten und 1-Octen.

**9.** Zusammensetzung nach Anspruch 1, wobei das mindestens eine ungesättigte Comonomer ein $C_3$-$C_{20}$ $\alpha$-Olefin ist.

**10.** Zusammensetzung nach Anspruch 1, wobei das Interpolymer ein Copolymer aus Ethylen und 1-Octen ist.

**11.** Das Verfahren nach Anspruch 1, wobei einer der mindestens zwei Reaktoren ein rezirkulierender Schleifenreaktor ist.

**12.** Das Verfahren nach Anspruch 1, wobei die mindestens zwei Reaktoren rezirkulierende Schleifenreaktoren sind.

**13.** Das Verfahren nach Anspruch 1 , wobei das Verfahren nicht-adiabatisch betrieben wird.

**14.** Das Verfahren nach Anspruch 13, wobei das System ferner mindestens eine Wärmeaustausch-Vorrichtung umfasst, die die Reaktions- oder Polymerisations-Wärme von dem Reaktions-Strom des Verfahrens mit einer Rate von mindestens 7,4 $kW/m^3 \cdot °K$ abführt.

**15.** Das Verfahren nach Anspruch 1, wobei das separate Einspritzen eine Kontakt- und Misch-Verzögerung zwischen dem eingespritzten Katalysator und der eingespritzten Nachspeisung von mindestens 2 Sekunden bereitstellt.

**16.** Das Verfahren nach Anspruch 1, wobei an Nachspeisungs-Einsprüz-Stellen statische Mischer verwendet werden.

**17.** Das Verfahren nach Anspruch 1, wobei an Katalysator- und Nachspeisungs-Einspritz-Stellen statische Mischer verwendet werden.

**18.** Das Verfahren nach Anspruch 1, wobei das System ferner mindestens zwei Nachspeisungs-Einspritz-Stellen umfasst.

**19.** Das Verfahren nach Anspruch 1, wobei Zusatz-Comonomer in den ersten Reaktor eingespritzt wird.

## Revendications

**1.** Procédé réalisé dans un système de polymérisation d'éthylène pour préparer une composition de polymère d'éthylène,
le système comprenant au moins deux points d'injection et au moins deux réacteurs de polymérisation, chaque réacteur comportant un courant ou une zone de réaction dans lequel au moins un système catalytique et une charge d'appoint sont injectés et dans lequel la charge d'appoint comprend de l'éthylène et optionnellement au moins un comonomère insaturé,
le procédé comprenant le fonctionnement continu des au moins deux réacteurs de polymérisation et l'injection séparée du système catalytique et de la charge d'appoint dans le courant ou la zone de réaction d'au moins un réacteur,
la composition comprenant de l'éthylène interpolymérisé avec au moins un comonomère insaturé et **caractérisé en ce qu'**il présente :

a) un rapport de fluidité, $I_{10}/I_2$, de 8 à 10,4,
b) un $M_w/M_n$ supérieur à 4 tel que déterminé par chromatographie par perméation de gel,
c) un indice de fluidité, $I_2$, de 0,1 à 10 grammes/10 minutes,
d) une densité de composition inférieure à 0,945 gramme/centimètre cube, et
e) par rapport au poids total des portions de polymère cristallisables, un pourcentage pondéral au niveau du pic de température principal au-dessus de 75 °C, tel que déterminé par fractionnement de l'analyse de cristallisation, dans la plage de 20 à 100 °C, supérieur ou égal au produit mathématique de 1,7946 x $10^{-28}$ x $10^{(31,839 \text{ x densité de composition})}$ pour la densité de composition en grammes/centimètre cube.

**2.** Composition de polymère comprenant de l'éthylène interpolymérisé avec au moins un comonomère insaturé, dans laquelle la composition est **caractérisée en ce qu'**elle présente :

a) un rapport de fluidité, $I_{10}/I_2$, de 8 à 10,4,
b) un $M_w/M_n$ supérieur à 4 tel que déterminé par chromatographie par perméation de gel,
c) un indice de fluidité, $I_2$, de 0,1 à 10 grammes/10 minutes,
d) une densité de composition inférieure à 0,945 gramme/centimètre cube,
et
e) par rapport au poids total des portions de polymère cristallisables, un pourcentage pondéral au niveau du pic de température principal au-dessus de 75 °C, tel que déterminé par fractionnement de l'analyse de cristallisation dans la plage de 20 à 100 °C, supérieur ou égal au produit mathématique de 1,7946 x $10^{-28}$ x $10^{(31,839 \text{ x densité de composition})}$ pour la densité de composition en grammes/centimètre cube.

**3.** Article fabriqué comprenant la composition d'interpolymère d'éthylène selon la revendication 2.

**4.** Article fabriqué selon la revendication 3, dans lequel l'article est un film, une couche de film, un revêtement, un moulage, un sachet, un sac, un timbre ou une feuille.

**5.** Article fabriqué selon la revendication 4, dans lequel le film est un film monocouche.

**6.** Article fabriqué selon la revendication 4, dans lequel le film est un film multicouche.

**7.** Article fabriqué selon la revendication 4, dans lequel le film est un film soufflé.

**8.** Composition selon la revendication 1, dans laquelle le au moins un comonomère insaturé est une $\alpha$-oléfine choisie dans le groupe constitué du propylène, du 1-butène, du 1-isobutylène, du 1-hexène, du 4-méthyl-1-pentène, du 1-pentène, du 1-heptène et du 1-octène.

**9.** Composition selon la revendication 1, dans laquelle le au moins un comonomère insaturé est une $\alpha$-oléfine en $C_3$ à $C_{20}$.

**10.** Composition selon la revendication 1, dans laquelle l'interpolymère est un copolymère d'éthylène et de 1-octène.

**11.** Procédé selon la revendication 1, dans lequel l'un des au moins deux réacteurs est un réacteur à boucle de recirculation.

**12.** Procédé selon la revendication 1, dans lequel les au moins deux réacteurs sont des réacteurs à boucle de recirculation.

**13.** Procédé selon la revendication 1, dans lequel le procédé fonctionne de manière non adiabatique.

**14.** Procédé selon la revendication 13, dans lequel le système comprend en outre au moins un échangeur de chaleur qui extrait la chaleur produite par la réaction ou la polymérisation du courant de réaction du procédé à une vitesse d'au moins 7,4 $kW/m^3.^oK$.

**15.** Procédé selon la revendication 1, dans lequel l'injection séparée présente un délai de mise en contact et de mélange entre le catalyseur injecté et la charge d'appoint injectée d'au moins 2 secondes.

**16.** Procédé selon la revendication 1, dans lequel des mélangeurs statiques sont employés au niveau des points d'injection de la charge d'appoint.

**17.** Procédé selon la revendication 1, dans lequel des mélangeurs statiques sont employés au niveau des points d'injection du catalyseur et de la charge d'appoint.

**18.** Procédé selon la revendication 1, dans lequel le système comprend en outre au moins deux points d'injection de la charge d'appoint.

**19.** Procédé selon la revendication 1, dans lequel le comonomère ,d'appoint est injecté dans le premier réacteur.

FIG.1

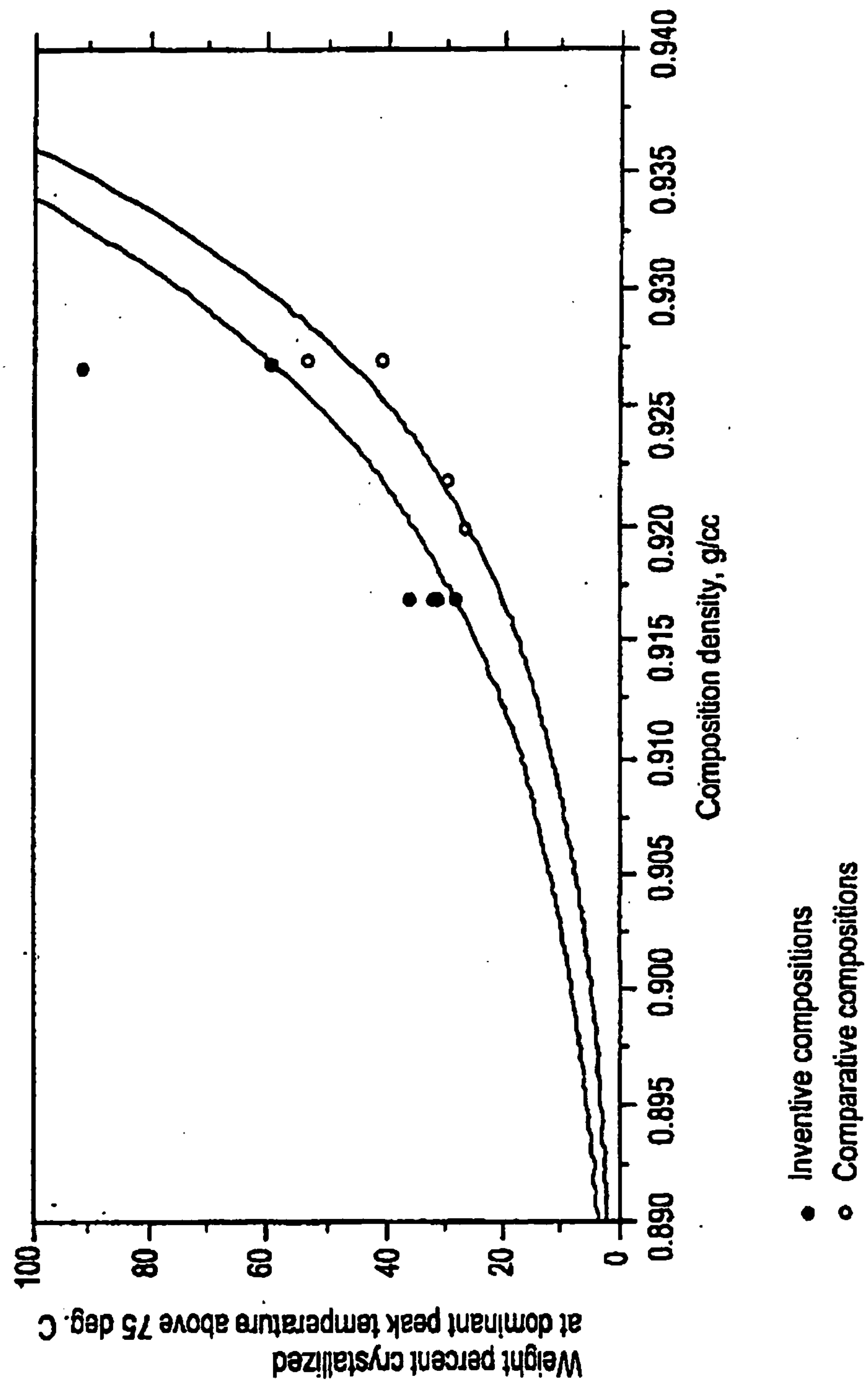
Weight percent crystallized
at dominant peak temperature above 75 deg. C
100
80
60
40
20
0
0.890
0.895
0.900
0.905
0.910
0.915
0.920
0.925
0.930
0.935
0.940
Composition density, g/cc
Inventive compositions
Comparative compositions

FIG.2

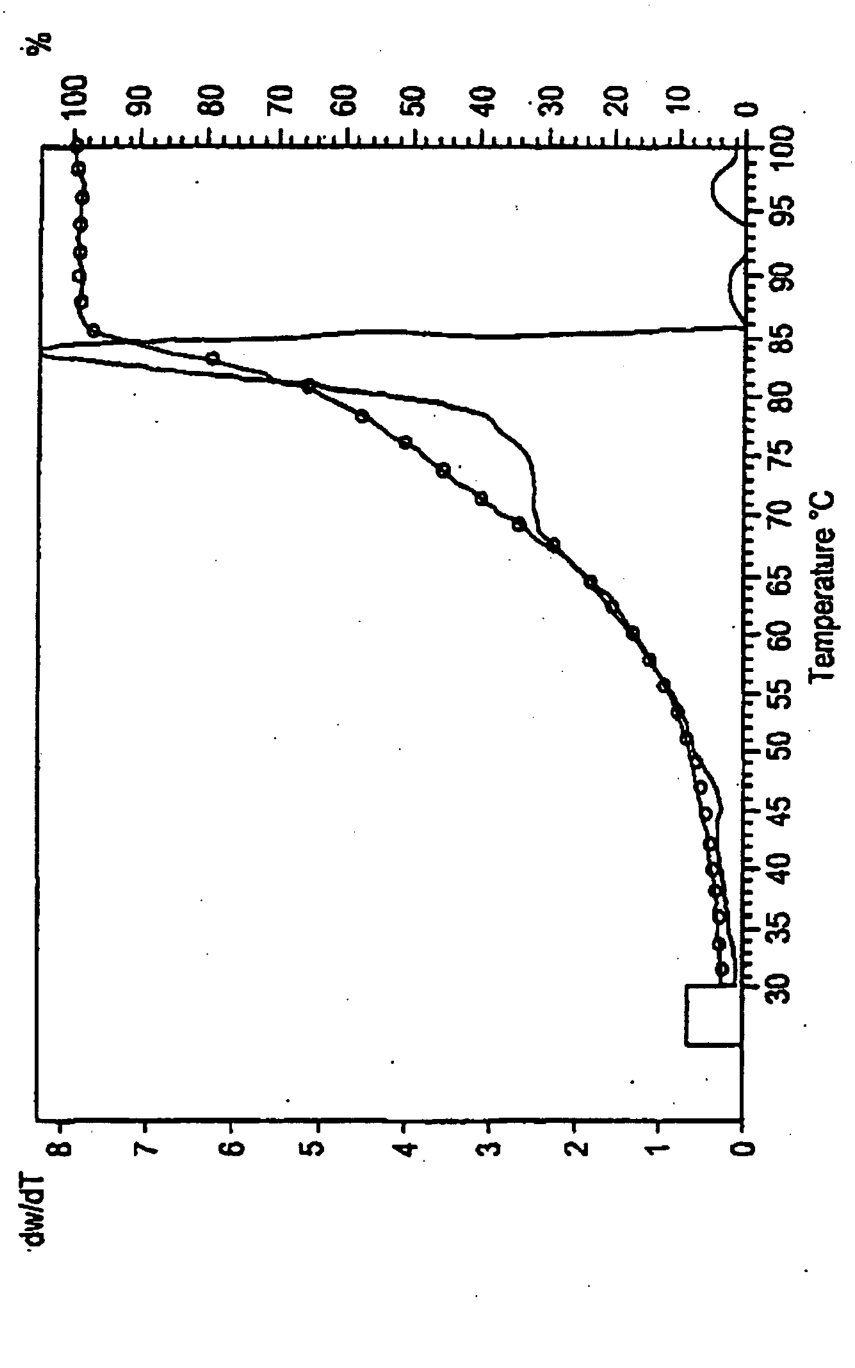
dw/dT
%
Temperature °C
0 1 2 3 4 5 6 7 8
0 10 20 30 40 50 60 70 80 90 100
30 35 40 45 50 55 60 65 70 75 80 85 90 95 100

FIG.3

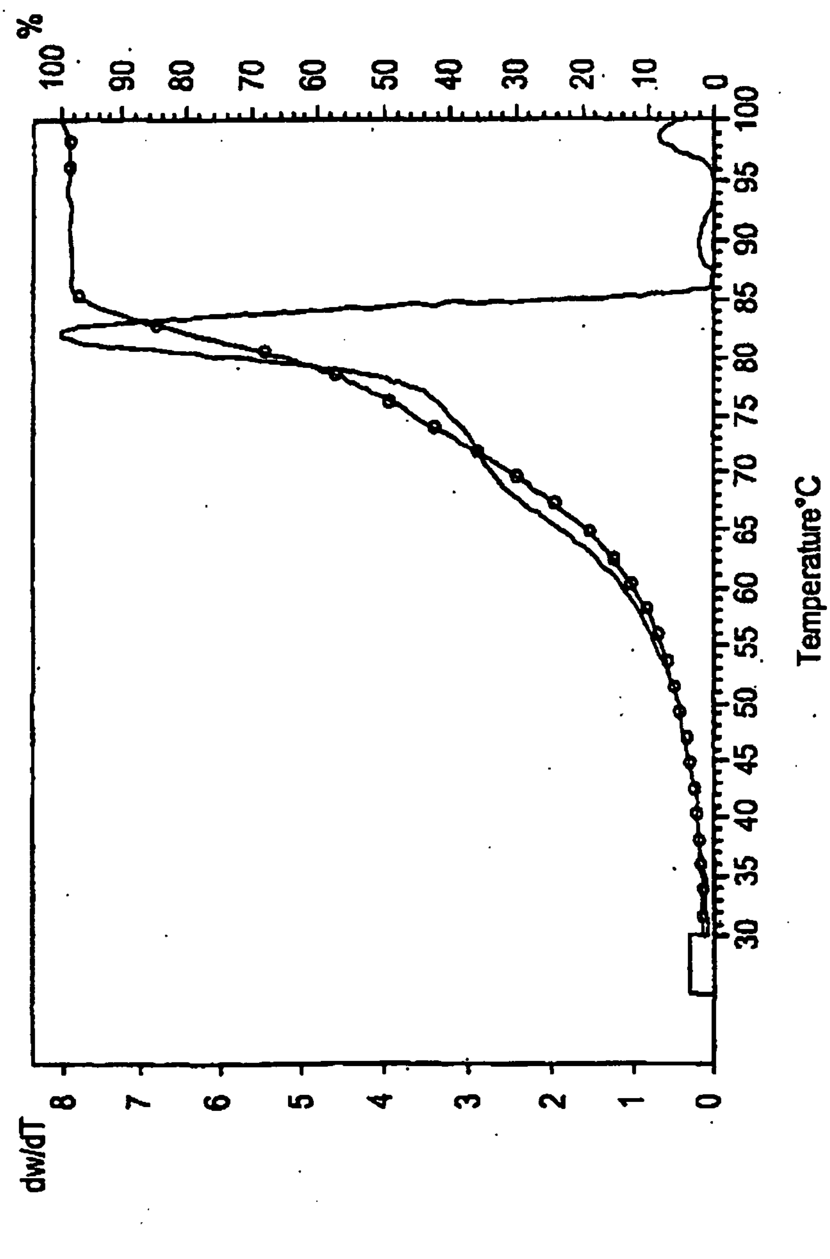
dw/dT
8
7
6
5
4
3
2
1
0
%
100
90
80
70
60
50
40
30
20
10
0
30
35
40
45
50
55
60
65
70
75
80
85
90
95
100
Temperature°C

FIG.4

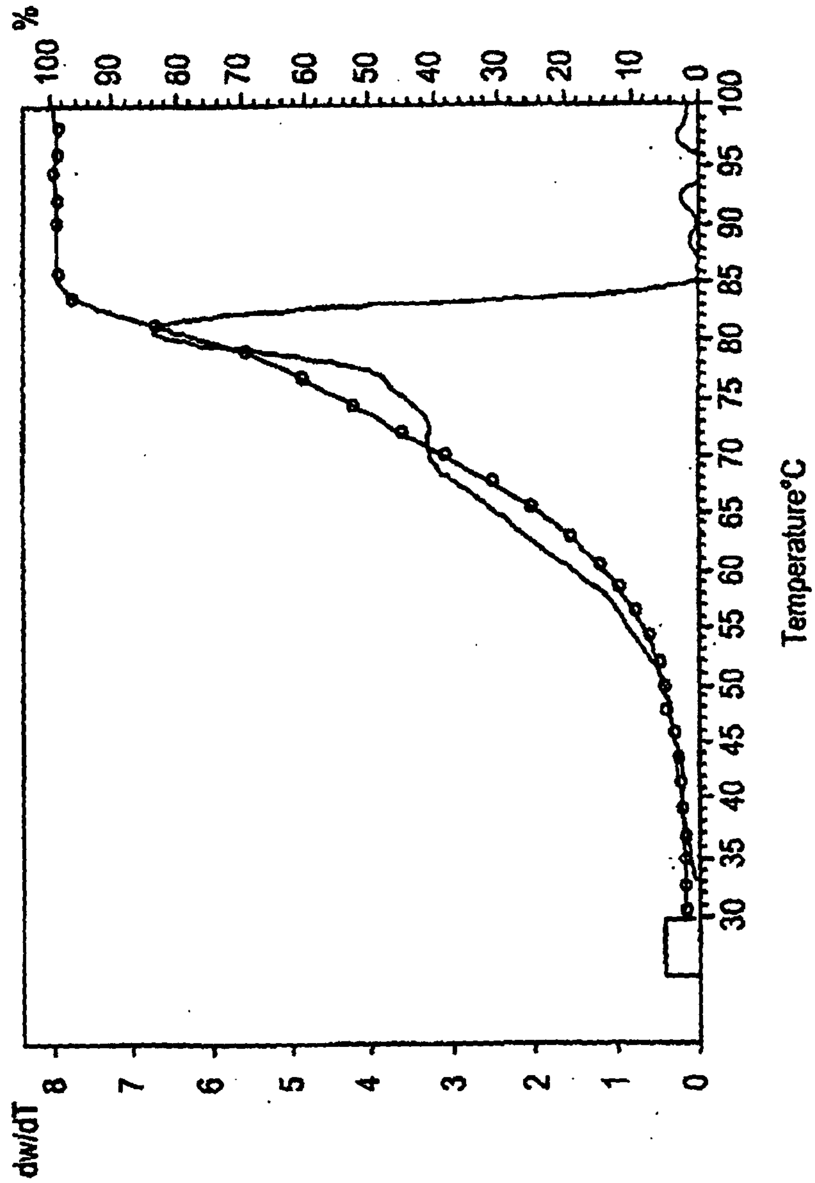
dw/dT
%
Temperature°C
0 1 2 3 4 5 6 7 8
0 10 20 30 40 50 60 70 80 90 100
30 35 40 45 50 55 60 65 70 75 80 85 90 95 100

FIG.5

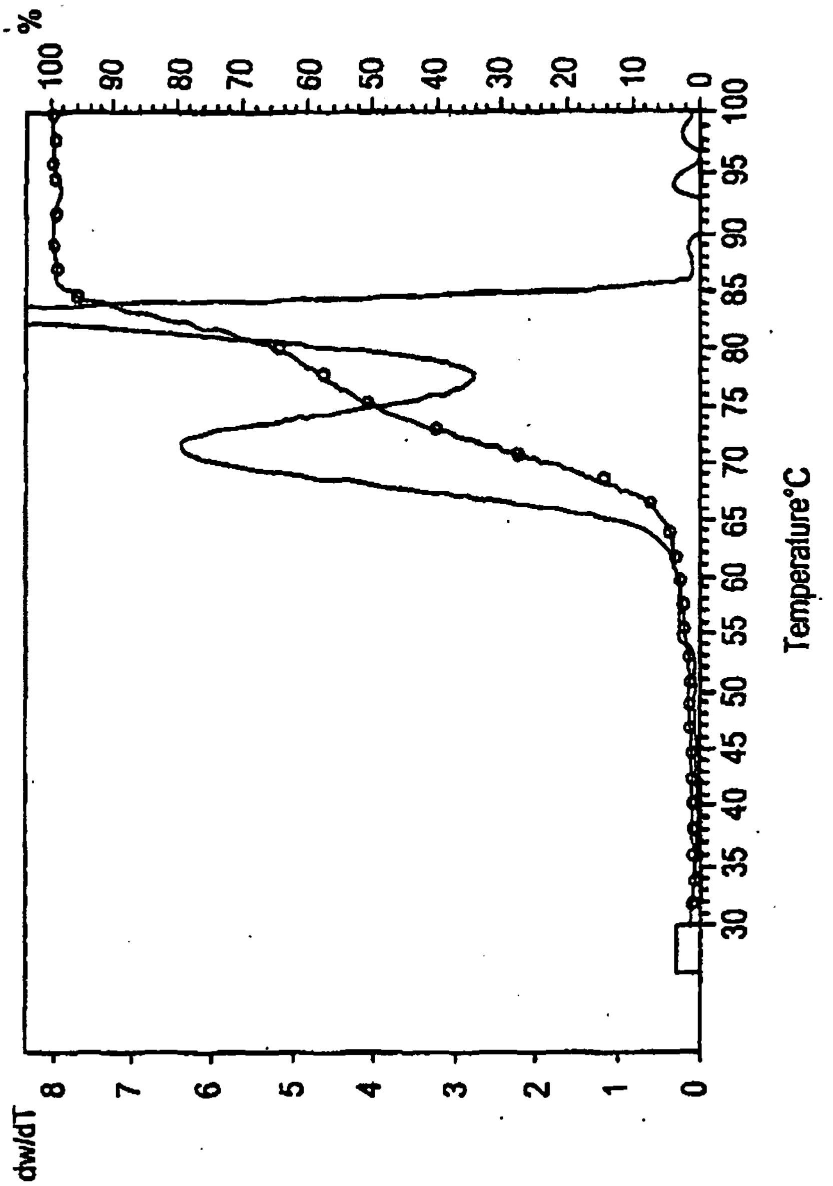
dw/dT
%
Temperature°C
0
1
2
3
4
5
6
7
8
0
10
20
30
40
50
60
70
80
90
100
30
35
40
45
50
55
60
65
70
75
80
85
90
95
100

FIG.6

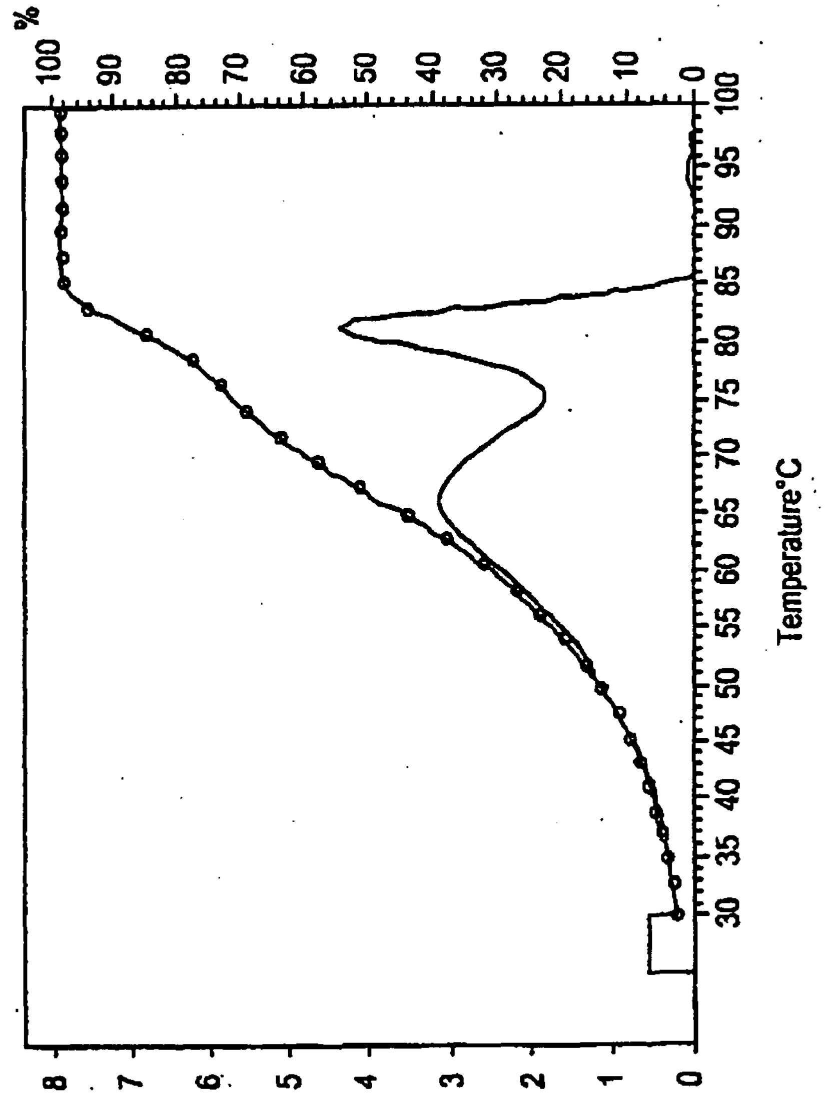
dw/dT
%
Temperature°C
0
1
2
3
4
5
6
7
8
10
20
30
40
50
60
70
80
90
100
30
35
40
45
50
55
60
65
70
75
80
85
90
95
100

FIG.7

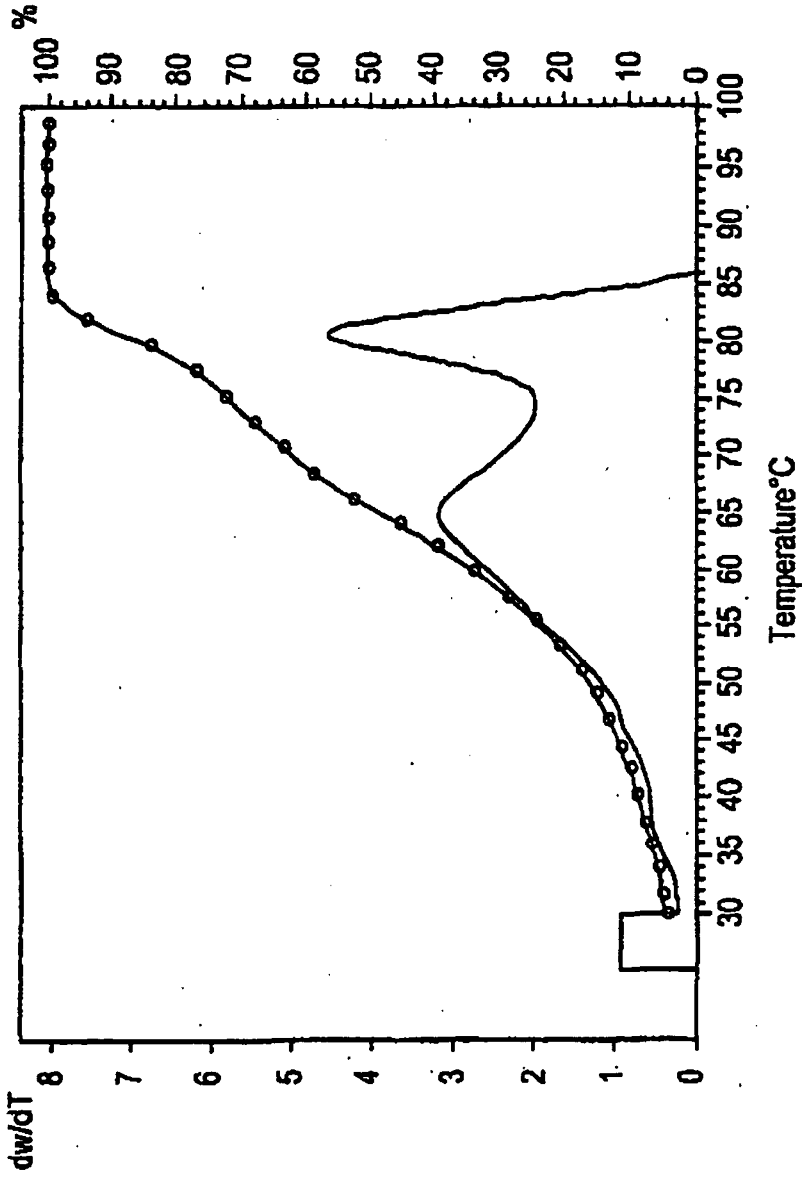
dw/dT
%
Temperature°C
0
1
2
3
4
5
6
7
8
0
10
20
30
40
50
60
70
80
90
100
30
35
40
45
50
55
60
65
70
75
80
85
90
95
100

FIG.8

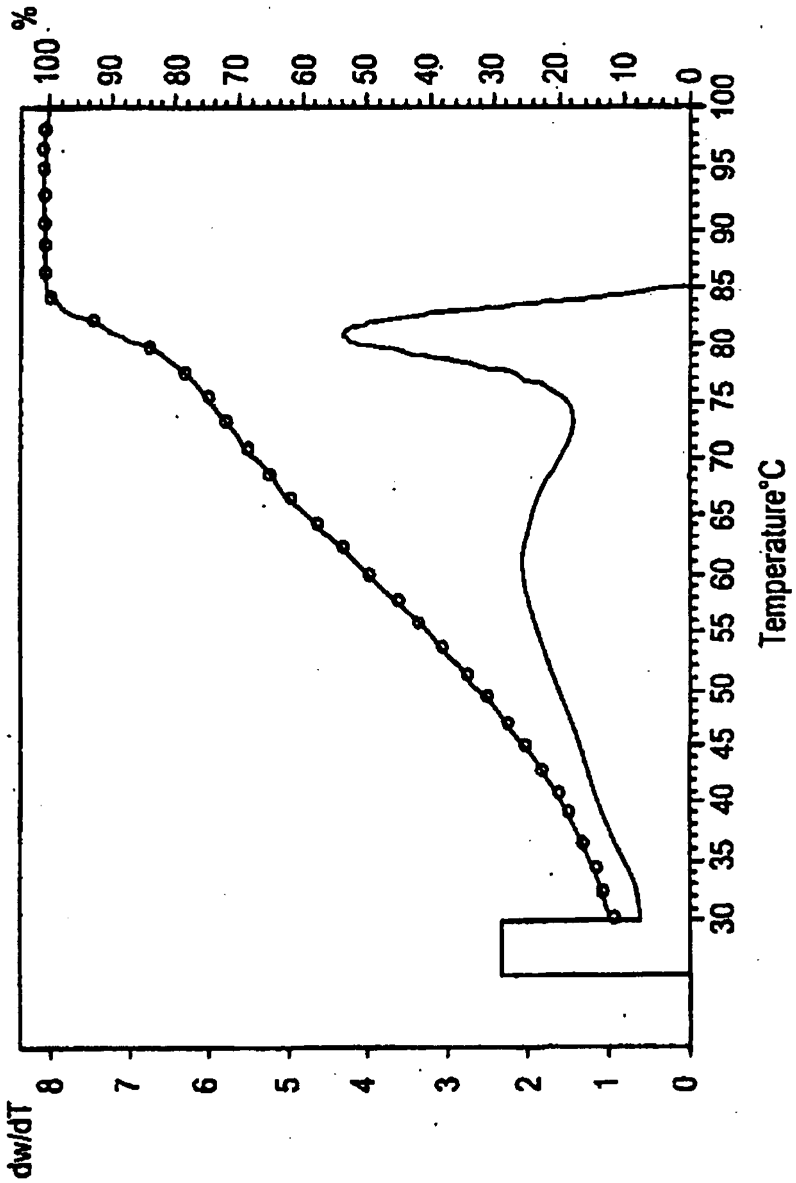
dw/dT
8
7
6
5
4
3
2
1
0
%
100
90
80
70
60
50
40
30
20
10
0
30
35
40
45
50
55
60
65
70
75
80
85
90
95
100
Temperature°C

FIG.9

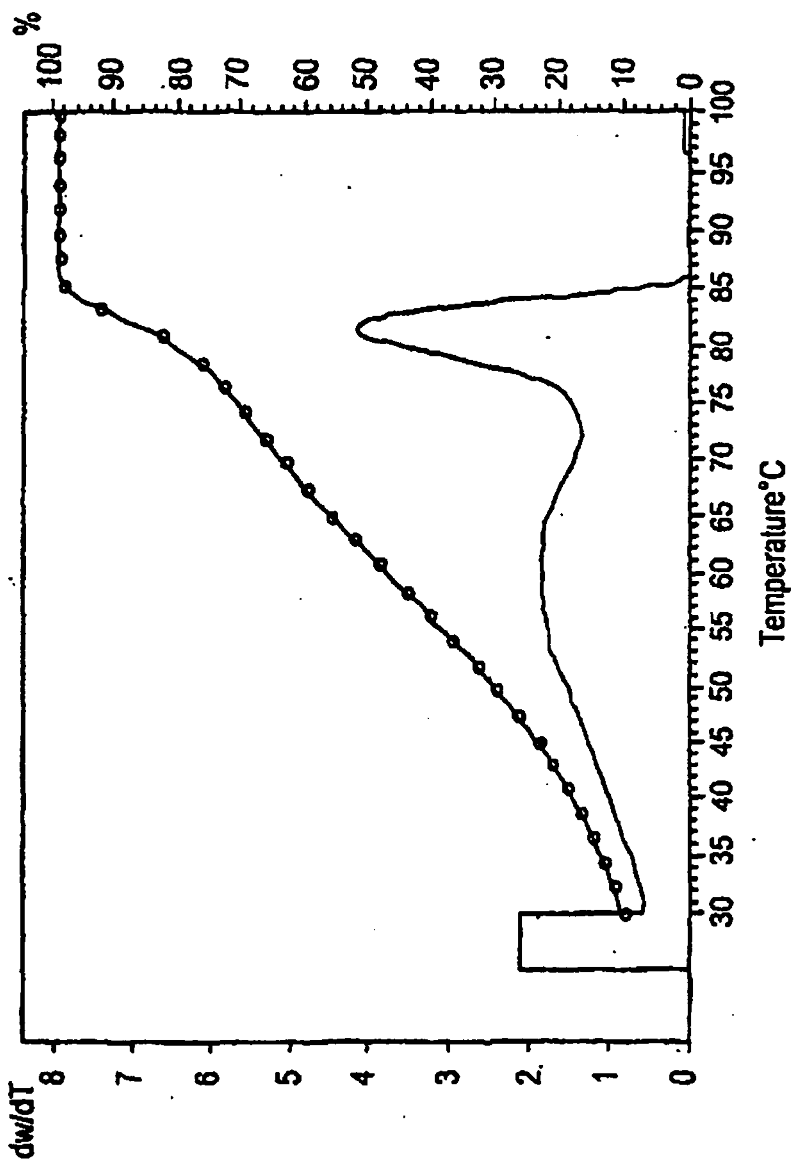
dw/dT
8
7
6
5
4
3
2
1
0
%
100
90
80
70
60
50
40
30
20
10
0
30
35
40
45
50
55
60
65
70
75
80
85
90
95
100
Temperature°C

FIG.10

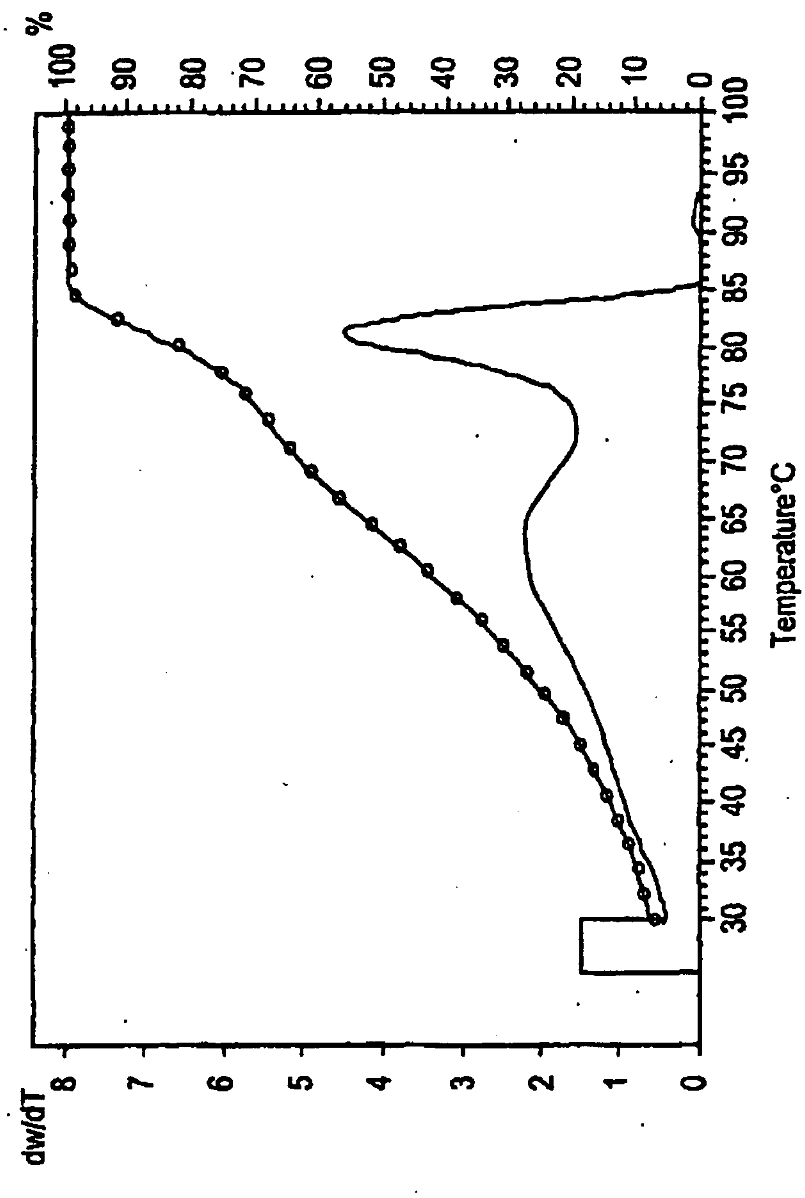
dw/dT
%
Temperature°C
0 1 2 3 4 5 6 7 8
0 10 20 30 40 50 60 70 80 90 100
30 35 40 45 50 55 60 65 70 75 80 85 90 95 100

FIG.11

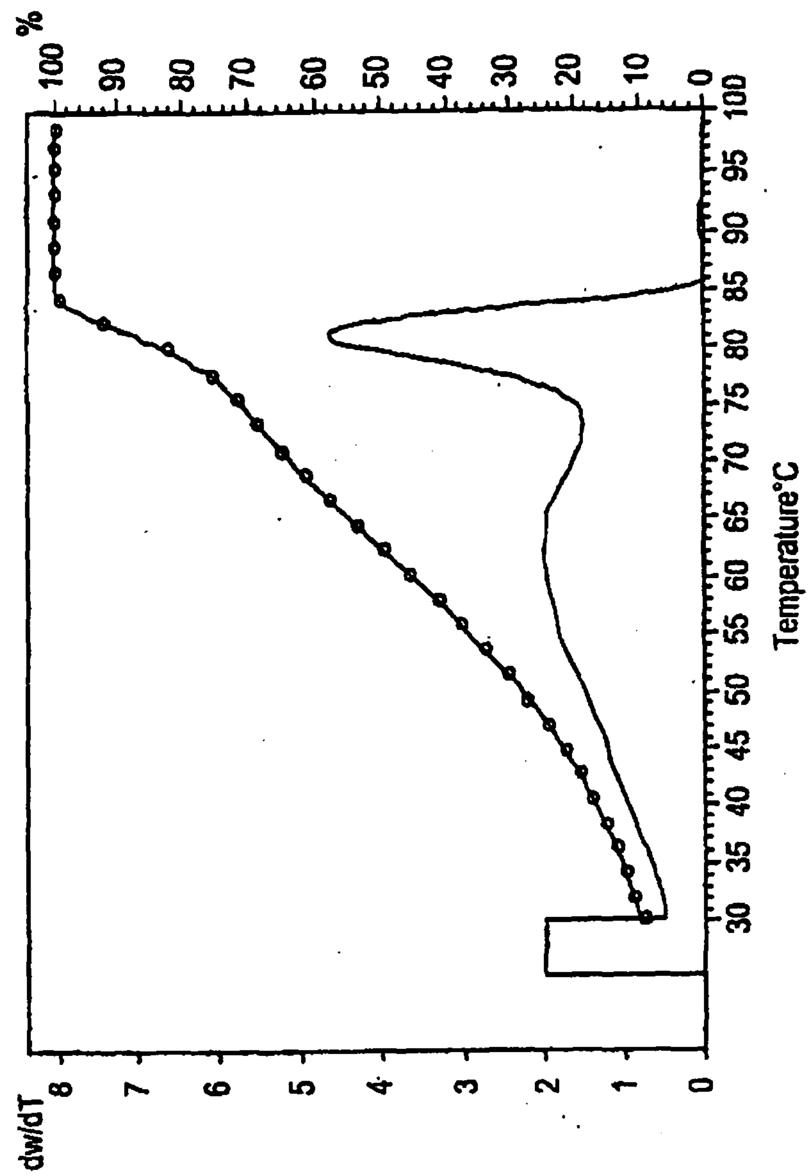
dw/dT
%
0
1
2
3
4
5
6
7
8
0
10
20
30
40
50
60
70
80
90
100
30
35
40
45
50
55
60
65
70
75
80
85
90
95
100
Temperature°C

FIG.12

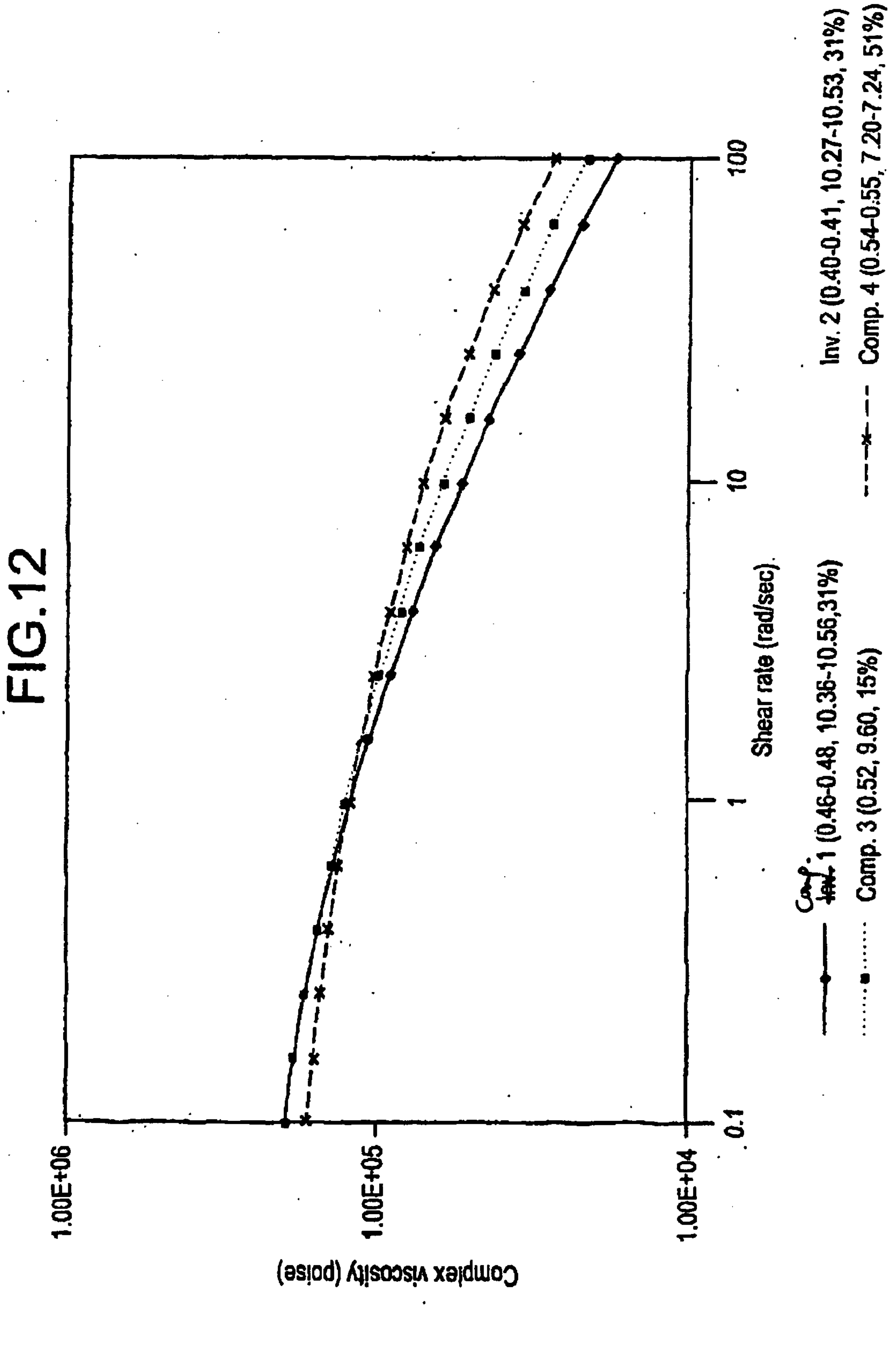
Complex viscosity (poise)
1.00E+06
1.00E+05
1.00E+04
0.1
1
10
100
Shear rate (rad/sec)
Comp. 1 (0.46-0.48, 10.36-10.56,31%)
Comp. 3 (0.52, 9.60, 15%)
Inv. 2 (0.40-0.41, 10.27-10.53, 31%)
Comp. 4 (0.54-0.55, 7.20-7.24, 51%)

FIG.13

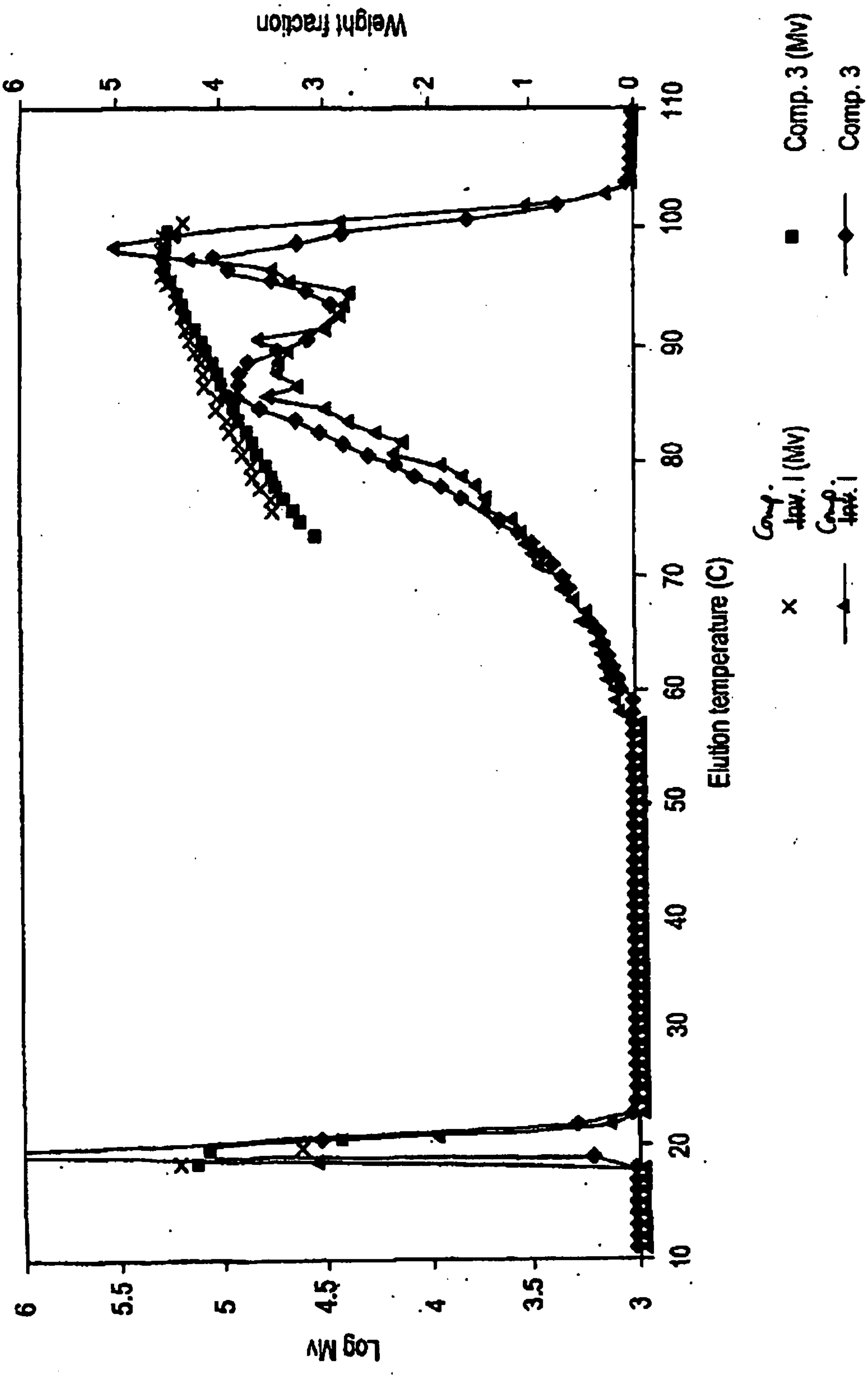
Log Mv
Weight fraction
Elution temperature (C)
6
5.5
5
4.5
4
3.5
3
10
20
30
40
50
60
70
80
90
100
110
Comp. I (Mv)
Comp. I
Comp. 3 (Mv)
Comp. 3

FIG.14

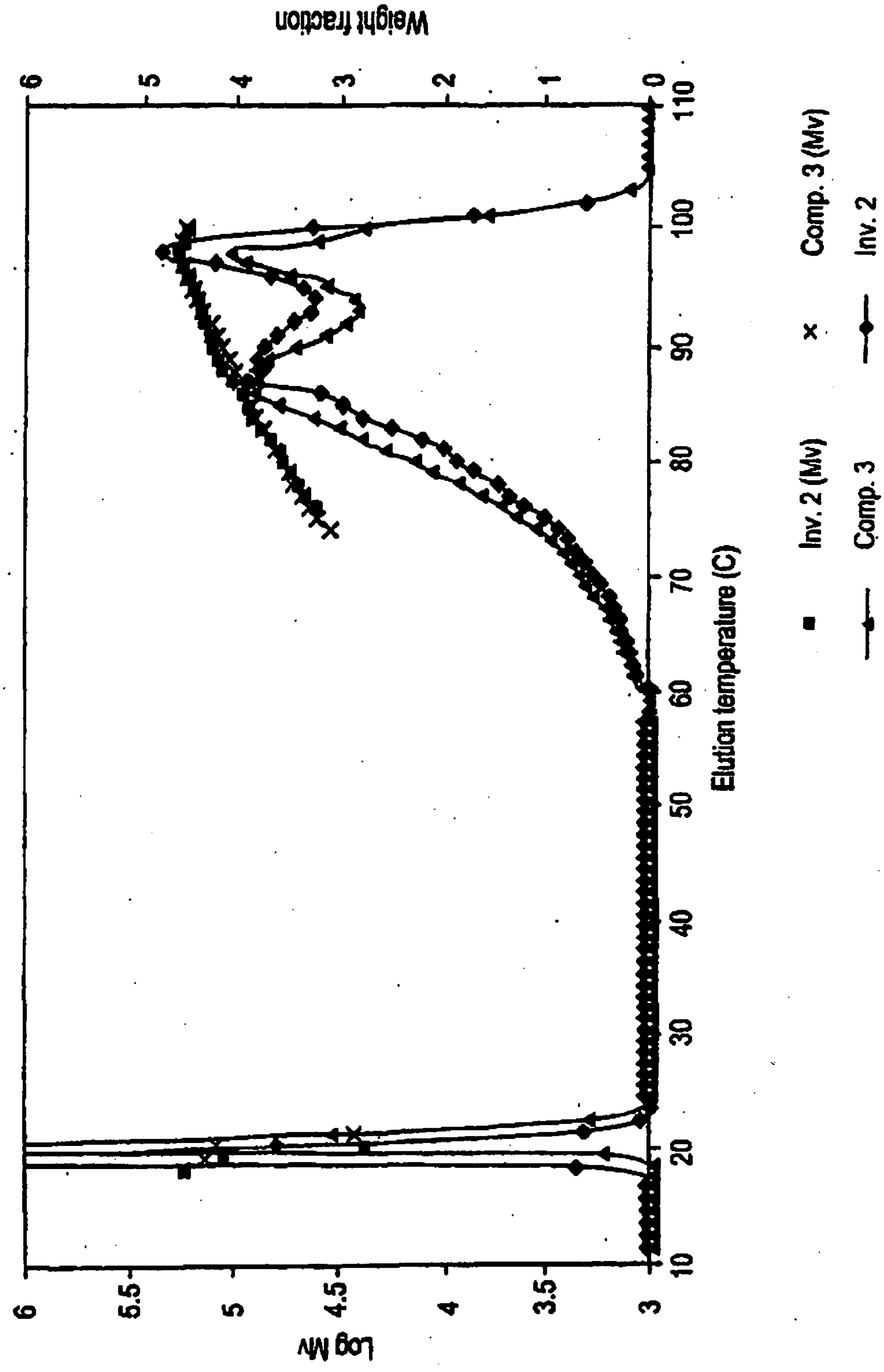
Weight fraction
Log Mv
Elution temperature (C)
Inv. 2 (Mv)
Comp. 3 (Mv)
Comp. 3
Inv. 2
10
20
30
40
50
60
70
80
90
100
110
0
1
2
3
4
5
6
3
3.5
4
4.5
5
5.5
6

FIG.15

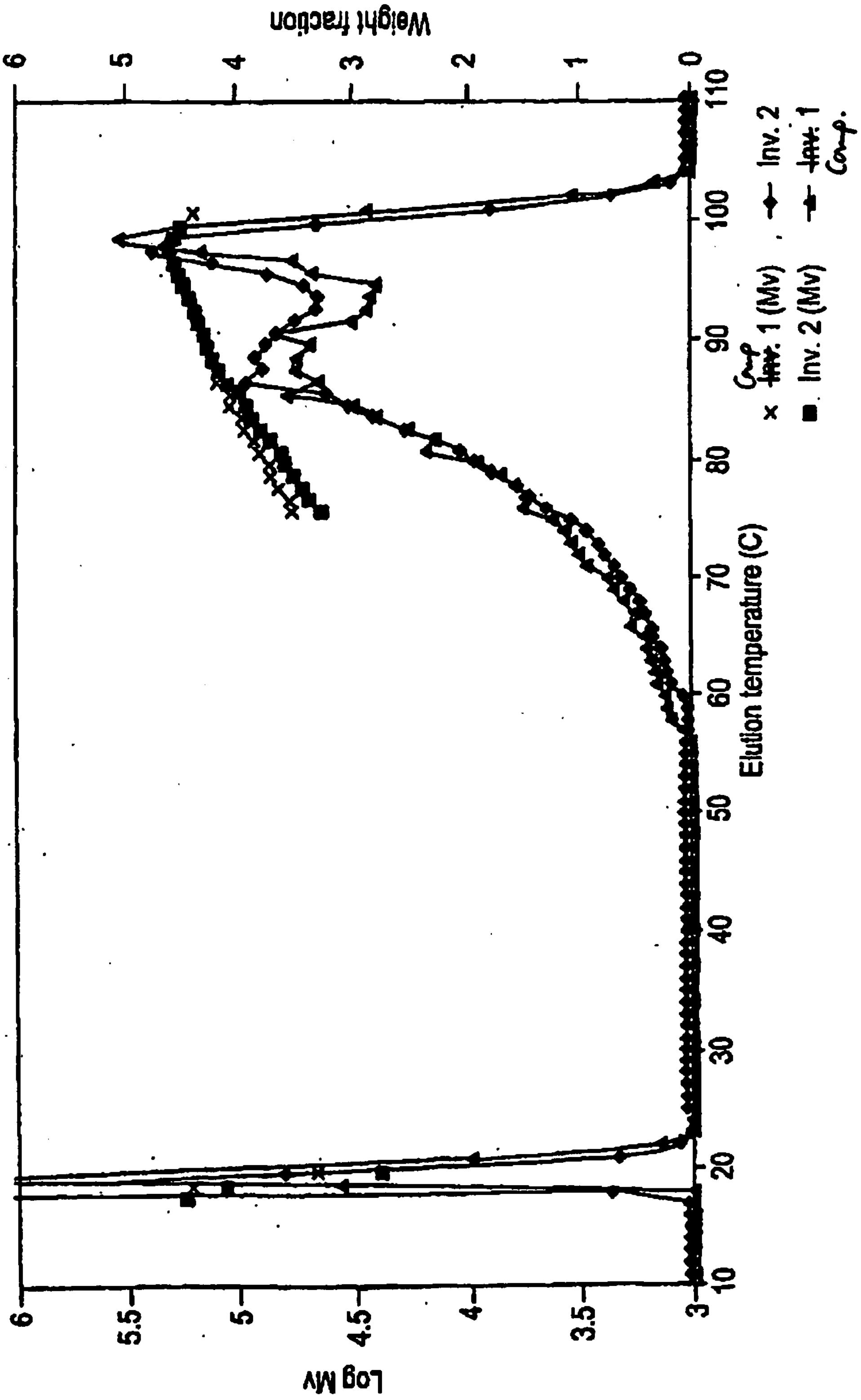

Weight fraction
Log Mv
Elution temperature (C)
Inv. 1 (Mv)
Inv. 2 (Mv)
Inv. 2
Inv. 1

FIG.16

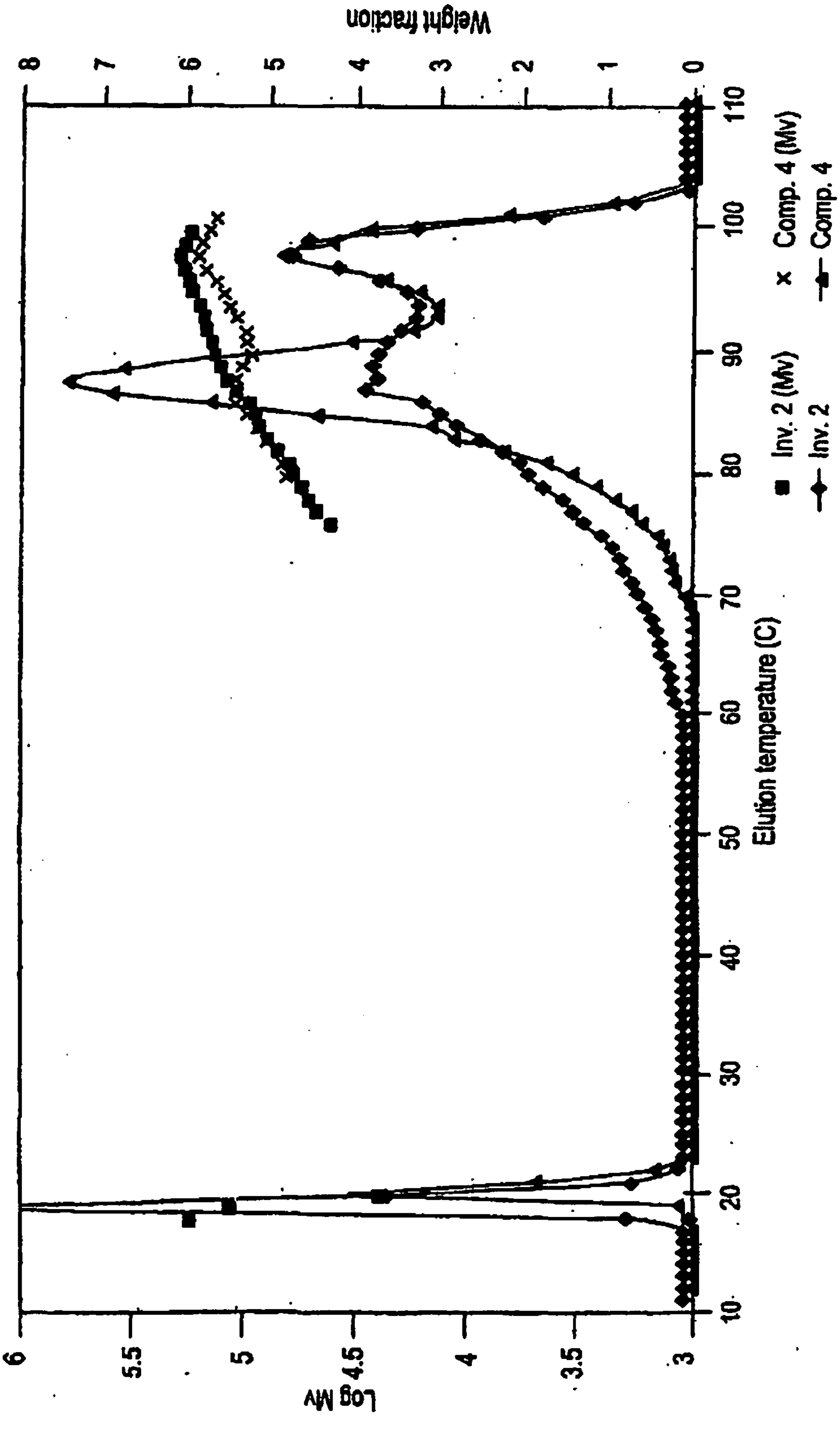
Weight fraction
Log Mv
Elution temperature (C)
Inv. 2 (Mv)
Inv. 2
Comp. 4 (Mv)
Comp. 4
0
1
2
3
4
5
6
7
8
3
3.5
4
4.5
5
5.5
6
10
20
30
40
50
60
70
80
90
100
110

FIG.17

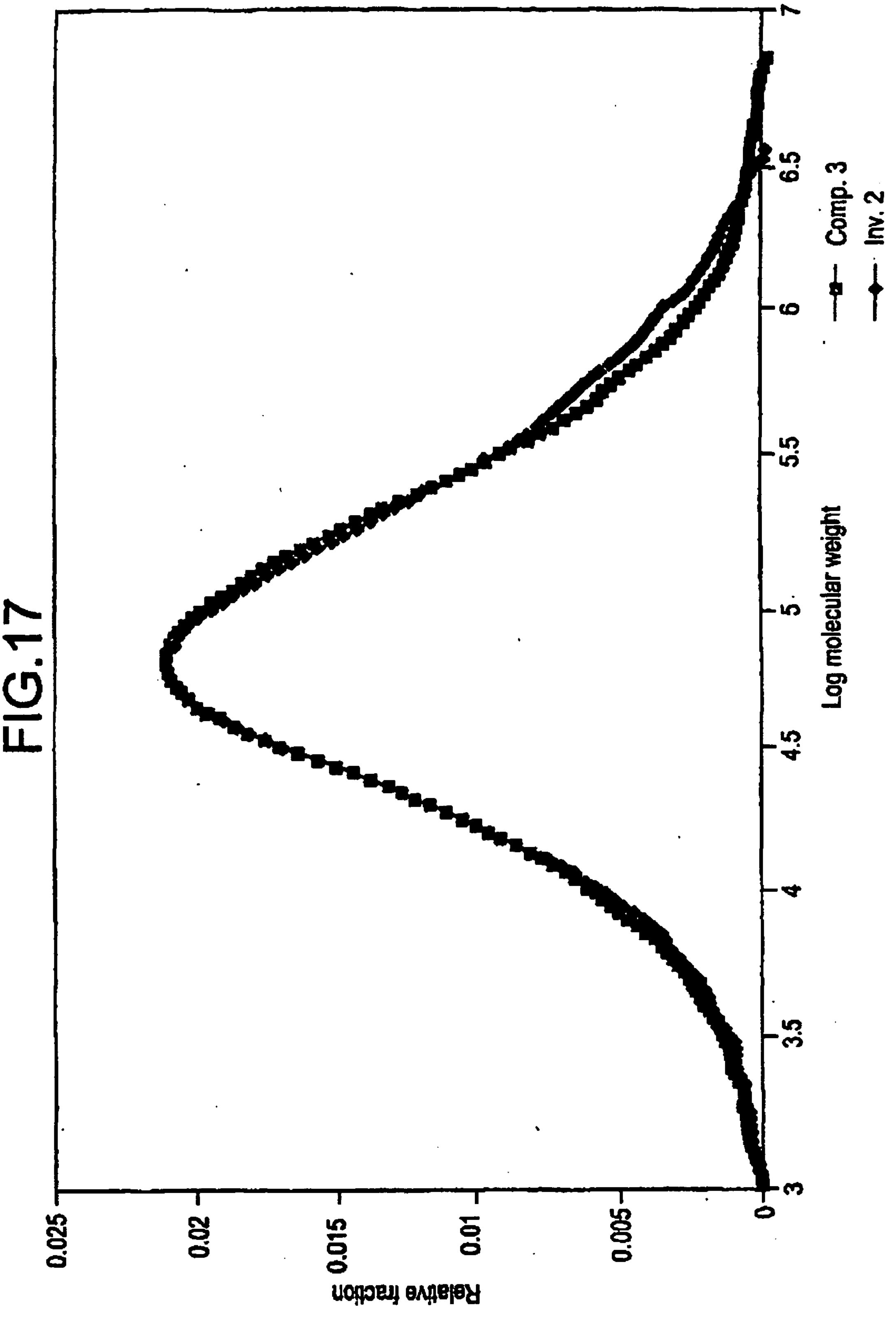
Relative fraction
0.025
0.02
0.015
0.01
0.005
0
3
3.5
4
4.5
5
5.5
6
6.5
7
Log molecular weight
Comp. 3
Inv. 2

FIG.18

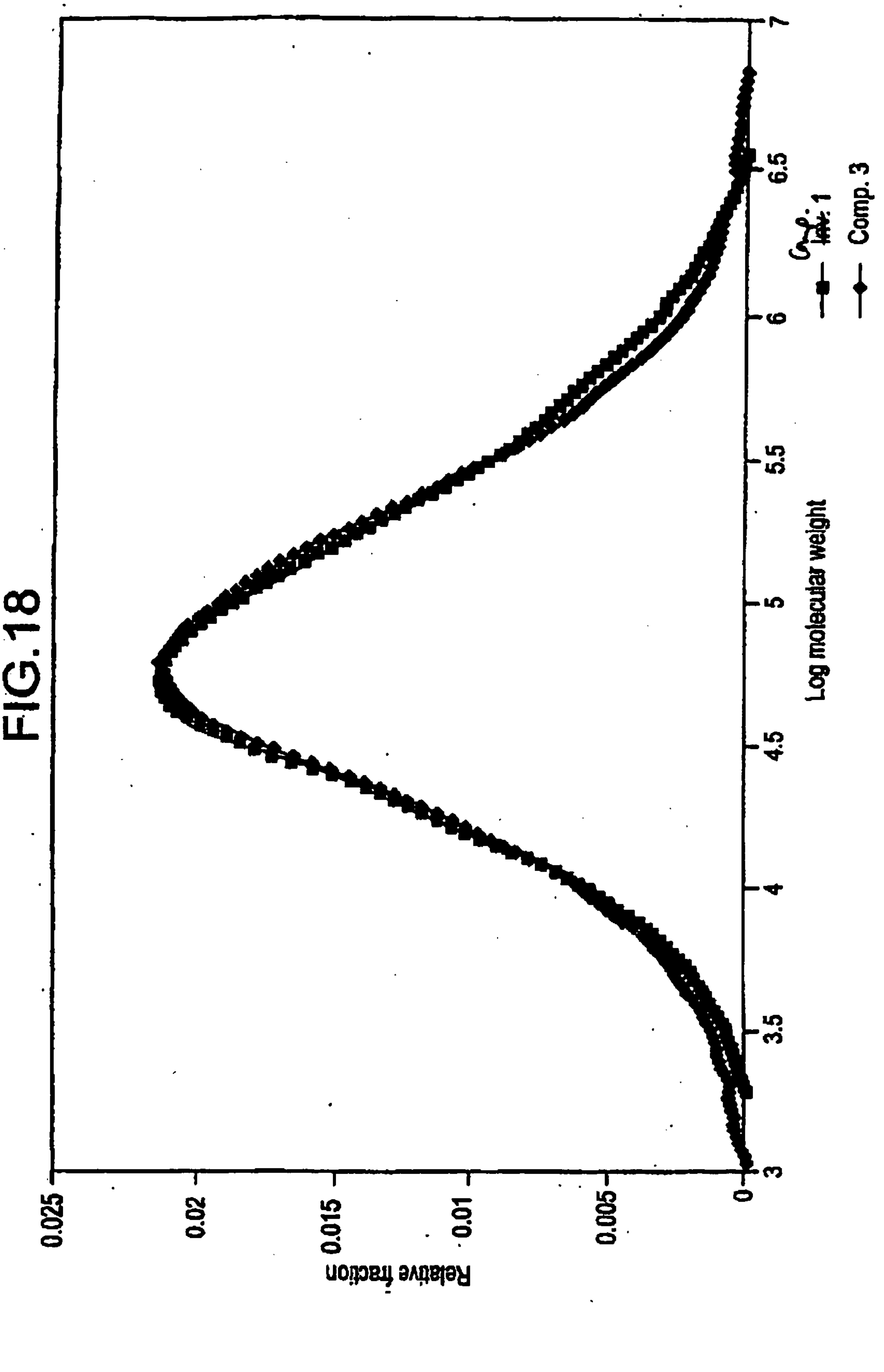
Relative fraction
0.025
0.02
0.015
0.01
0.005
0
3
3.5
4
4.5
5
5.5
6
6.5
7
Log molecular weight
Comp. 3

FIG.19

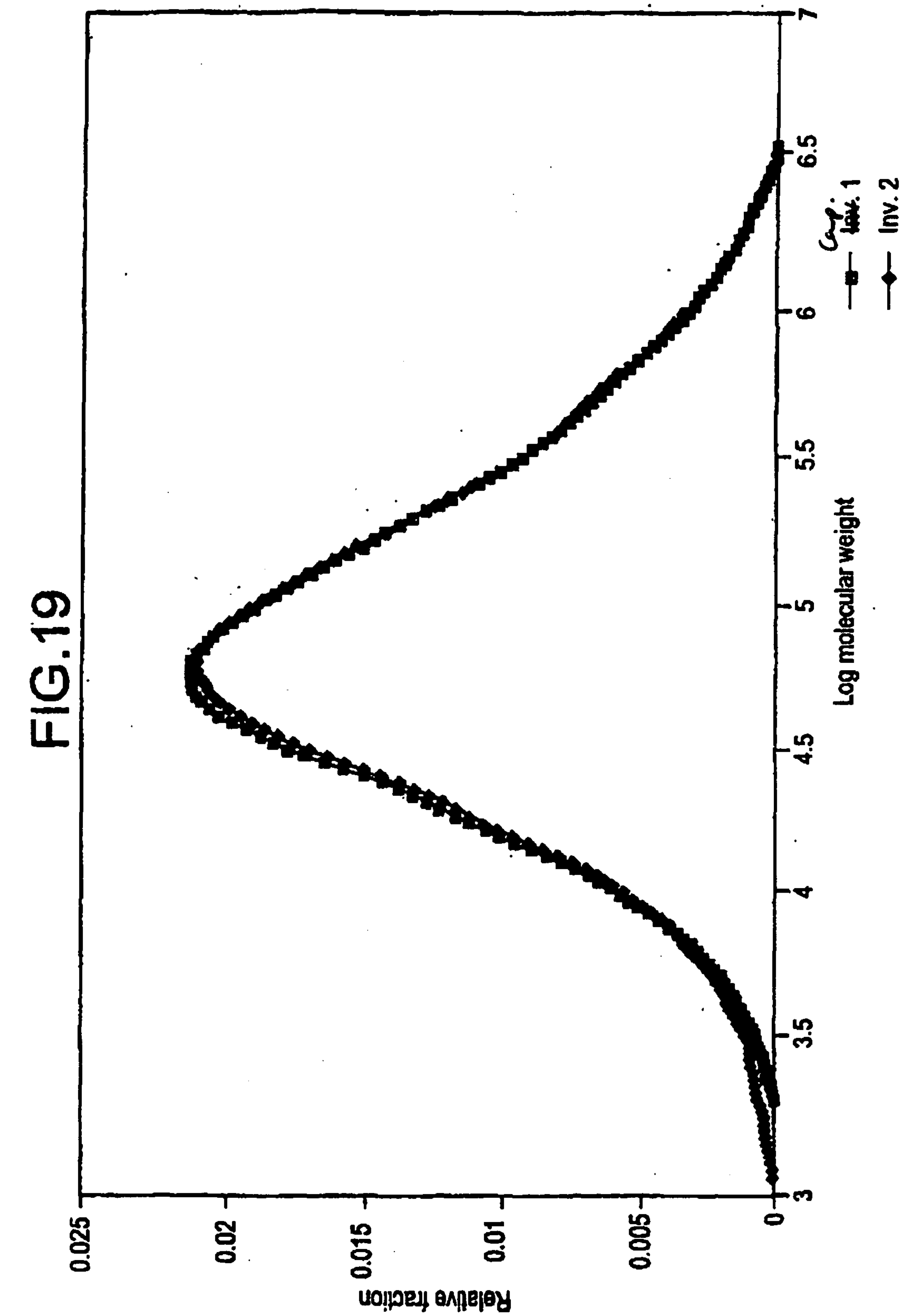
Relative fraction
0.025
0.02
0.015
0.01
0.005
0
Log molecular weight
3
3.5
4
4.5
5
5.5
6
6.5
7
Comp. Inv. 1
Inv. 2

FIG.20

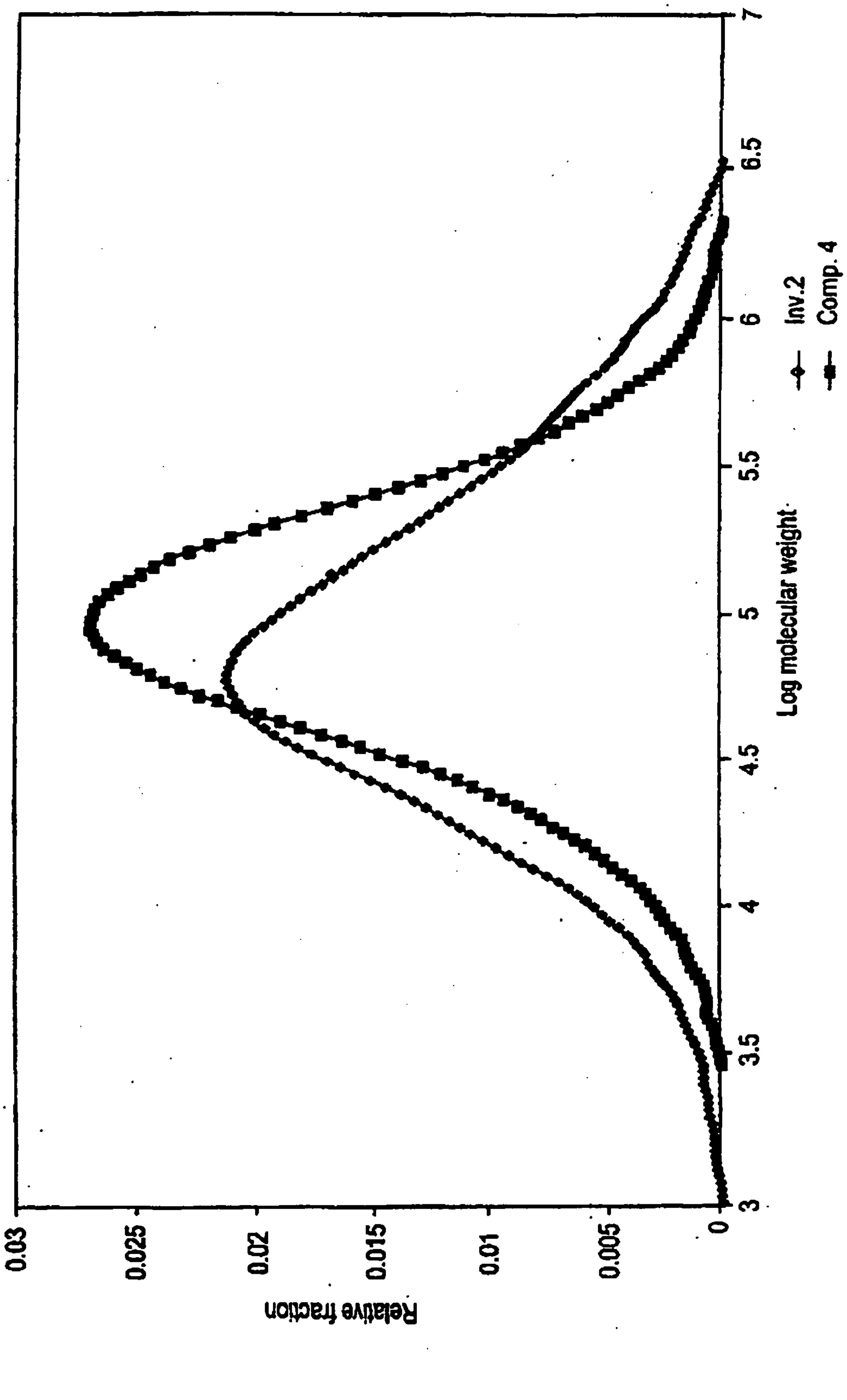
Relative fraction
0.03
0.025
0.02
0.015
0.01
0.005
0
3
3.5
4
4.5
5
5.5
6
6.5
7
Log molecular weight
Inv.2
Comp. 4

FIG.21

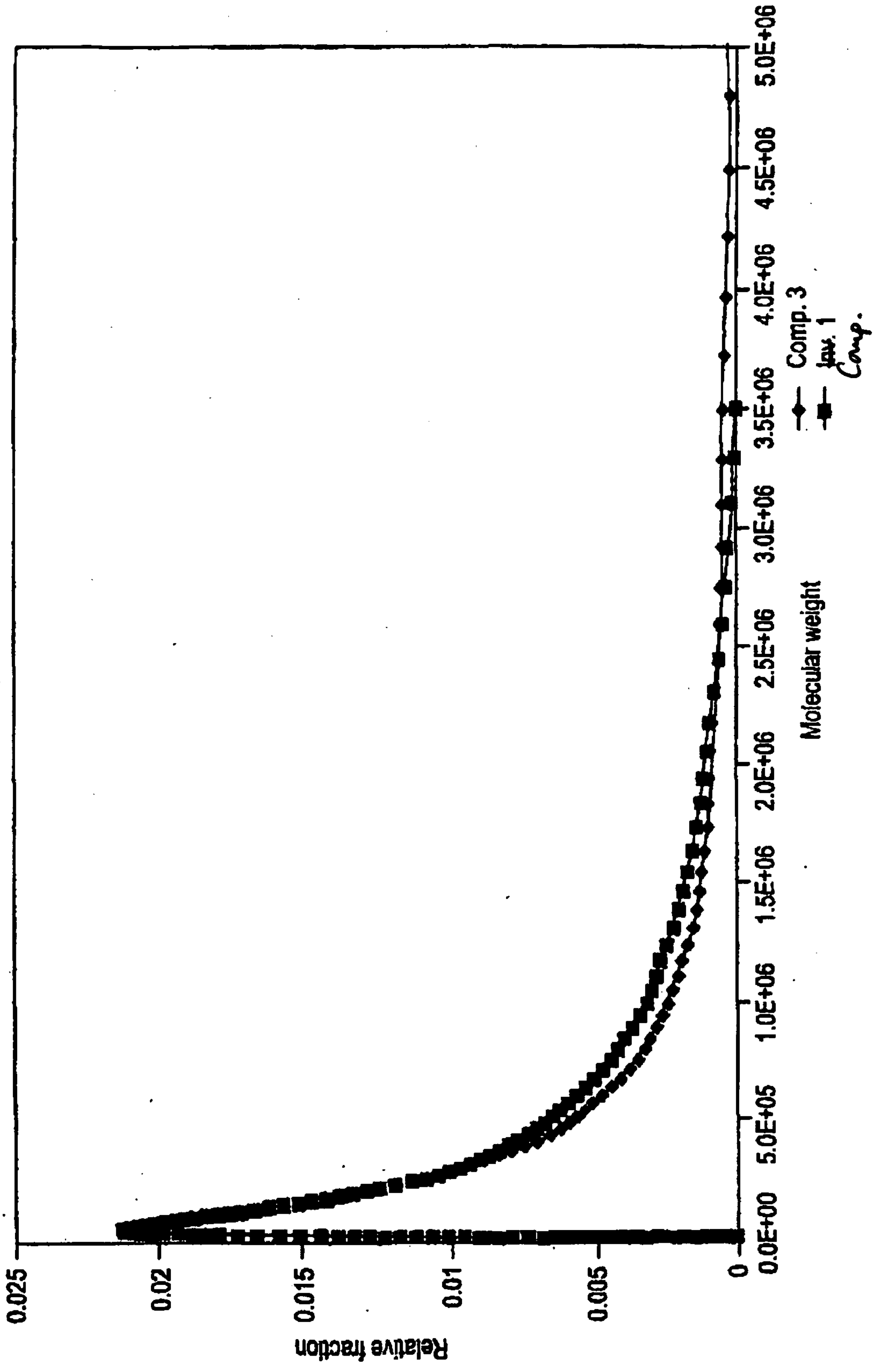
Relative fraction
0.025
0.02
0.015
0.01
0.005
0
Molecular weight
0.0E+00
5.0E+05
1.0E+06
1.5E+06
2.0E+06
2.5E+06
3.0E+06
3.5E+06
4.0E+06
4.5E+06
5.0E+06
Comp. 3
Comp.

FIG.22

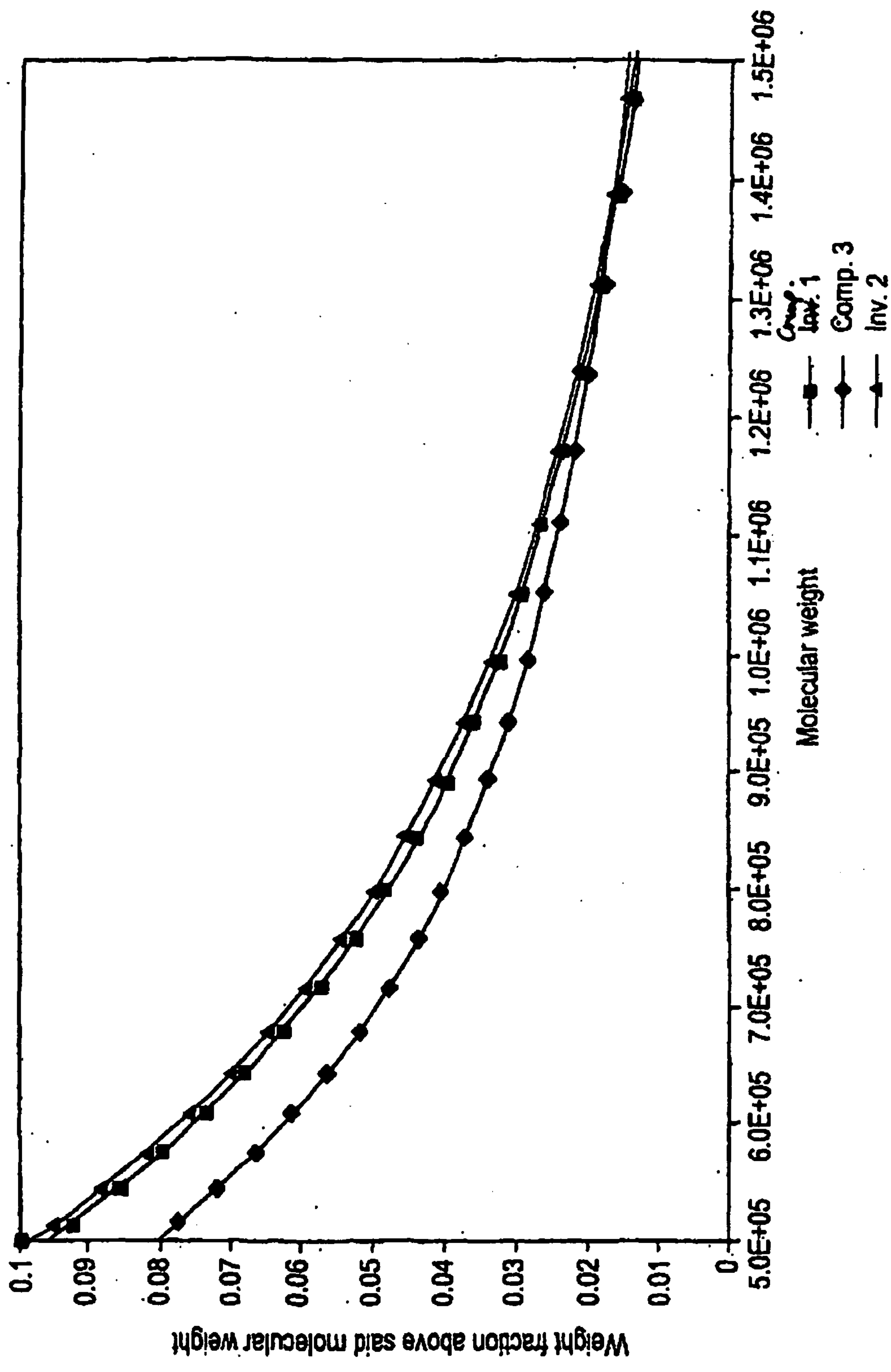
Weight fraction above said molecular weight
0.1
0.09
0.08
0.07
0.06
0.05
0.04
0.03
0.02
0.01
0
5.0E+05
6.0E+05
7.0E+05
8.0E+05
9.0E+05
1.0E+06
1.1E+06
1.2E+06
1.3E+06
1.4E+06
1.5E+06
Molecular weight
Inv. 1
Comp. 3
Inv. 2

FIG.23

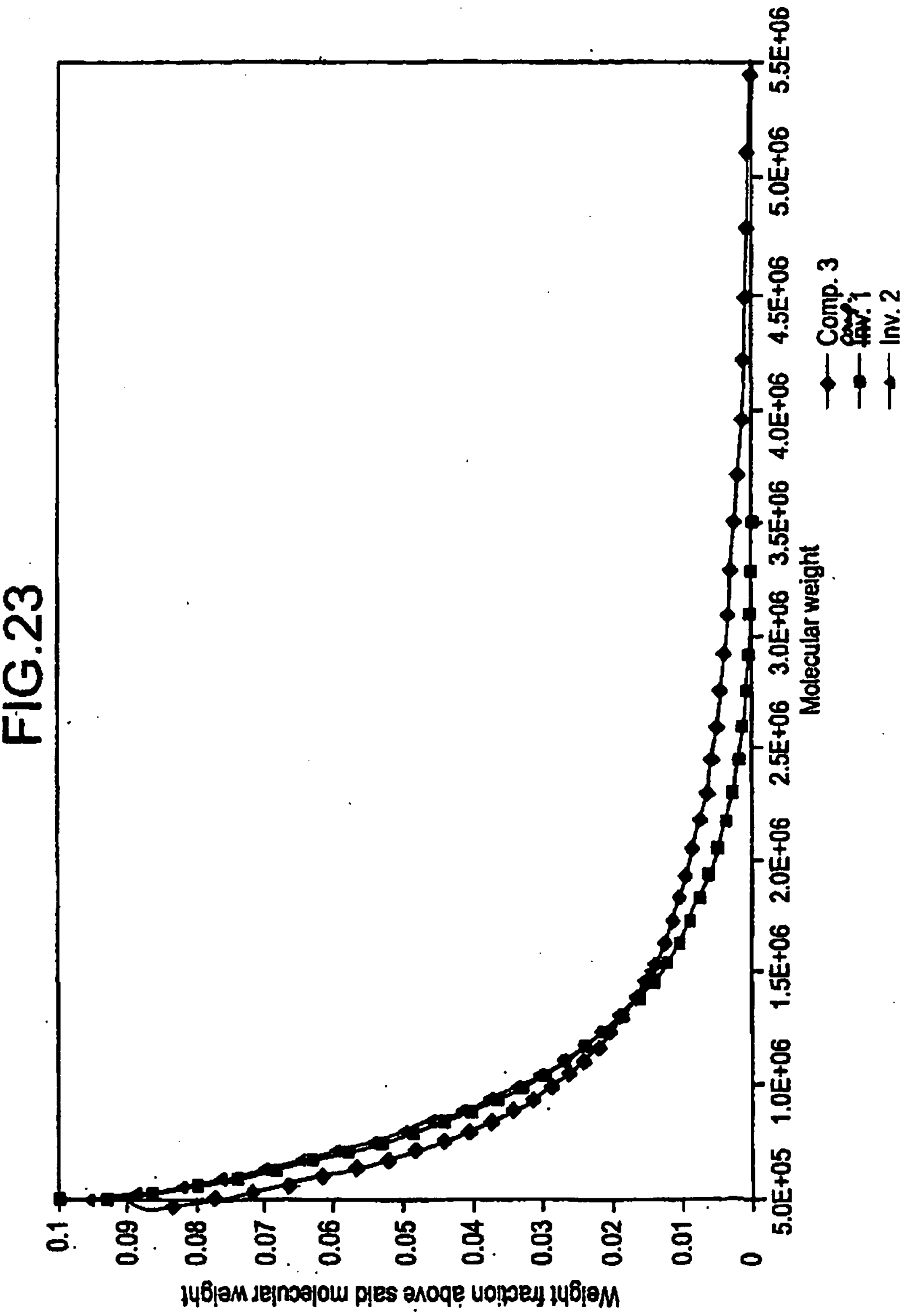
Weight fraction above said molecular weight
0.1
0.09
0.08
0.07
0.06
0.05
0.04
0.03
0.02
0.01
0
5.0E+05
1.0E+06
1.5E+06
2.0E+06
2.5E+06
3.0E+06
3.5E+06
4.0E+06
4.5E+06
5.0E+06
5.5E+06
Molecular weight
Comp. 3
Inv. 1
Inv. 2

FIG.24

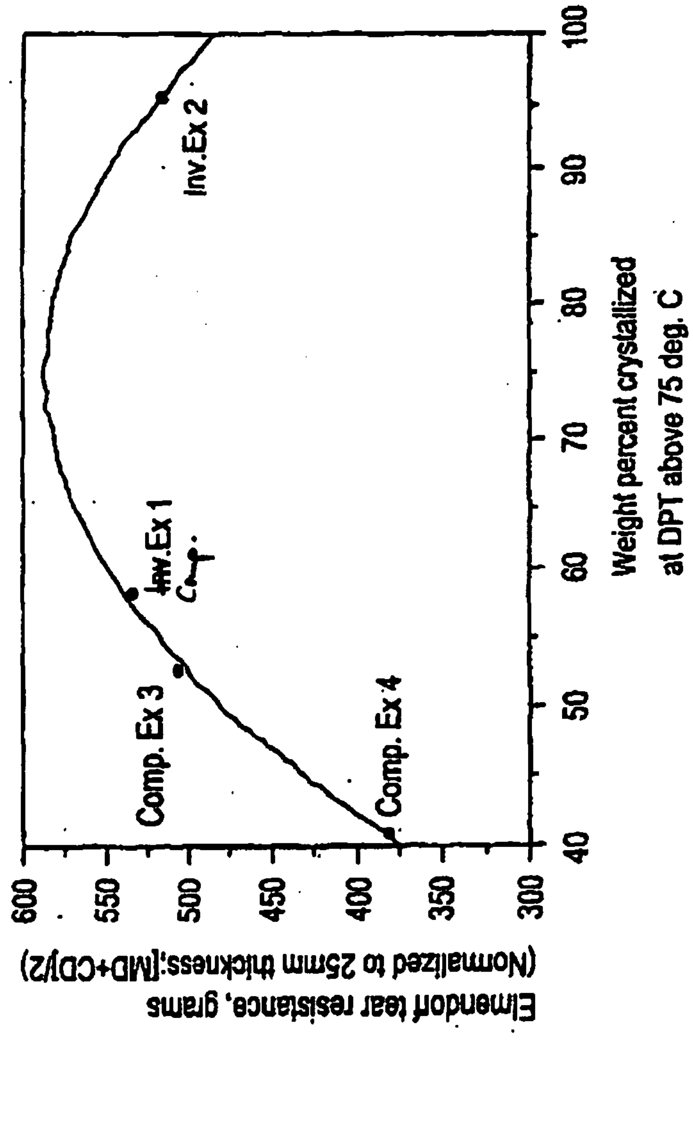
Elmendorf tear resistance, grams
(Normalized to 25mm thickness;[MD+CD]/2)
600
550
500
450
400
350
300
40
50
60
70
80
90
100
Weight percent crystallized
at DPT above 75 deg. C
Comp. Ex 3
Comp. Ex 4
Inv.Ex 1
Inv.Ex 2

FIG.25

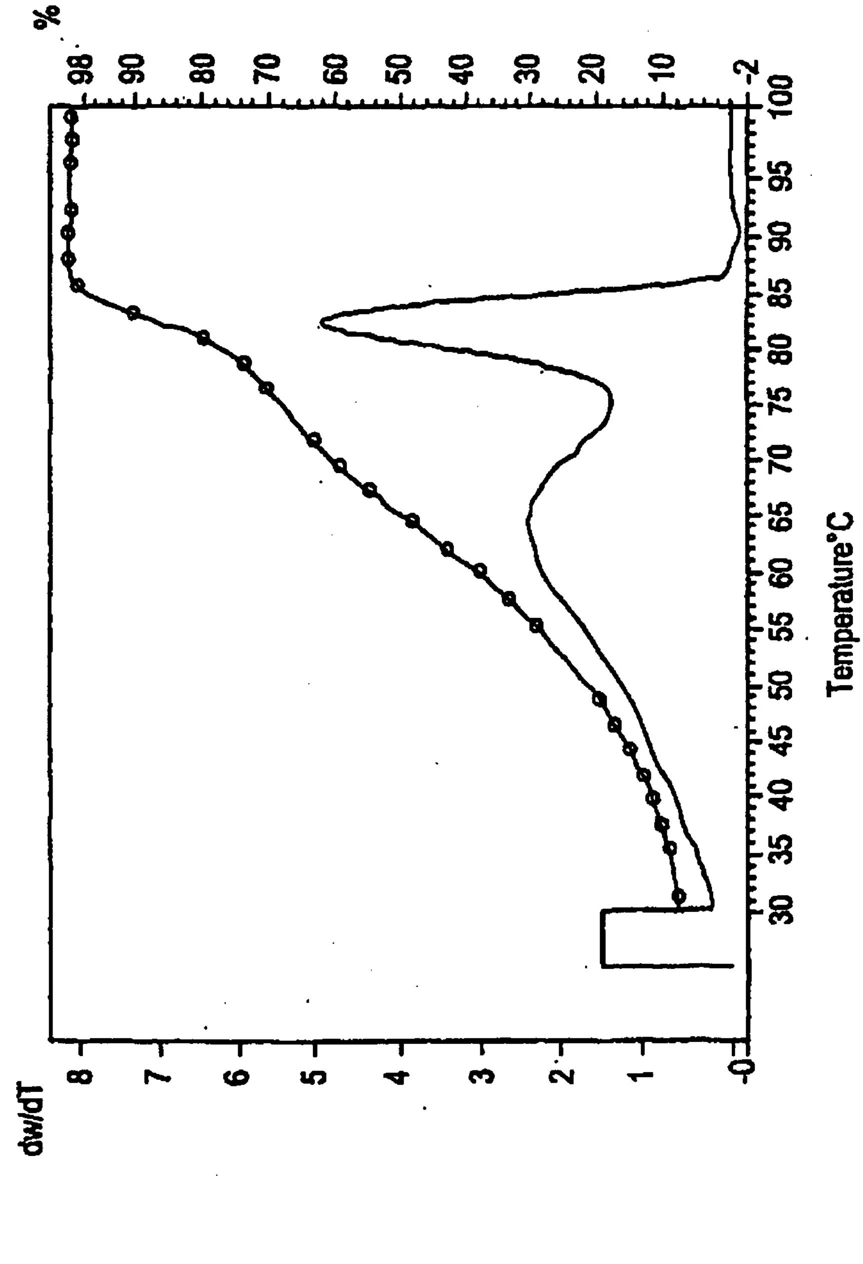
dw/dT
0
1
2
3
4
5
6
7
8
%
98
90
80
70
60
50
40
30
20
10
-2
30
35
40
45
50
55
60
65
70
75
80
85
90
95
100
Temperature°C

FIG.27

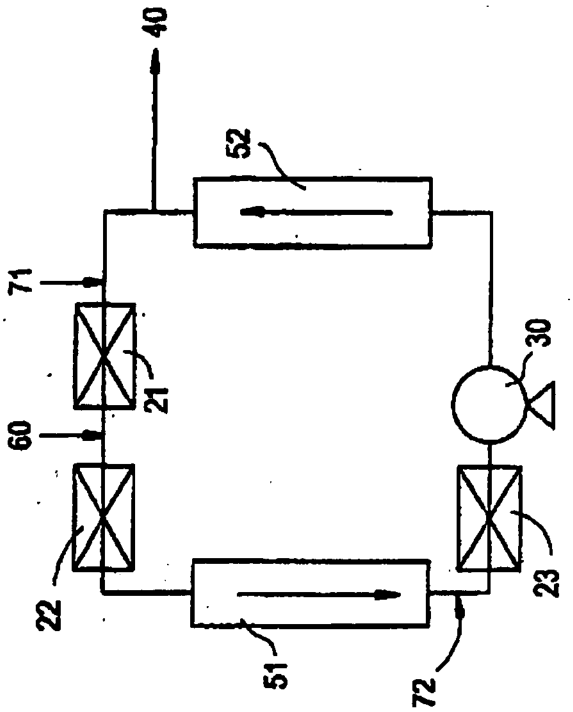


FIG.26

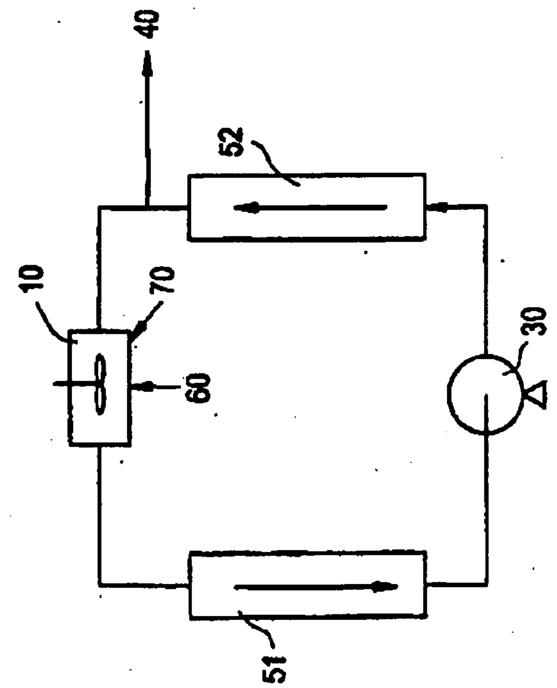

FIG.28

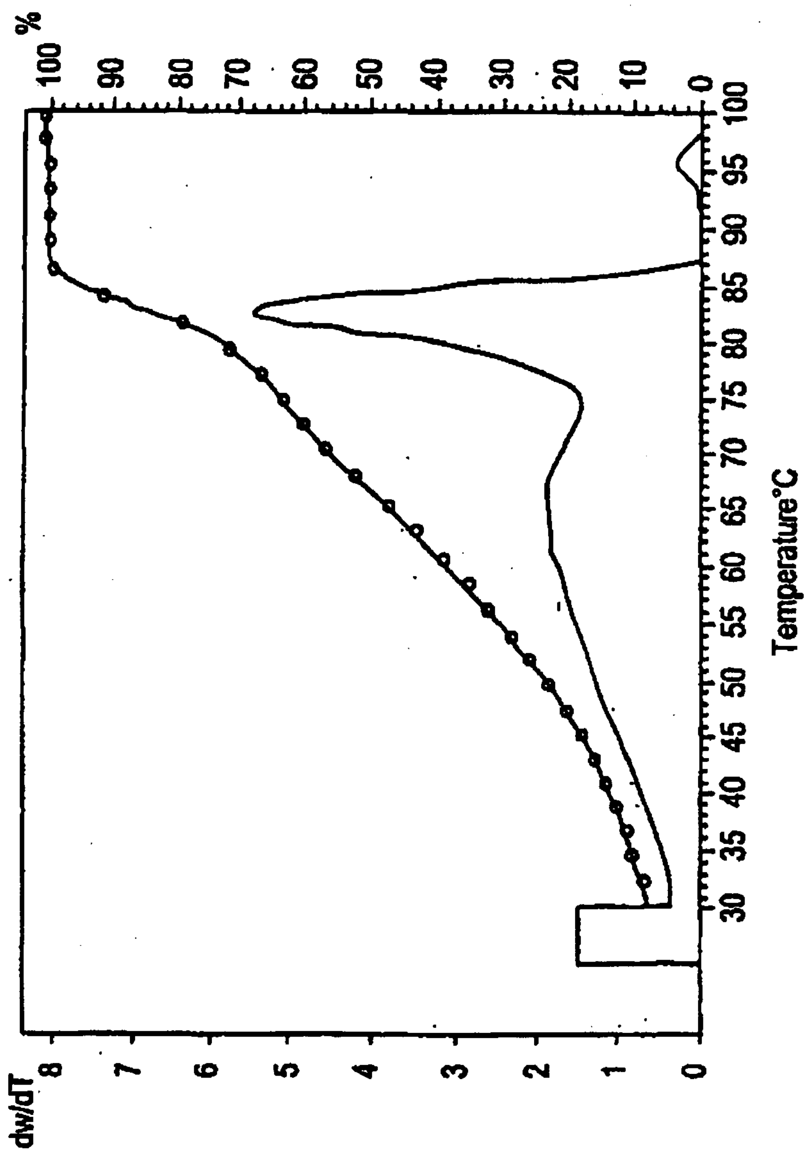
dw/dT
8
7
6
5
4
3
2
1
0
%
100
90
80
70
60
50
40
30
20
10
0
30
35
40
45
50
55
60
65
70
75
80
85
90
95
100
Temperature°C

FIG.29

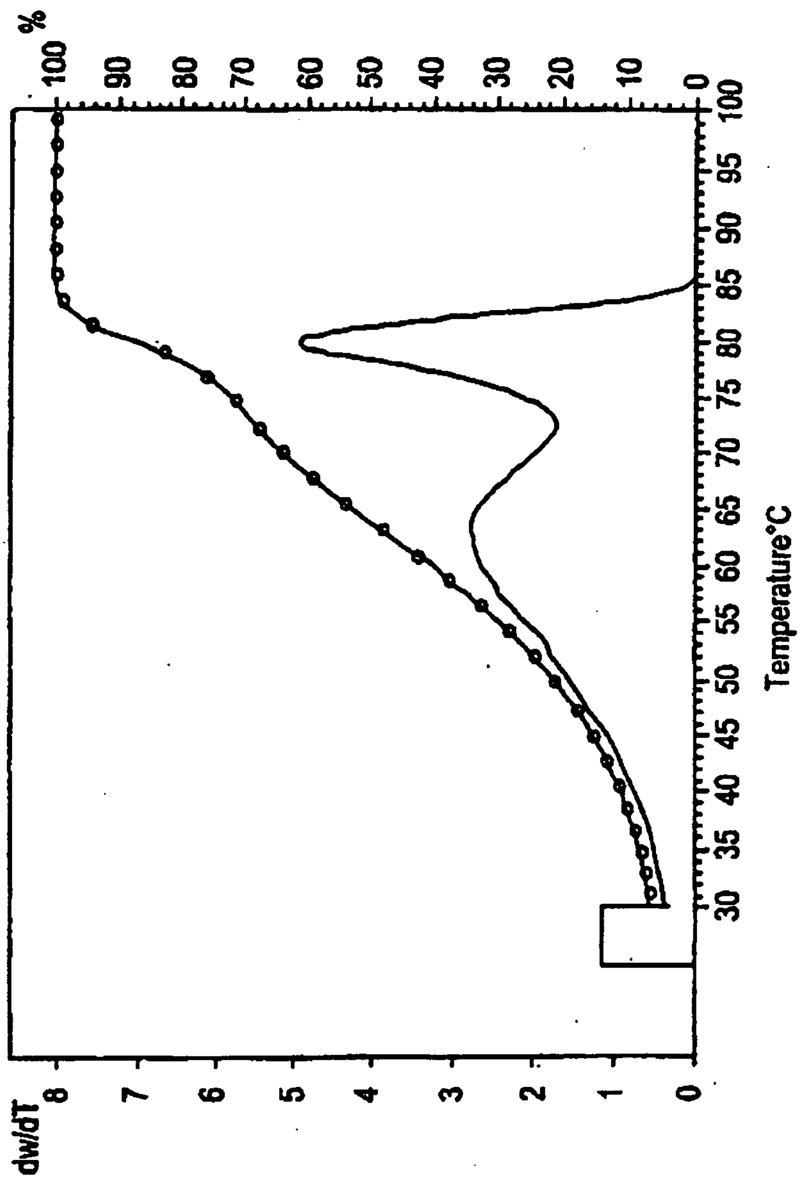
dw/dT
0
1
2
3
4
5
6
7
8
%
0
10
20
30
40
50
60
70
80
90
100
30
35
40
45
50
55
60
65
70
75
80
85
90
95
100
Temperature°C

FIG.30

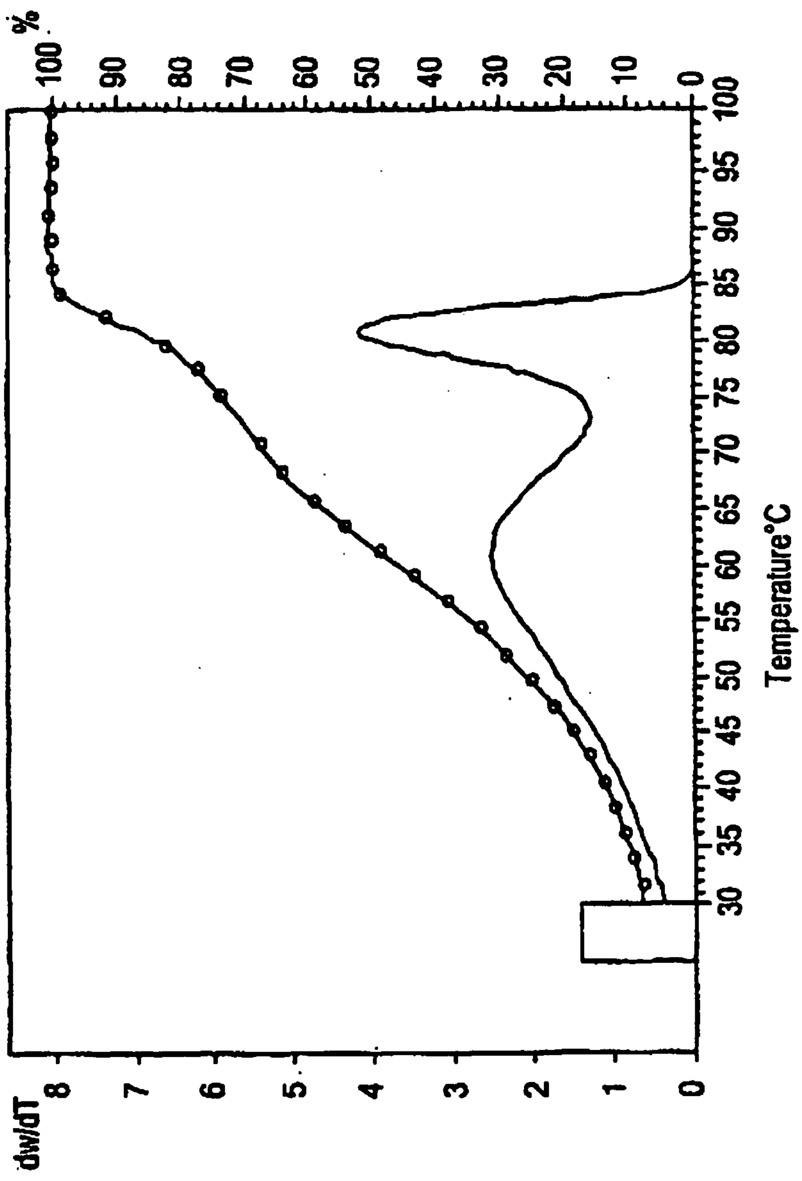
dw/dT
8
7
6
5
4
3
2
1
0
%
100
90
80
70
60
50
40
30
20
10
0
30
35
40
45
50
55
60
65
70
75
80
85
90
95
100
Temperature°C

FIG.31

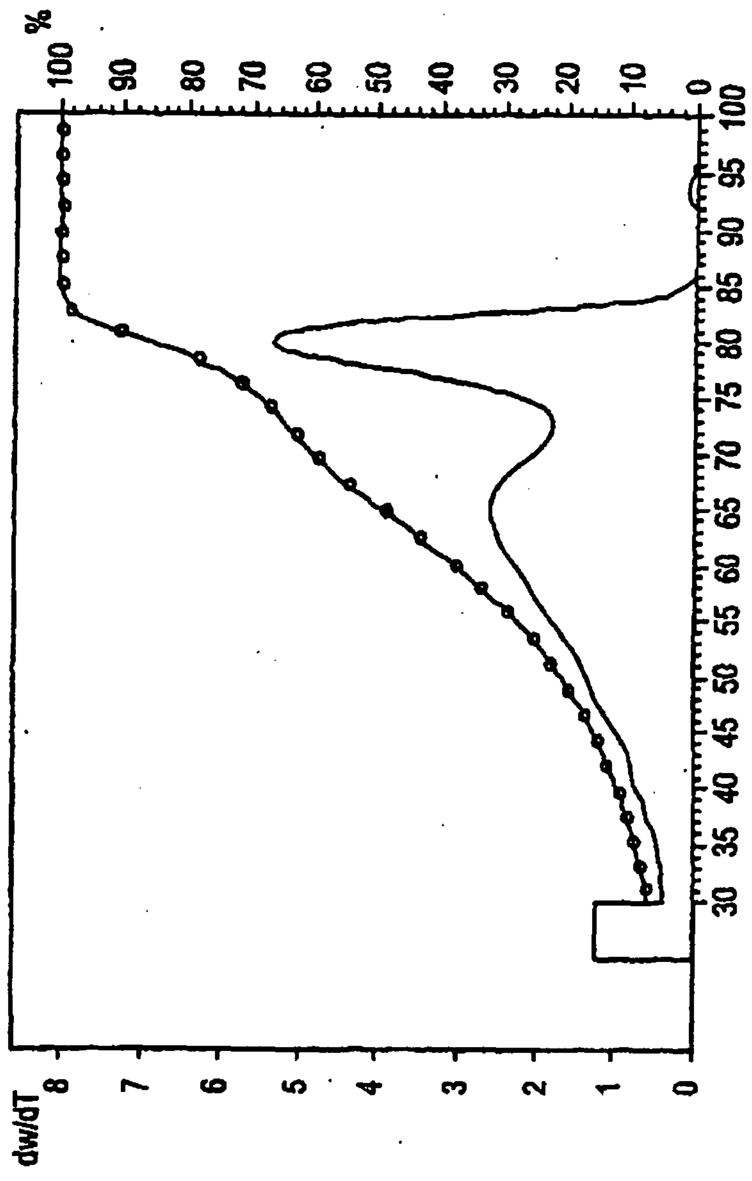
dw/dT
8
7
6
5
4
3
2
1
0
%
100
90
80
70
60
50
40
30
20
10
0
30
35
40
45
50
55
60
65
70
75
80
85
90
95
100
Temperature°C

FIG.32

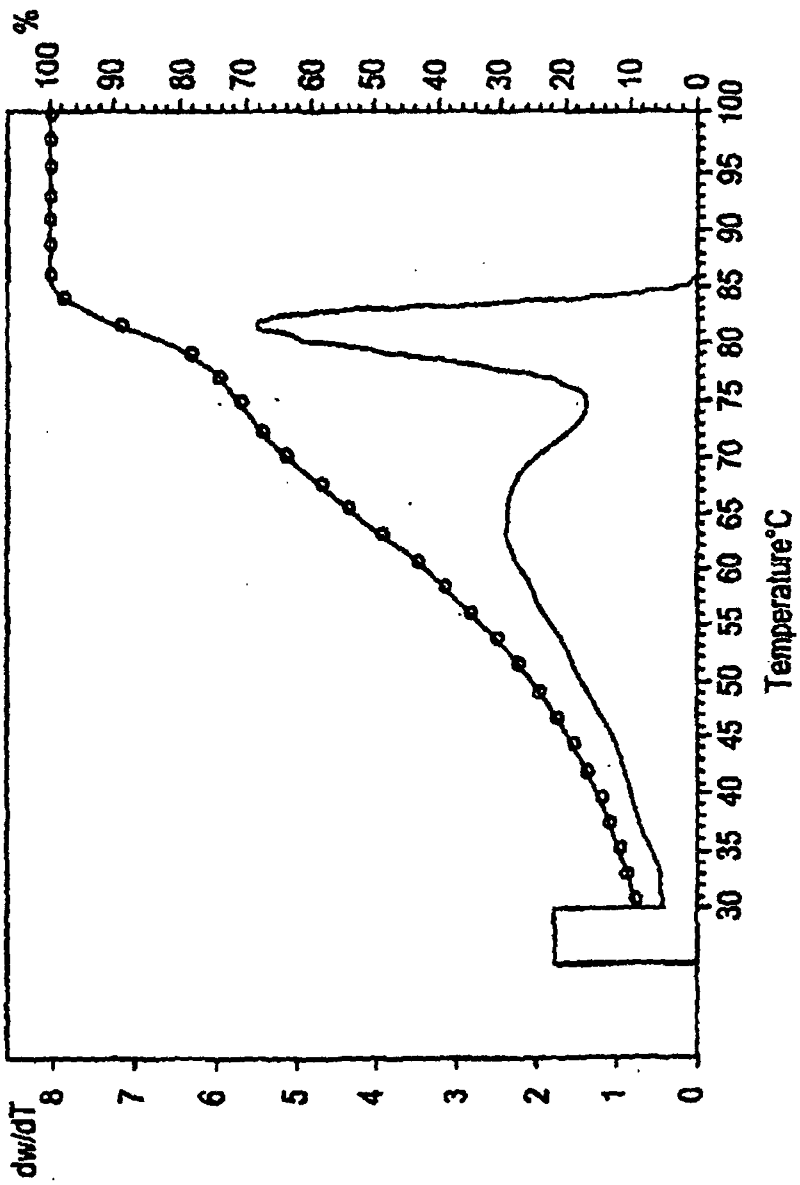
dw/dT
8
7
6
5
4
3
2
1
0
%
100
90
80
70
60
50
40
30
20
10
0
30
35
40
45
50
55
60
65
70
75
80
85
90
95
100
Temperature°C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5272236 A
- US 5210142 A
- US 5370940 A
- US 4798081 A
- US 5008204 A
- US 5292845 A
- US 5089321 A
- US 08831172 B
- US 5026798 A
- US 5055438 A
- US 5064802 A
- US 4314912 A, Lowery, Jr.
- US 4547475 A, Glass
- US 4612300 A, Coleman, III


### Non-patent literature cited in the description


- **Wild et al.** *Journal of Polymer Science, Poly. Phys. Ed.,* 1982, vol. 20, 441
- **L. D. Cady.** The Role of Comonomer Type and Distribution in LLDPE Product Performance. *SPE Regional Technical Conference, Quaker Square Hilton,* 1985, 107-119
- **J. C. Randall.** *Rev. Macromol. Chem. Phys.,* vol. C29, 201-317
- **Benjamin Monrabal.** Crystallization Analysis Fraction: A New Technique for the Analysis of Branching Distribution in Polyolefins. *Journal of Applied Polymer Science,* 1994, vol. 52, 491-499
- **Williams ; Ward.** *Journal of Polymer Science, Polymer Letters,* 1968, vol. 6, 621